Europäisches Patentamt

European Patent Office

Office européen des brevets

(19)

(11) Numéro de publication : **0 179 683**
**B1**

(12)
# FASCICULE DE BREVET EUROPÉEN

(45) Date de publication du fascicule du brevet :
09.08.89

(51) Int. Cl.⁴ : **F 16 H 5/60**

(21) Numéro de dépôt : 85401806.6

(22) Date de dépôt : 18.09.85

(54) **Dispositif de commande d'une transmission automatique à quatre rapports.**

(30) Priorité : 18.09.84 FR 8414262

(43) Date de publication de la demande :
30.04.86 Bulletin 86/18

(45) Mention de la délivrance du brevet :
09.08.89 Bulletin 89/32

(84) Etats contractants désignés :
BE DE GB IT NL SE

(56) Documents cités :
EP—A— 0 039 936
EP—A— 0 120 779
EP—A— 0 176 431
EP—A— 0 178 051
FR—A— 2 109 792
FR—A— 2 140 001
FR—A— 2 485 650
GB—A— 2 062 782
US—A— 4 354 236

(73) Titulaire : REGIE NATIONALE DES USINES RENAULT
Boîte postale 103 8-10 avenue Emile Zola
F-92109 Boulogne-Billancourt (FR)

(72) Inventeur : Leorat, François
98, boulevard de la Reine
F-78000 Versailles (FR)
Inventeur : Coutant, Patrick
14, rue Jean Edeline
F-92500 Rueil Malmaison (FR)
Inventeur : Aubert, Paul
71 M, Route du Pavé-Blanc
F-92140 Clamart (FR)

(74) Mandataire : Chassagnon, Jean-Alain et al
REGIE NATIONALE DES USINES RENAULT (S.0804)
F-92109 Boulogne-Billancourt Cedex (FR)

Jouve, 18, rue St-Denis, 75001 Paris, France

EP 0 179 683 B1

**Description**

La présente invention est relative à un dispostif de commande d'une transmission automatique étagée à quatre rapports principaux de marche avant et un rapport de marche arrière, et équipée d'un convertisseur hydrocinétique de couple muni d'un amortisseur de vibrations de torsion destiné à filtrer les irrégularités de couple moteur sur les rapports pour lesquels le convertisseur n'intervient pas dans la transmission du couple moteur.

On connaît déjà des transmissions automatiques de ce type pour véhicules automobiles par exemple de EPA-A-0039936, qui comprennent principalement un convertisseur hydrocinétique de couple à amortisseur de vibrations de torsion intégré, et une boîte de vitesses à train épicycloïdal, ainsi qu'un ensemble de dispositifs de commande hydraulique et éventuellement électronique qui tiennent compte, pour la commande des différents organes de la boîte de vitesses, d'informations concernant la marche du véhicule, telles qu'en particulier et de manière non limitative, sa vitesse ainsi que la charge du moteur ou, ce qui revient au même, la position de la pédale d'accélérateur.

L'association d'un convertisseur de couple et d'un train épicycloïdal permet d'obtenir une variation continue du couple appliquée aux roues du véhicule lors des démarrages, et sur les rapports inférieurs utilisant le convertisseur de couple. De plus, on obtient des changements de rapports qui peuvent être effectués rapidement sous couple et sont amortis par le convertisseur hydrocinétique et son amortisseur de torsion, conférant à la transmission une grande souplesse d'utilisation.

Le train d'engrenages épicycloïdal est piloté par un certain nombre de récepteurs hydrauliques : dans le cas d'une transmission à quatre rapports principaux de marche avant et un de marche arrière, on peut ainsi utiliser trois embrayages et deux freins à commande hydraulique. Le passage d'un rapport à l'autre se fait séquentiellement par serrage ou desserrage de l'un de ces récepteurs et desserrage ou serrage d'un autre récepteur.

La présente invention a pour objet un dispositif de commande pour une telle transmission automatique, de manière à assurer les changements nécessaires entre les différents rapports de marche avant, soit en montant les rapports avec passage sous couple, soit en rétrogradant par passage avec interruption de couple, tout en permettant l'obtention, d'une part de rapports de marche avant complémentaires aux quatre rapports principaux et nécessaires pour des évolutions transitoires, ou à caractère de sauvegarde, d'autre part du rapport de marche arrière.

Le dispositif selon la présente invention permet de séparer la fonction de commande des différents éléments de la transmission automatique, et la fonction de décision de commande ainsi que certaines fonctions de temporisation nécessaires pour la détermination de la durée des états transitoires entre deux rapports de vitesse de la transmission. Il est alors possible de confier ces dernières fonctions à des moyens spécialement adaptés et, en particulier de préférence, à des moyens électroniques.

Le dispositif selon l'invention est particulièrement adapté à la commande d'une transmission automatique étagée à quatre rapports principaux de marche avant à passage en montant sous couple, et un rapport de marche arrière, équipé d'un convertisseur hydrocinétique de couple, pour véhicules automobiles. La transmission automatique est de préférence du type comportant un train d'engrenages épicycloïdal contrôlé par trois embrayages et deux freins à commande hydraulique.

Le dispositif selon l'invention comprend un distributeur hydraulique piloté par quatre électrovannes séquentielles afin d'alimenter sélectivement les trois embrayages et les deux freins de contrôle du train épicycloïdal. Les quatre électrovannes sont excitées en fonction d'informations concernant la marche du véhicule équipé de la transmission. Ces informations peuvent en particulier et de manière non limitative être la vitesse du véhicule ainsi que la charge du moteur d'entraînement du véhicule ou, ce qui revient au même, la position de la pédale d'accélérateur.

Selon l'invention, une cinquième électrovanne de type modulant est excitée en fonction de paramètres caractérisant la marche du véhicule et assure, en coopération avec le tiroir d'une vanne de régulation de pression, le niveau de la pression du fluide hydraulique de commande des embrayages et des freins.

Selon un mode de réalisation de l'invention, le dispositif de commande comporte trois vannes de passage, et une vanne de verrouillage et de progressivité, chacune de ces vannes possédant un tiroir piloté en tout ou rien par une électrovanne de séquence. Les huit combinaisons possibles de positions des trois tiroirs des vannes de passage déterminent le même nombre de combinaisons d'alimentation des trois embrayages et des deux freins contrôlant le train épicycloïdal. Chaque combinaison d'alimentation correspond à une configuration mécanique du train épicycloïdal utilisée pour obtenir les différents rapports de marche avant et de marche arrière souhaités.

La vanne de verrouillage et de progressivité permet, en position de repos, d'alimenter les différents récepteurs hydrauliques au travers d'une restriction à grande section, en particulier lors des phases en rapport établi (fonction de verrouillage). Ce même tiroir de verrouillage et de progressivité, lorsque son électrovanne est excitée, n'autorise l'alimentation de ces mêmes récepteurs hydrauliques qu'à travers une restriction à faible section de passage, ce qui conduit à un remplissage lent et progressif de ces derniers récepteurs hydrauliques (fonction de progressivité). Chaque tiroir de trois vannes de séquence et de la vanne de verrouillage et de progressivité est commandé par l'électrovanne de séquence correspondante en position excitée, par l'intermédiaire d'une pression de commande constante, dite pression de référence, régulée par un tiroir de régulation ; il est ramené en position de repos par une pression intermédiaire obtenue par un diviseur de pression alimenté à partir de la pression de référence.

Le dispositif selon l'invention comprend en outre, une première vanne de coupure, qui permet de couper l'alimentation de l'élément de réaction du second rapport, lorsque la pression dans l'élément de réaction du troisième rapport atteint un niveau suffisant pour permettre la transmission de la totalité du couple de réaction sur le troisième rapport. Le tiroir de cette vanne de coupure est de construction symétrique. Le dispositif comprend également une seconde vanne de coupure, dont le tiroir est géométriquement identique au tiroir de la première vanne de coupure, qui, de façon identique à la première vanne de coupure, permet de couper l'alimentation de l'élément de réaction du troisième rapport, lorsque la pression dans l'élément de réaction du quatrième rapport atteint un niveau suffisant pour permettre la transmission de la totalité du couple de réaction sur le quatrième rapport.

Le dispositif selon l'invention est complété par une vanne manuelle de construction symétrique, qui sélectionne soit la marche avant, soit la position neutre, soit la marche arrière. Enfin, le dispositif comprend une vanne de limitation de la pression d'alimentation du convertisseur hydrocinétique de couple, et un clapet de sécurité agissant comme un élément de sauvegarde de l'ensemble du dispositif hydraulique en cas de surpression accidentelle.

L'invention sera mieux comprise par l'étude d'un mode de réalisation particulier décrit à titre nullement limitatif et illustré par les dessins annexés, sur lesquels :

la figure 1 représente schématiquement les principaux éléments d'une transmission automatique que le dispositif selon l'invention est destiné à commander ;

la figure 2 illustre le bloc-schéma du dispositif de commande auquel se rapporte l'invention ;

la figure 3 montre le tableau regroupant les états des différents organes de commutation, c'est-à-dire les embrayages, les freins et la roue libre, selon la position du levier de sélection et le rapport engagé ; une croix indique l'élément actif correspondant ;

la figure 3A montre un tableau des états des différents organes du dispositif de commande et de la transmission selon la position du levier de sélection et le rapport engagé ; chaque état est identifié par un numéro situé dans la dernière colonne à droite de la figure ;

la figure 4 représente schématiquement la partie du circuit hydraulique du dispositif montrant les différents canaux alimentés en fluide hydraulique pour la configuration de la transmission correspondant aux positions neutres, arrière et parcage du levier de sélection, et concernant le système de régulation de pression ;

la figure 4A illustre le montage de l'électrovanne modulatrice et son raccordement au reste du réseau hydraulique ;

la figure 5 représente schématiquement le circuit hydraulique dans une configuration dérivée de celle de la figure 4, plus particulièrement adaptée à un véhicule fortement motorisé, et correspondant aux positions A, 3, 2 et 1 du levier de sélection ;

la figure 5A représente schématiquement le circuit hydraulique dans une configuration dérivée de celle de la figure 5, plus particulièrement adaptée à un véhicule faiblement motorisé, et correspondant aux positions A, 3, 2, 1 du levier de sélection ;

la figure 5B représente une variante du système de génération de la pression intermédiaire à partir de la pression de référence ;

la figure 6 représente la configuration du circuit hydraulique pour la première phase transitoire d'un passage Neutre-Arrière, ainsi que pour l'état stable de marche arrière ;

la figure 7 représente la configuration du circuit hydraulique pour la deuxième phase transitoire d'un passage Neutre-Arrière ;

la figure 8 représente la configuration du circuit hydraulique pour l'état stable de troisième rapport hydraulique (3H) ;

la figure 9 représente la configuration du circuit hydraulique pour la première phase transitoire d'un passage Neutre-premier rapport hydraulique (1H), ainsi que pour l'état stable de première hydraulique ;

la figure 10 représente la configuration du circuit hydraulique pour la seconde phase transitoire d'un passage Neutre-premier rapport hydraulique (1H) ;

la figure 11 représente la configuration du circuit hydraulique pour la première phase transitoire d'un passage premier rapport hydraulique (1H) — première vitesse hydraulique avec frein moteur (1HFM), ainsi que pour l'état stable de première vitesse hydraulique avec frein moteur (1HFM) ;

la figure 12 représente la configuration du circuit hydraulique pour la seconde phase transitoire d'un passage premier rapport hydraulique (1H) — première vitesse hydraulique avec frein moteur (1HFM) ;

la figure 13 représente la configuration du circuit hydraulique pour la première phase transitoire d'un passage premier rapport hydraulique (1H) — deuxième vitesse hydraulique (2H) ainsi que pour l'état stable de deuxième vitesse hydraulique (2H) ;

la figure 14 représente la configuration du circuit hydraulique pour la seconde phase transitoire d'un passage première vitesse hydraulique (1H) — deuxième vitesse hydraulique (2H) ;

la figure 15 représente la configuration du circuit hydraulique pour la première phase transitoire d'un passage deuxième vitesse hydraulique (2H) — troisième vitesse mécanique (3M) ;

la figure 16 représente la configuration du circuit hydraulique pour la seconde phase transitoire d'un passage deuxième vitesse hydraulique (2H) - troisième vitesse mécanique (3M) ;

la figure 17 représente la configuration d'un circuit hydraulique pour la troisième phase transitoire d'un passage deuxième hydraulique (2H) — troisième vitesse mécanique (3M), ainsi que l'état stable de troisième vitesse mécanique (3M) ;

la figure 18 représente la configuration du circuit hydraulique pour la quatrième phase transitoire d'un passage deuxième vitesse hydraulique (2H) — troisième vitesse mécanique (3M) ;

la figure 19 représente la configuration du circuit hydraulique pour la première phase transitoire d'un passage troisième vitesse mécanique (3M) — quatrième vitesse mécanique (4M) ;

la figure 20 représente la configuration du schéma hydraulique pour la deuxième phase transitoire d'un passage troisième vitesse mécanique (3M) — quatrième vitesse mécanique (4M) ;

la figure 21 représente la configuration du schéma hydraulique pour l'état stable de quatrième vitesse mécanique (4M) ;

la figure 22 représente la configuration du schéma hydraulique pour le premier état transitoire d'un passage quatrième vitesse mécanique (4M) — troisième vitesse mécanique (3M) ;

la figure 23 représente la configuration du schéma hydraulique pour le deuxième état transitoire d'un passage quatrième vitesse mécanique (4M) — troisième vitesse mécanique (3M) ;

la figure 24 représente, en variante, la configuration du schéma hydraulique pour le deuxième état transitoire d'un passage quatrième vitesse mécanique (4M) — deuxième vitesse hydraulique (2H) ;

la figure 25 représente le schéma hydraulique en configuration de débrayage à l'arrêt ;

la figure 26 représente le schéma hydraulique en configuration de sécurité lors d'une manœuvre intempestive du levier de sélection d'une position de marche avant vers la position de marche arrière ;

la figure 27 représente, en coupe, la vanne de progressivité VP avec son électrovanne, dans la position de repos et dans la positon excitée ;

la figure 28 représente, en coupe, la vanne de séquence VC avec son électrovanne, dans la position de repos et dans la position excitée ;

la figure 29 représente, en coupe, la vanne de séquence VB avec son électrovanne, dans la position de repos et dans la position excitée ;

la figure 30 représente, en coupe, la vanne de séquence VA avec son électrovanne, dans la position de repos et dans la position excitée ;

la figure 31 représente, en coupe, la vanne de coupure VC 2/3 dans ses deux états ;

la figure 32 représente, en coupe, la vanne de coupure VC 3/4 dans ses deux états ;

la figure 33 représente, en coupe, la vanne manuelle VM dans ses trois états ;

la figure 34 représente, en coupe, la vanne de régulation de pression VRP ;

la figure 35 représente, en coupe, la vanne de régulation de pression VLP 3 ;

la figure 36 représente, en coupe, la vanne de régulation de pression VLP 5.

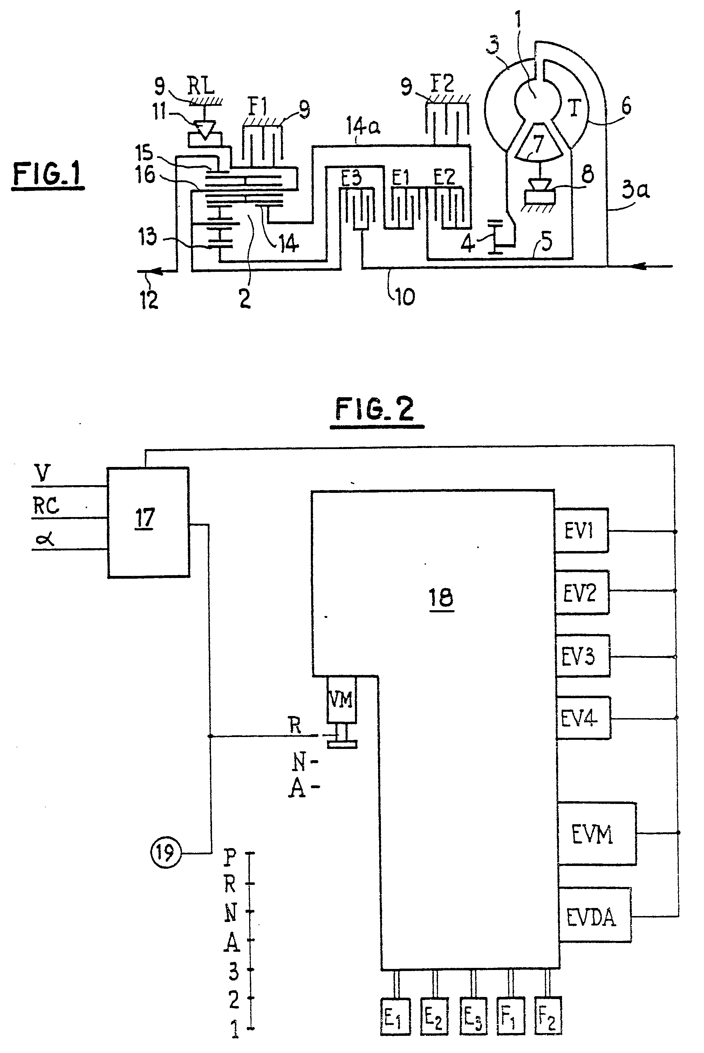

Dans l'exemple non limitatif qui va faire l'objet d'une description détaillée, la transmission automatique est telle que représentée sur la figure 1. La transmission comprend un convertisseur hydrocinétique de couple 1 et une boîte de vitesses à train épicycloïdal 2. Le convertisseur hydrocinétique de couple 1 comprend, de manière classique, trois éléments : l'impulseur 3, muni d'un système amortisseur non représenté, relié au moteur d'entraînement du véhicule, également non représenté sur la figure, et entraînant une pompe de servitude 4 de la boîte de vitesses ; une turbine 6 dont l'arbre 5 constitue l'un des arbres d'entrée de la boîte de vitesses 2, et un réacteur 7 monté par l'intermédiaire d'un dispositif à roue libre 8.

Le train d'engrenages épicycloïdal 2 est logé dans un carter 9 du mécanisme. Ce train d'engrenages épicycloïdal 2 reçoit le couple du convertisseur 1 par l'intermédiaire de l'arbre de turbine 5, et le couple moteur par l'arbre 10 lié à l'impulseur par l'élément 3a, et le transmet par l'intermédiaire de l'arbre de sortie 12 au système de réduction finale de la transmission.

Les différents rapports de transmission sont obtenus au moyen d'un premier embrayage $E_1$, un deuxième embrayage $E_2$, un troisième embrayage $E_3$, un premier frein $F_1$, un deuxième frein $F_2$ et un dispositif à roue libre 11. Les trois embrayages et les deux freins peuvent être commandés hydrauliquement de manière classique. Dans la pratique, on pourra utiliser des embrayages multidisques soumis à l'action d'un piston mû par un fluide hydraulique mis sous pression par la pompe 4.

L'arrangement cinématique du train épicycloïdal 2 est classique et connu en soi sous le nom de train du type Ravigneaux I. Les différentes combinaisons d'actionnement des organes de commande ou de commutation du train épicycloïdal (trois embrayages, deux freins, une roue libre) permettent d'obtenir les quatre rapports principaux de marche avant (1H, 2H, 3M, 4M), le rapport de marche arrière (R), le neutre (N), ainsi qu'un rapport transitoire de marche avant (3DP) utilisé fonctionnellement lors des évolutions deuxième vitesse hydraulique (2H) — troisième vitesse mécanique (3M) et quatrième vitesse mécanique (4M) — troisième vitesse mécanique (3M), un rapport exceptionnel de marche avant et de refuge (3H), et une position de sauvegarde (S) permettant d'éviter de détruire la transmission en cas de manœuvre intempestive du levier de sélection d'une position de marche avant vers la position de marche arrière.

L'homme du métier familier avec les arrangements classiques des trains épicycloïdaux vérifiera sans peine que :

lorsque l'embrayage $E_1$ seul est serré, qu'un couple positif est appliqué par le moteur sur l'impulseur 3 du convertisseur de couple 1, la roue libre 11 est bloquée, et que l'on obtient, entre l'arbre de turbine 5 (l'arbre d'entrée) et l'arbre de sortie 12, un rapport de démultiplication égal à $N_c/N_{p1}$, où $N_c$ désigne le nombre de dents de la couronne 15 et $N_{p1}$ le nombre de dents du planétaire 13 ; c'est le premier rapport hydraulique de marche avant appelé « 1H », où « H » marque que la totalité du couple transite hydrauliquement par le convertisseur de couple ;

lorsque, outre l'embrayage $E_1$, le frein $F_1$ est serré, on obtient le même rapport de démultiplication entre l'arbre de turbine 5 et l'arbre de sortie 12 comme précédemment, mais indépendamment du signe du couple appliqué sur l'impulseur 3 ; à la différence du rapport précédent, ce rapport permet d'obtenir du frein moteur ; c'est le premier rapport hydraulique de marche avant avec frein moteur appelé « 1HFM » ;

lorsque l'embrayage $E_1$ et le frein $F_2$ sont simultanément serrés, le dispositif à roue libre 11 est débloqué, et l'on obtient, entre l'arbre de turbine 5 et l'arbre de sortie 12, un rapport de démultiplication égal à :

$$N_c / N_{p1} \times (N_{p1} + N_{p2}) / (N_c + N_{p2}),$$

où $N_{p2}$ désigne le nombre de dents du planétaire 14 ; c'est le deuxième rapport hydraulique de marche avant appelé « 2H » ;

lorsque les embrayages $E_1$ et $E_2$ sont simultanément serrés, le train épicycloïdal est bloqué ; par conséquent le rapport de démultiplication entre l'arbre de turbine 5 et l'arbre de sortie 12 est égal à l'unité ; c'est le troisième rapport hydraulique de marche avant appelé « 3H » ;

lorsque les embrayages $E_1$ et $E_3$ sont simultanément serrés, le couple de sortie sur l'arbre 12 est égal à la somme du couple $C_{E1}$ exercé par la turbine 6 sur l'arbre 5 et sur le planétaire 13, et du couple $C_{E3}$ exercé par l'impulseur 3 sur l'arbre 10, sur le porte-satellite 16 du train épicycloïdal 2, et que ces couples sont dans le rapport $N_c/N_{p1}-1$ ; de plus, si le convertisseur de couple 1 est en régime de couplage, le couple sur l'arbre de sortie 12 est égal au couple moteur ; dans ces conditions, ce rapport fonctionnant en division de puissance est le troisième rapport de marche avant en division de puissance appelé « 3DP » ;

lorsque les embrayages $E_1$, $E_2$ et $E_3$ sont simultanément serrés, l'ensemble train épicycloïdal 2 et convertisseur hydrocinétique de couple 1, mécaniquement verrouillé, tourne à la vitesse du moteur et aucun couple n'est transmis par le convertisseur 1 ; ce rapport est le troisième rapport mécanique de marche avant appelé « 3M » ;

lorsque l'embrayage $E_3$ et le frein $F_2$ sont simultanément serrés, aucun couple n'est transmis par le convertisseur 1, la totalité du couple moteur est transmise mécaniquement par l'arbre de l'impulseur 10, et le rapport de démultiplication entre l'arbre et l'impulseur 10 et l'arbre de sortie 12 est donné par le rapport $N_c/(N_c + N_{p2})$ ; c'est le quatrième rapport mécanique de marche avant appelé « 4M » ;

lorsque l'embrayage $E_2$ et le frein $F_1$ sont simultanément serrés, on obtient un rapport de démultiplication négatif égal à — $N_c / N_{p2}$ entre l'arbre de turbine 5 et l'arbre d'impulseur 10, c'est le rapport de marche arrière appelé « R » ; la transmission du couple est totalement hydraulique à travers le convertisseur hydrocinétique de couple 1 ;

lorsque le frein $F_2$ seul serré, aucun couple ne peut être transmis dans la transmission, faute d'un embrayage d'entrée ; on comprendra mieux, dans la suite de l'exposé, l'intérêt de cette configuration de sauvegarde appelé « S », qui permet d'assurer la sécurité du véhicule et de la transmission dans des circonstances exceptionnelles ;

les principaux éléments du dispositif de commande de l'invention sont représentés schématiquement sur la figure 2. On voit, sur cette figure, que le dispositif selon l'invention comprend un ensemble distributeur hydraulique 18 qui alimente sélectivement, à sa sortie, les trois embrayages $E_1$, $E_2$ et $E_3$ et les deux freins $F_1$ et $F_2$, qui commandent le train épicycloïdal 2 représenté sur la figure 1 ;

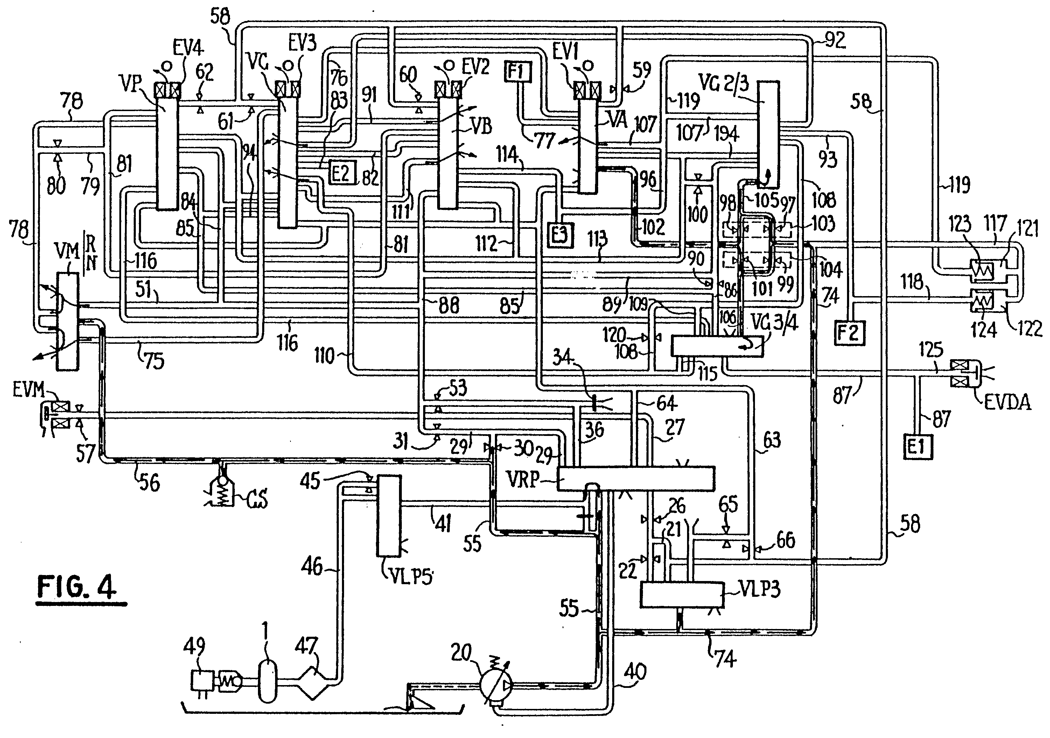

comme il apparaît sur la figure 4A, le distributeur 18 est fixé, par l'intermédiaire de vis non représentées, en un emplacement approprié du carter 9, dont il est séparé par une tôle de distribution 52, dans laquelle sont percés tous les différents gicleurs fonctionnels dont le rôle sera décrit dans la suite ;

l'ensemble hydraulique 18 reçoit des informations concernant la marche du véhicule au moyen d'un dispositif électronique 17, habituellement appelé gouverneur, qui fournit des signaux de commande aux quatre électrovannes de séquence EV1, EV2, EV3, et EV4 pilotant le distributeur hydraulique, ainsi qu'à une électrovanne modulatrice EVM et une électrovanne de débrayage à l'arrêt EVDA, dont les rôles seront précisés plus loin. Le gouverneur comparateur 17 reçoit, de manière non limitative, des signaux correspondant à la vitesse du véhicule V, à la charge du moteur d'entraînement, qui peut, de manière non limitative, être traduite par la position angulaire de l'organe dosant le carburant au moteur, éventuellement à la position complètement enfoncée de la pédale d'accélérateur signalée par un contact dit « rétro-contact » RC, ou contact dit de « kick-down ». Le gouverneur-comparateur 17 reçoit également un signal provenant de la position du levier de sélection 19, ou de tout autre moyen approprié, qui est relié mécaniquement à une vanne manuelle VM qui agit également sur l'ensemble hydraulique 18.

Le levier de sélection 19 peut prendre sept positions :

position « première imposée » repérée 1 ;

position « troisième interdite » (ou deuxième imposée) repérée 2 ;

5

position « quatrième interdite » (ou troisième imposée) repérée 3 ;
position « automatique » repérée A ;
position « neutre » repérée N ;
position « marche arrière » repérée R :
et position « parc » (ou arrêt bloqué) repérée P ;

tandis que la vanne manuelle VM, grâce à un mécanisme approprié, ne prend que trois positions distinctes correspondant aux seules positions R, N, A du levier de sélection 19.

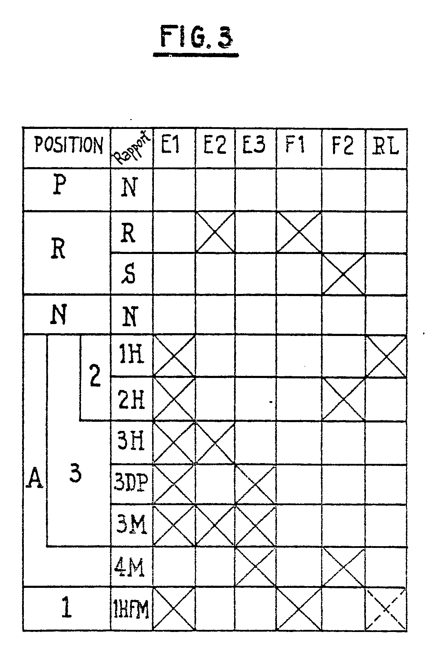

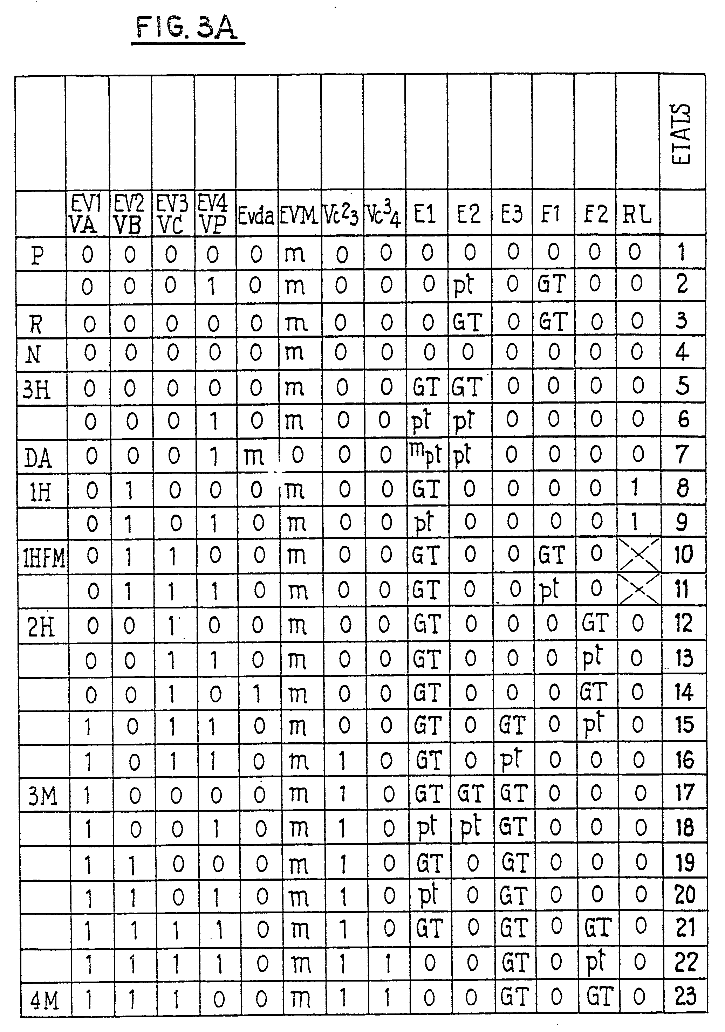

Le tableau de la figure 3A montre entre autres l'état d'excitation des quatre électrovannes EV1 à EV4 selon la position du levier de sélection 19, et selon le rapport engagé par la transmission. Sur ce tableau, le symbole 0 indique que l'électro-aimant de l'électrovanne correspondante n'est pas excité électriquement, de sorte que l'électrovanne correspondante est ouverte et laisse passer un débit de fuite de fluide hydraulique. Au contraire, le symbole 1 indique que l'électro-aimant de l'électrovanne correspondante est excité électriquement, de sorte que l'électrovanne se trouve fermée et ne laisse pas passer le fluide hydraulique.

Dans les positions « automatiques » A, « quatrième interdite » (troisième imposée) repérée 3 au levier de sélection 19, et « troisième interdite » (deuxième imposée) repérée 2 au levier de sélection 19, le changement de rapport de la transmission est commandé par le boîtier électronique 17, en fonction notamment de la vitesse du véhicule, et de la position de la pédale d'accélérateur « alpha » selon des lois appropriées pour une boîte de vitesses automatique.

L'ensemble distributeur hydraulique 18 a pour fonction d'assurer, selon les informations qu'il reçoit du gouverneur 17 et de la vanne manuelle VM, d'une part la régulation du niveau de pression du fluide hydraulique indispensable pour que les différents récepteurs hydrauliques puissent transmettre les couples instantanés dans toutes les configurations de la transmission, d'autre part l'alimentation sélective en fluide hydraulique des embrayages $E_1$, $E_2$, $E_3$ et les freins $F_1$ et $F_2$, comme indiqué, entre autres, sur le tableau de la figure 3A. Dans ce tableau le symbole 0 signifie, comme précédemment, que le récepteur correspondant n'est pas alimenté en fluide hydraulique, tandis que le symbole « GT » signifie que le récepteur correspondant est alimenté simultanément au travers d'un gicleur de forte section et d'un gicleur de faible section, ce qui est équivalent à un conduit d'alimentation muni d'une restriction (ajutage) à grande section de passage ; et que le symbole « pt » signifie que le récepteur en question est alimenté au travers d'un gicleur de faible section, ce qui est équivalent à un conduit d'alimentation muni d'une restriction (ajutage) à faible section de passage. Le symbole « mpt » sera explicité plus loin, en relation avec le fonctionnement de l'électrovanne de débrayage à l'arrêt EVDA.

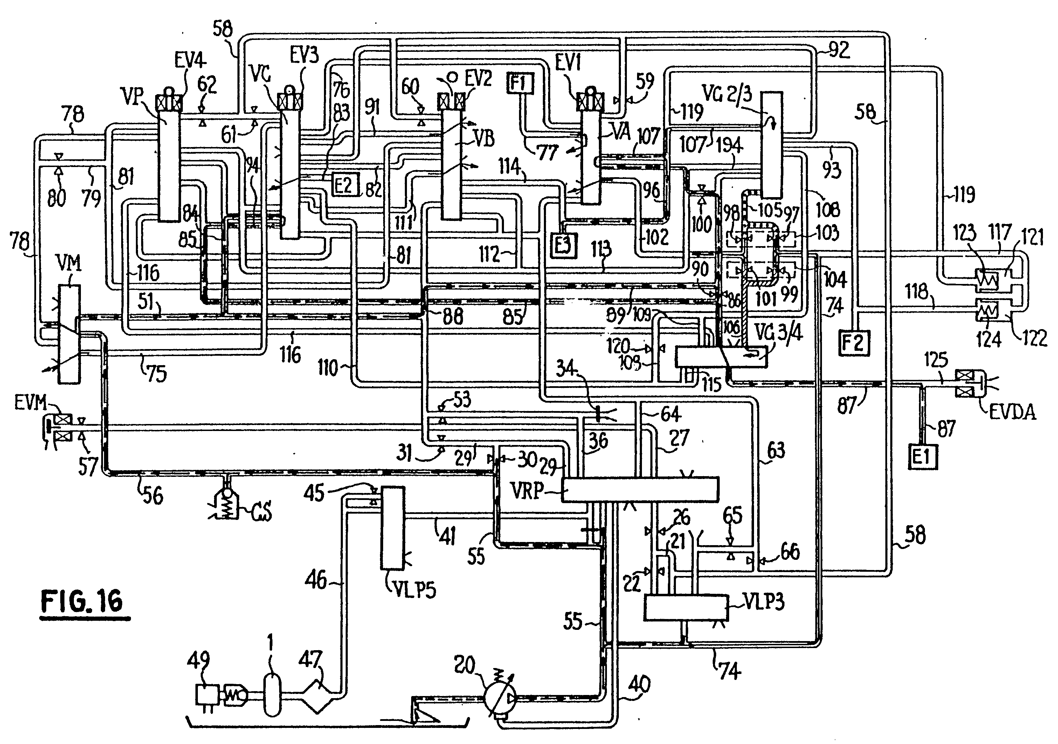

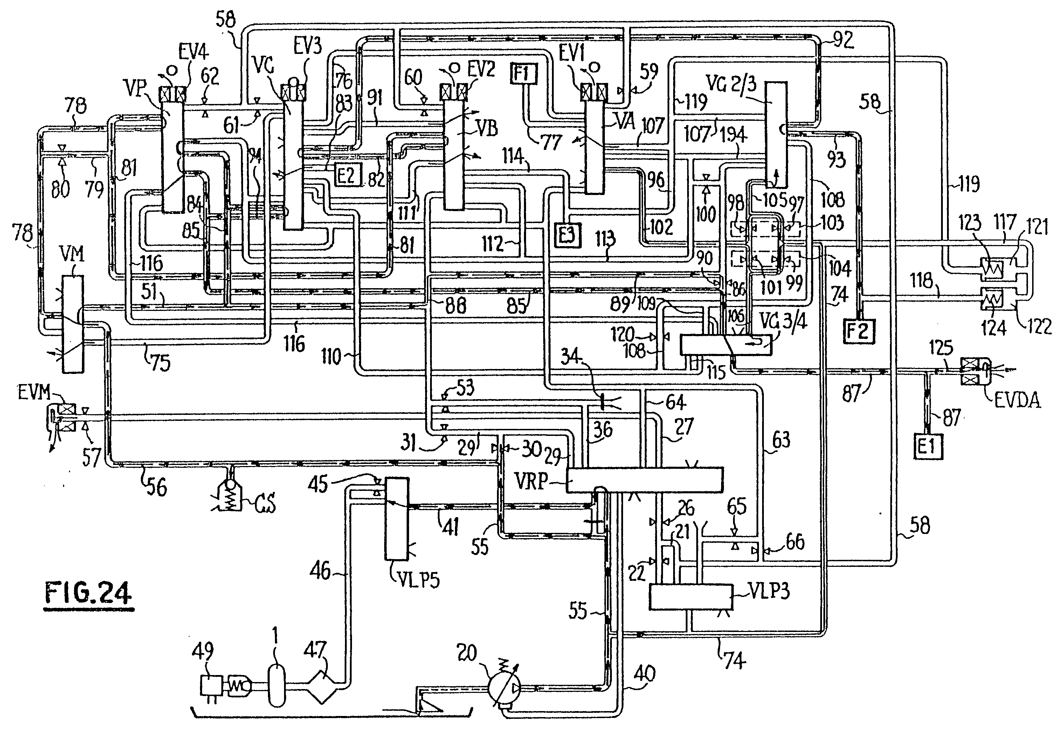

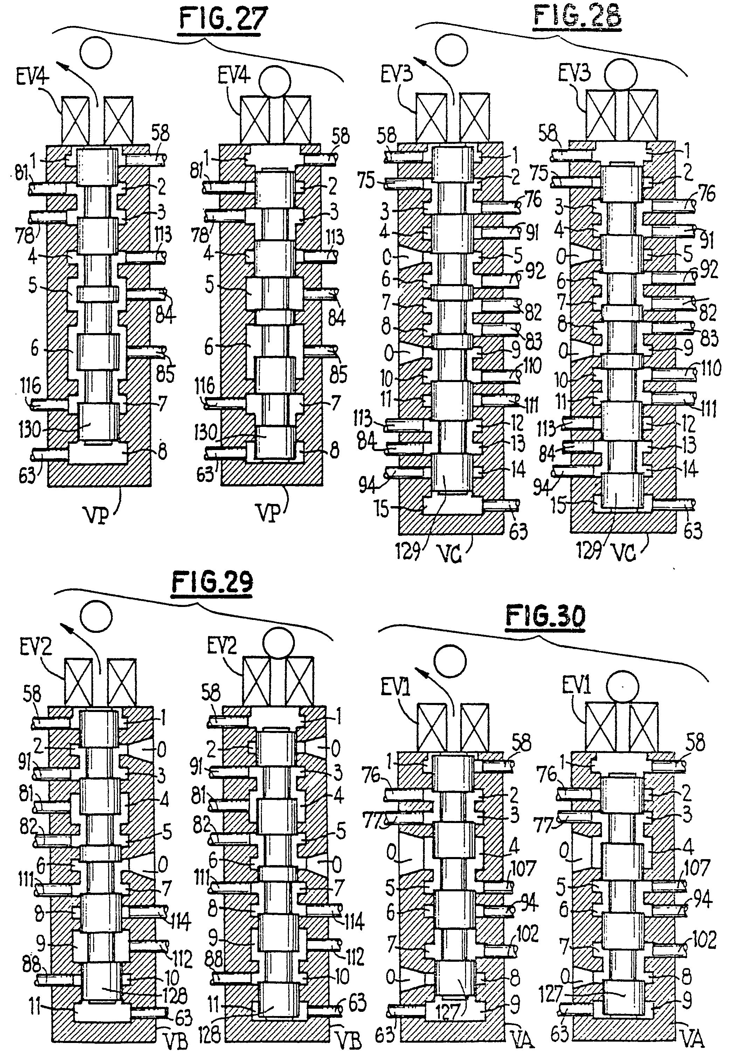

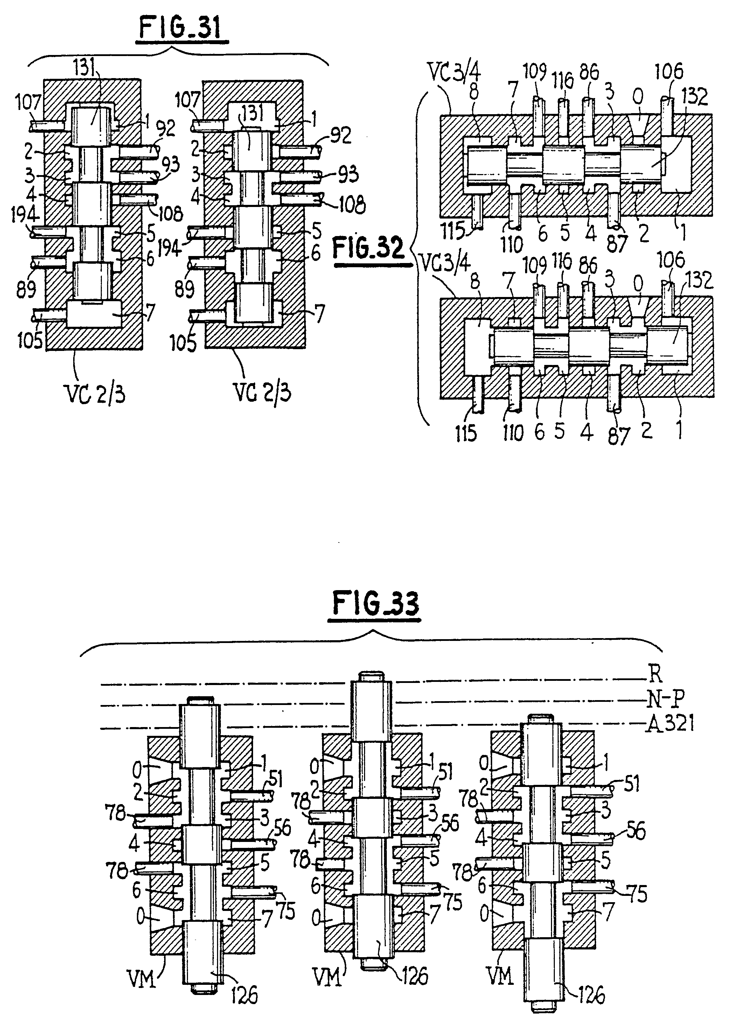

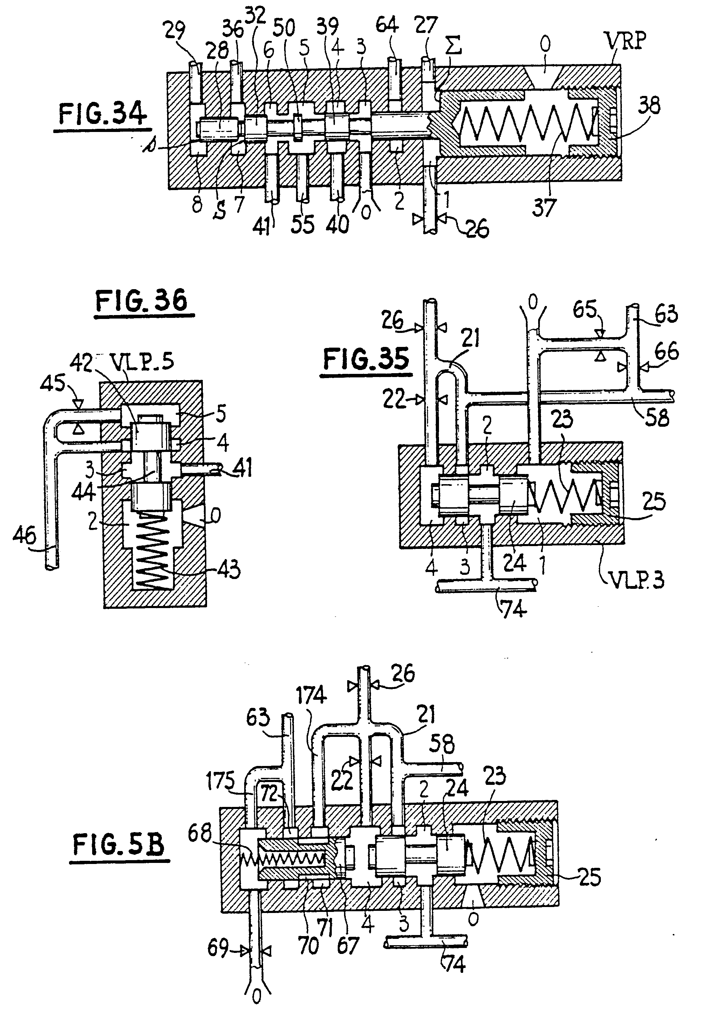

Les différents éléments constituant l'ensemble hydraulique 18 se retrouvent sur les figures 4 à 35. On décrira maintenant la structure de ces différents éléments.

Le dispositif comprend principalement trois vannes de séquence référencées VA, VB, et VC, et une vanne de progressivité VP, qui sont chacune associées à l'une des électrovannes EV1, EV2, EV3, et EV4, et qui sont schématisées sur les figures par un électro-aimant et une bille. Les vannes de séquence VA, VB, VC, et la vanne de progressivité VP sont chacune constituées par un tiroir de distribution à deux positions respectivement référencé 127, 128, 129, et 130.

L'ensemble distributeur hydraulique 18 comprend également deux vannes de coupures VC 2/3 et VC 3/4 constituées chacune d'un tiroir de distribution 131, 132 à deux positions. Ces vannes de coupures assurent respectivement les commutations des récepteurs hydrauliques du train planétaire 2 nécessaires au passage des vitesses en montant de la deuxième à la troisième, et de la troisième à la quatrième.

L'ensemble distributeur hydraulique 18 comprend de plus une vanne manuelle VM permettant l'alimentation du dispositif en fluide hydraulique pour les différents récepteurs $E_1$, $E_2$, $E_3$, $F_1$ et $F_2$, elle est constituée par un tiroir 126 à trois positions : marche arrière, neutre et perçage, marche avant.

L'ensemble du circuit hydraulique est alimenté au moyen d'une pompe volumétrique 20 à cylindrée variable aspirant le fluide hydraulique à partir d'un bac vu à travers une crépine.

L'ensemble distributeur hydraulique 18 comporte enfin les différents éléments nécessaires aux différents niveaux de pression qui doivent être régulés pour le fonctionnement du dispositif. Ces différents éléments sont :

la vanne de régulation de pression VRP, destinée à fournir les différents niveaux de la pression de ligne nécessaires au circuit hydraulique ;

une vanne de régulation VLP 3 ;

une vanne de régulation de pression VLP 5 destinée à alimenter le circuit hydraulique de l'échangeur de chaleur 47, le convertisseur hydrocinétique de couple 1 et le circuit de graissage 49 ;

d'un clapet de sécurité CS.

Tous les éléments de l'ensemble distributeur hydraulique 18 présentent chacun un corps muni de différentes chambres référencées par le numéro de la chambre suivi de la référence de l'élément en question ; par exemple, la chambre numéro 1 de la vanne de séquence VA sera référencée : « chambre 1 VA ».

On va, en premier lieu, s'attacher à décrire, en se référant à la figure 4, l'ensemble du système de régulation de pression du fluide hydraulique. Ce système peut être un type quelconque, dans la mesure où il est capable de fournir les niveaux de pression nécessaires au fonctionnement de l'ensemble distributeur hydraulique 18. Ce système, dans un mode de réalisation préférentiel, est compatible, par la structure de la vanne de régulation de pression VRP, avec une pompe à palettes 20 à cylindrée variable par pilotage de son excentricité. Il faut noter que ce système est adaptable, sans aucun changement de principe, à une pompe classique à cylindrée constante, par une modification mineure de la vanne de régulation pression VRP évidente pour l'homme de métier.

La vanne de régulation de pression VRP comporte deux tiroirs 32 et 28 délimitant avec le corps de ladite vanne huit chambres référencées respectivement de la droite vers la gauche 1, 2, 3, 4, 5, 6, 7, et 8. Un ressort 37, qui agit sur le tiroir 2, est tenu par un bouchon fileté 38.

La vanne de régulation de pression VLP 3 comporte un tiroir 24, qui délimite avec le corps de ladite vanne de régulation quatre chambres référencées respectivement de la droite vers la gauche 1, 2, 3, 4. Un ressort 23, qui agit sur le tiroir 24, est tenu par un bouchon fileté 25.

La pression de refoulement de la pompe 20 est conduite dans la chambre 2 VLP 3, dont le tiroir 24 est de construction symétrique. La pression régulée, règnant dans le canal 21 débouchant dans la chambre 3 VLP 3, est conduite en contre-réaction sur la chambre 4 VLP 3, à travers le gicleur 22 d'amortissement, équilibrant ainsi la poussée du ressort 23 sur l'autre extrémité du tiroir 24. La pression ainsi régulée, dont la valeur est fixée par la tare en place du ressort 23, qui peut être ajustée grâce au bouchon 25 vissé dans le corps du distributeur 18, sert de pression de référence $P_1$ pour toutes les autres fonctions de l'ensemble de distributeur hydraulique 18. Le canal 21 est relié, à travers le gicleur calibré 26, à la chambre 1 VRP de la vanne de régulation de pression VRP, où la pression règnant en aval du gicleur 26 agit sur la section différentielle de la vanne de régulation de pression VRP ; le canal 27 relie la chambre 1 VRP à l'électrovanne modulatrice EVM. Cette électrovanne EVM, de type normalement ouvert, permet de faire régner dans le canal 27, et donc sur la section différentielle de la vanne VRP, une pression $P_M$ variant entre la pression de référence $P_1$ règnant en amont du gicleur 26 (vanne EVM fermée), et une valeur résiduelle voisine de 0 (vanne EVM ouverte).

Le canal 29 est maintenu à une pression intermédiaire égale à la pression de ligne $P_L$ multipliée par le coefficient réducteur d'un potentiomètre hydraulique constitué par les gicleurs calibrés 30 et 31 en série, interposés entre le canal 55 où règne la pression de ligne $P_L$ et le canal 51 mis au 0 par la vanne manuelle VM. La pression règnant dans le canal 29 agit, au niveau de la chambre 8 VRP de la vanne VRP, sur le poussoir 28, dont la section s est inférieure à la section S du tiroir 32 de la vanne VRP. Par ailleurs, la chambre 7 VRP de la vanne VRP est au 0 par le canal 36, relié au canal 51 par le gicleur 53, si bien que l'équation de l'ensemble de la vanne VRP s'écrit :

$$s \cdot \lambda \cdot P_L + \Sigma \cdot P_M = F,$$ où F désigne la force de rappel du ressort 37. On obtient :

$$P_L = F/\lambda \cdot s - (\Sigma/\lambda \cdot s) P_M \qquad \text{(a)}$$

Cette expression montre que la pression de refoulement $P_L$, ou pression de ligne, réglable par ajustement de $\lambda$ et de F, évolue en sens inverse de la pression $P_M$, si bien que, en cas de défaillance électrique de la vanne EVM entraînant une pression $P_M$ sensiblement nulle, la pression $P_L$ est alors maximale, de telle sorte que la sauvegarde de la transmission est alors assurée.

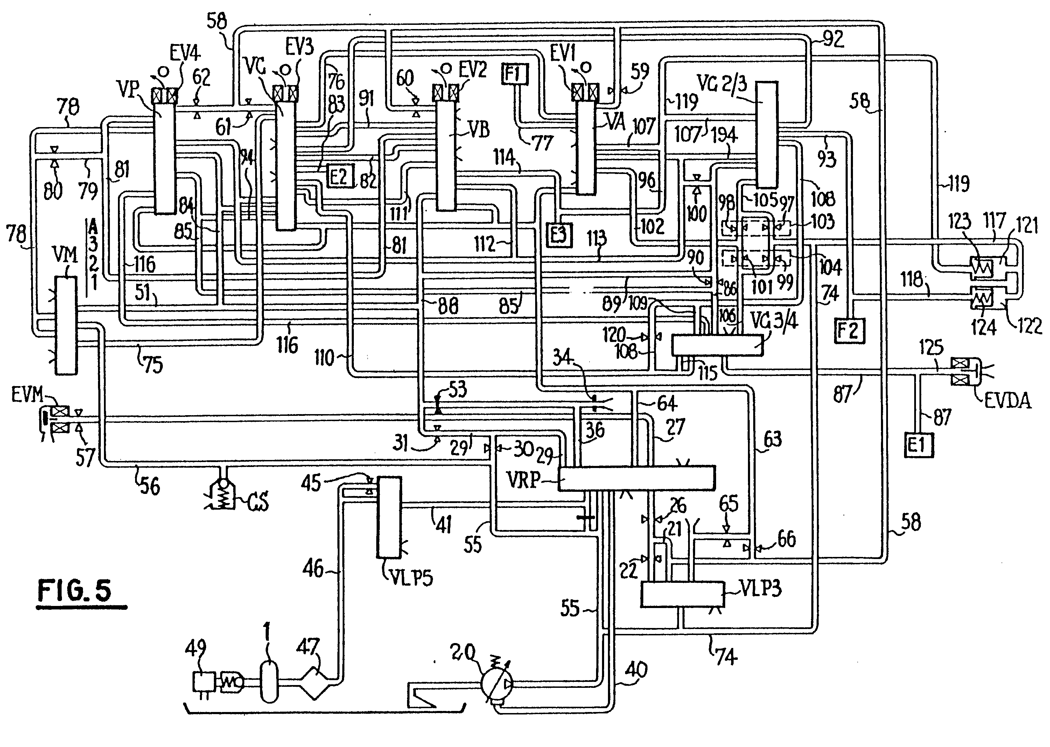

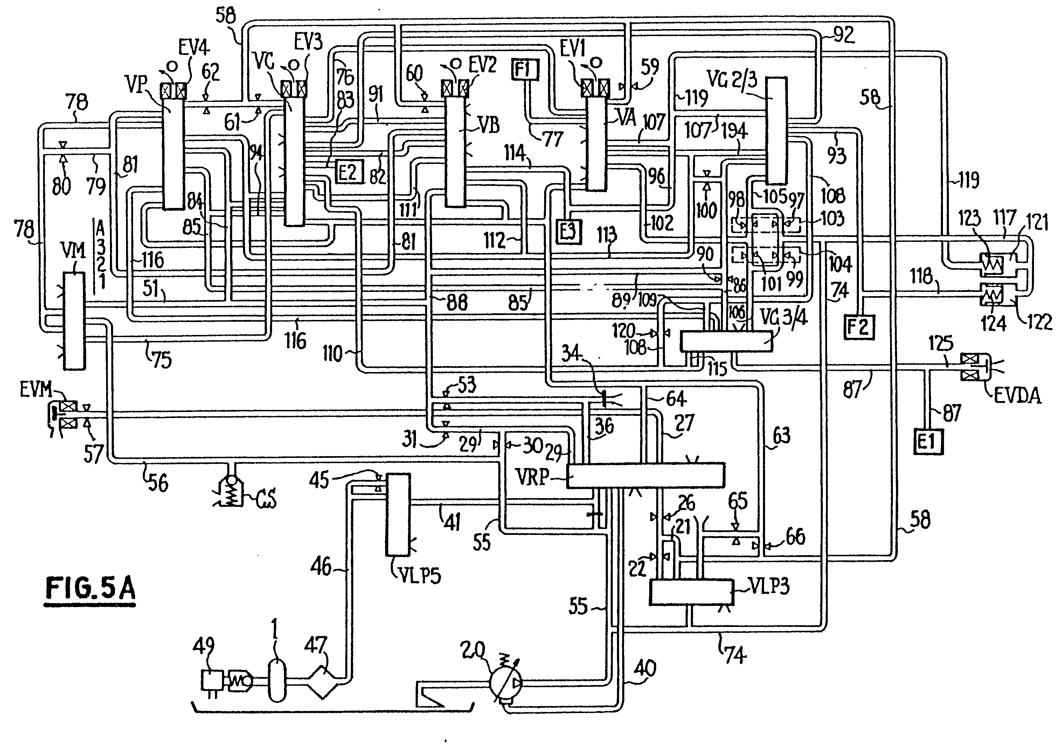

En se référant à la figure 5, on constate que, pour les positions A, 3, 2 et 1 du levier de sélection 19, la configuration de l'ensemble de la vanne VRP est analogue à celle qui vient d'être décrite, à ceci près que c'est la pression $P_L$ intégrale, et non plus affectée d'un coefficient diviseur $\lambda$, qui agit sur le poussoir 28. En effet, c'est la pression $P_L$ qui règne dans les canaux 29 et 51, rendant ainsi inopérant le potentiomètre hydraulique constitué par les gicleurs calibrés 30 et 31 ; de plus, le gicleur 53 étant obturé, et le gicleur 34 ouvert par une grande section sur le 0, la chambre 7 VRP de la vanne VRP est toujours au 0, si bien que l'équation d'équilibre de la vanne VRP s'écrit, avec les mêmes notations que précédemment :

$$P_L = F/S - (\Sigma/s) P_M, \qquad \text{(b)}$$

ce qui montre que la pression $P_L$ est réglable par ajustement de la force F, et varie toujours, par mesure de sécurité, en sens inverse de la pression $P_M$.

En se référant maintenant à la figure 5A, on peut voir que, du fait de l'ouverture du gicleur 53, et de la fermeture du gicleur 34, le poussoir 28 est soumis à la pression de ligne $P_L$ à ses deux extrémités, ce qui neutralise son effet, tandis que la pression $P_L$ agit sur la surface S au niveau de la chambre 7 VRP de la vanne VRP. L'équation d'équilibre de la vanne VRP s'écrit donc :

$$P_L = F/S - (\Sigma/S) P_M \qquad \text{(c)}$$

Cette relation montre que la pression $P_L$ est réglable par ajustement de la force F, et varie toujours, par mesure de sécurité, en sens inverse de la pression $P_M$.

L'ensemble des trois relations (a), (b) et (c) montre que le système de régulation de pression du dispositif selon l'invention permet d'obtenir de manière simple, par réglage de la tare du ressort 37, et par calibrage, bouchage et/ou débouchage sélectif de gicleurs de distribution, trois plages distinctes de pression de ligne permettant de satisfaire à toutes les configurations d'utilisation de la transmission automatique. Ceci est revendiqué séparément dans la demande EP-A 187 051.

En se référant à la figure 4A, on notera que la canal 27, qui relie la chambre 1 VRP de la vanne VRP à la vanne EVM, est limité vers le haut exclusivement par la tôle de distribution 52, qui sépare l'ensemble distributeur hydraulique 18, du carter 9 sur lequel il est fixé. La vanne EVM, alimentée en fluide hydraulique par le gicleur 57 percé à travers la tôle de distribution 52, est positionnée verticalement dans le carter 9, de telle sorte que son débit de fuite s'évacue par un orifice 54 pratiqué dans le carter.

Cet orifice 54 constitue le point du réseau hydraulique depuis le tiroir 32 de la vanne VRP. Cette disposition favorise une purge rapide du circuit hydraulique, d'autant plus qu'un débit d'huile ininterrompu s'établit dans le canal 27 dès que la vanne EVM n'est pas en position complètement fermée.

Par ailleurs, le pilotage de la pompe à cylindrée variable 20 est réalisé par une portée 39 de la vanne VRP. Cette portée 39 trouve sa position d'équilibre entre les chambres 3 VRP et 4 VRP de la vanne VRP. Lorsque la pression $P_L$ tend à dépasser la valeur de consigne définie par l'une des équations (a), (b), (c) ci-dessus, la vanne VRP a tendance à se déplacer vers la droite sous l'action du poussoir 28, ce qui tend à mettre la chambre 5 VRP de la vanne VRP où règle la pression $P_L$ en liaison avec la chambre 4 VRP, et donc à augmenter la pression de pilotage de la pompe 20 régnant dans le canal 40. Une augmentation de la pression dans le canal 40 fait diminuer la cylindrée de la pompe 20, ce qui provoque une chute de la pression de ligne $P_L$. Lorsqu'au contraire la pression $P_L$ tend à diminuer, la vanne VRP a tendance à se déplacer vers la gauche sous l'action du ressort 37, ce qui favorise la mise en communication de la chambre 4 VRP avec la chambre 3 VRP elle-même au 0. Il en résulte une chute de la pression régnant dans le canal 40, qui fait augmenter la cylindrée de la pompe 20, ce qui provoque une remontée de la pression de ligne $P_L$.

En outre, un débit de fluide hydraulique sous pression de ligne $P_L$ est transféré au canal 41, en passant de la chambre 5 VRP à la chambre 6 VRP, ce qui permet d'alimenter l'ensemble de la vanne de régulation de pression VLP 5. Cette vanne VLP 5, construite de manière rigoureuse identique à la vanne de régulation de pression VLP 3, fonctionne également de manière identique. La vanne VLP 5 est constituée d'un tiroir 44, qui délimite avec le corps de ladite vanne, quatres chambres référencées depuis le bas vers le haut 2, 3, 4, 5 VLP 5.

Un ressort 43 agit sur le tiroir 44.

La pression régulée sur la lèvre de la chambre 4 VLP 5 par la portée 42 du tiroir 44 et régnant dans le canal 46, est envoyée en contre-réaction au travers d'un gicleur d'amortissement 45 sur l'extrémité du tiroir 44 dans la chambre 5 VLP 5, équilibrant ainsi la poussée du ressort 43 sur l'autre extrémité du tiroir 44.

La pression ainsi régulée, dont la valeur $P_C$ est fixée par la tare en place du ressort 43, sert à l'alimentation en série, de l'échangeur de chaleur 47, du convertisseur hydrocinétique de couple 1, et du circuit de graissage 49 de la transmission. Ce dispositif permet de protéger l'échangeur 47 et le convertisseur 1 contre un niveau de pression excessif qui pourrait les endommager, quel que soit le niveau de pression de ligne $P_L$ requis pour la bonne marche de la transmission.

Par ailleurs, lors d'une forte chute de la pression de ligne $P_L$, due par exemple à un appel de débit important causé par le remplissage d'un récepteur hydraulique, la vanne VRP se déplace vers la gauche sous l'action du ressort 37, ce qui permet à une portée 50 du tiroir 32 de la vanne VRP d'obstruer momentanément le passage entre les chambres 5 VRP et 6 VRP. Cette action coupe le débit allant à l'échangeur 47, au convertisseur 1, et au circuit de graissage 49. La diminution de débit entraînée par la coupure momentanée du débit à travers l'échangeur 47, le convertisseur 1 et le circuit 49, permet à le pression de ligne $P_L$ de retrouver plus rapidement sa valeur de consigne, et d'opérer ainsi le remplissage du récepteur hydraulique dans de meilleures conditions.

Les différentes vannes de distribution du fluide hydraulique comportent toutes un tiroir de construction symétrique, qui délimite, avec le corps de chaque distributeur, différentes chambres.

La vanne de séquence VA a un tiroir 127, qui délimite des chambres référencées depuis le haut vers le bas, 1, 2, 3, 4, 5, 6, 7, 8, 9 VA.

La vanne de séquence VB a un tiroir 128, qui délimite des chambres référencées depuis le haut vers le bas 1, 2, 3, 4, 5, 6, 7, 8, 9, 10, 11 VB.

La vanne de séquence VC a un tiroir 129, qui délimite des chambres référencées depuis le haut vers le bas 1, 2, 3, 4, 5, 6, 7, 8, 9, 10, 11, 12, 13, 14, 15 VC.

La vanne de progressivité VP a un tiroir 130, qui délimite des chambres référencées depuis le haut vers le bas 1, 2, 3, 4, 5, 6, 7, 8 VP.

La vanne de coupure VC 2/3 a un tiroir 131, qui délimite des chambres référencées depuis le haut vers le bas 1, 2, 3, 4, 5, 6, 7 VC 2/3.

La vanne de coupure VC 3/4 a un tiroir 132, qui délimite des chambres référencées depuis la droite vers la gauche 1, 2, 3, 4, 5, 6, 7, 8 VC 3/4.

La vanne manuelle VM a un tiroir 126, qui délimite des chambres référencées depuis le haut vers le bas 1, 2, 3, 4, 5, 6, 7 VM.

On va maintenant décrire le mode d'actionnement des quatre tiroir 127, 128, 129 et 130 des trois vannes de séquence VA, VB, VC et de la vanne de progressivité VP, qui sont associés aux électrovannes EV1, EV2, EV3, et EV4. La pression régulée de référence $P_1$, qui règne dans le canal 21, est amenée, par le canal 58 dans les chambres 1 des vannes VA, VB, VC, et VP, à travers respectivement les gicleurs d'amortissement 59, 60, 61 et 62. Toutes les chambres 1 de ces vannes communiquent avec l'alimentation en fluide des électrovannes EV1, EV2, EV3 et EV4. Par ailleurs, le potentiomètre hydraulique, constitué par des gicleurs calibrés 65 et 66, et branché en dérivation entre le canal 58, où règne la pression de référence $P_1$, et le 0, crée dans le canal 63 une pression de référence intermédiaire $P_2$. Cette pression de référence intermédiaire $P_2$ a une valeur sensiblement égale à la moitié de celle de la pression de référence $P_1$. Cette pression $P_2$ est conduite par le canal 63 aux dernières chambres des vannes VA, VB, VC, VP, c'est-à-dire aux chambres 9 VA, 11 VB, 15 VC et 8 VP. Par ailleurs, la pression $P_2$ est conduite, par un canal de dérivation 64 du canal 63, dans la chambre 2 VRP, de manière à équilibrer les fuites allant de la chambre 1 VRP, où règne la pression $P_M$, à la chambre 3 VRP, qui est au 0, entre les situations où la pression $P_M$ est égale à $P_1$, et où $P_M$ est sensiblement nulle.

Dans ces conditions, le fonctionnement de l'un quelconque des quatre tiroirs 127, 128, 129 et 130 des vannes VA, VB, VC, et VP, est le suivant : lorsqu'une électrovanne EVi (i = 1 à 4) est excitée, la pression $P_1$ s'exerce sur l'extrémité du tiroir faisant face à l'électrovanne EVi, tandis que la pression $P_2$ est appliquée sur l'autre extrémité. Comme la pression $P_2$ est égale approximativement à la moitié de la pression $P_1$, et que la section du tiroir est constante, ce dernier prend une position en butée éloignée de l'électrovanne EVi. Quand, au contraire, l'électrovanne EVi est au repos, la pression qui s'exerce sur l'extrémité du tiroir faisant face à l'électrovanne EVi est sensiblement nulle, alors que la pression $P_2$ est toujours appliquée sur l'autre extrémité. De ce fait, le tiroir vient en butée sur l'arrière de l'électrovanne EVi. Il convient de noter, au passage, que le débit de fuite du potentiomètre hydraulique constitué par les gicleurs 65 et 66 crée un débit dans le circuit de pression régulée $P_1$, même si toutes les électrovannes EVi sont fermées, ce qui favorise le fonctionnement en régulation de la vanne de régulation de pression VLP 3.

Une disposition alternative de génération de la pression $P_2$, faisant l'objet de la demande EP-A-176 431 est illustrée par la figure 5B. L'alésage de la vanne VLP 3 de section S2 est prolongé, de façon qu'il puisse recevoir un tiroir de régulation additionnel 67. Le corps de ce tiroir est creusé de manière à pouvoir y loger un ressort de rappel 68 taré à une force F'. La pression $P_1$, présente dans la chambre 4 VLP 3 maintenant commune à la vanne VLP 3 et au tiroir 67, agit sur l'extrémité droite de ce tiroir 67. Par ailleurs, la pression $P_1$ est conduite par un canal 174, qui débouche dans le canal 21, dans la chambre 71 du tiroir 67. Le diamètre du corps du tiroir 67 est diminué au niveau de la chambre 71, de manière à former un rétrécissement cylindrique 70, créant ainsi, au droit de la chambre 72, une lèvre de régulation permettant de générer dans la chambre 72, et par conséquent dans le canal 63 déjà défini, la pression $P_2$. En effet, la pression $P_2$ est ramenée par le canal 175 dans la chambre 73, si bien que l'équation d'équilibre du tiroir 67 s'écrit :

$$P_2 \cdot S_2 + F' = P_1 \cdot S_2 \text{ soit } P_2 = P_1 - F'/S_2 \qquad (d)$$

Enfin, la chambre 73 est reliée au 0 par l'intermédiaire d'un gicleur de faible diamètre 69 percé dans la tôle de distribution 52. Ceci permet de créer un débit de régulation permanent favorable à un bon fonctionnement des tiroirs 24 et 67. L'ensemble de régulation constitué autour du tiroir 67 se substitue au diviseur de pression donné par les gicleurs calibrés 65 et 66, et se raccorde au reste du circuit hydraulique par les canaux 21, 58, 63 et 74, déjà mentionnés.

On notera que le pilotage des quatres tiroirs 127, 128, 129 et 130 des trois vannes de séquence VA, VB, VC, ét de la vanne de progressivité VP, se fait de manière entièrement hydraulique, et par la seule action des électrovannes EV1, EV2, EV3, et EV4, qui laissent ou non passer un débit de fuite. Les différents tiroirs 127, 128, 129 et 130 ne sont soumis à l'action d'aucun ressort, ce qui simplifie considérablement le montage, et fiabilise le fonctionnement. Par ailleurs, on remarquera que les différents tiroirs, tous symétriques, peuvent se monter indifféremment dans un sens ou dans l'autre, ce qui permet de simplifier les opérations de montage au cours desquelles il n'est pas nécessaire de vérifier l'orientation des tiroirs.

On va aborder maintenant la description des changements de rapport de vitesses, qui procèdent tous, sauf exception qui sera dûment explicitée, de même principe de base. Lors d'un changement de rapport de vitesses, le remplissage du récepteur hydraulique, qui devient actif pendant le passage, s'opère d'abord à travers un gicleur à grande section de passage en parallèle avec un gicleur à faible section de passage, ce qui correspond pour l'essentiel à une phase de rattrapage des jeux. L'alimentation s'effectue ensuite à travers le seul gicleur à faible section de passage par suppression du circuit d'alimentation à travers le gicleur à grande section de passage, ce qui correspond à une phase de prise de couple contrôlée. Enfin l'alimentation se fait de nouveau à travers le gicleur à grande section de passage en parallèle avec le gicleur à faible section de passage, ce qui correspond à un verrouillage de sécurité. On verra dans la suite, que cette dernière phase est systématiquement réalisée par le retour en position 0 de la vanne VP (vanne EV4 non excitée), ce qui constitue une mesure de sécurité en cas d'éventuelle panne électrique de l'électrovanne EV4.

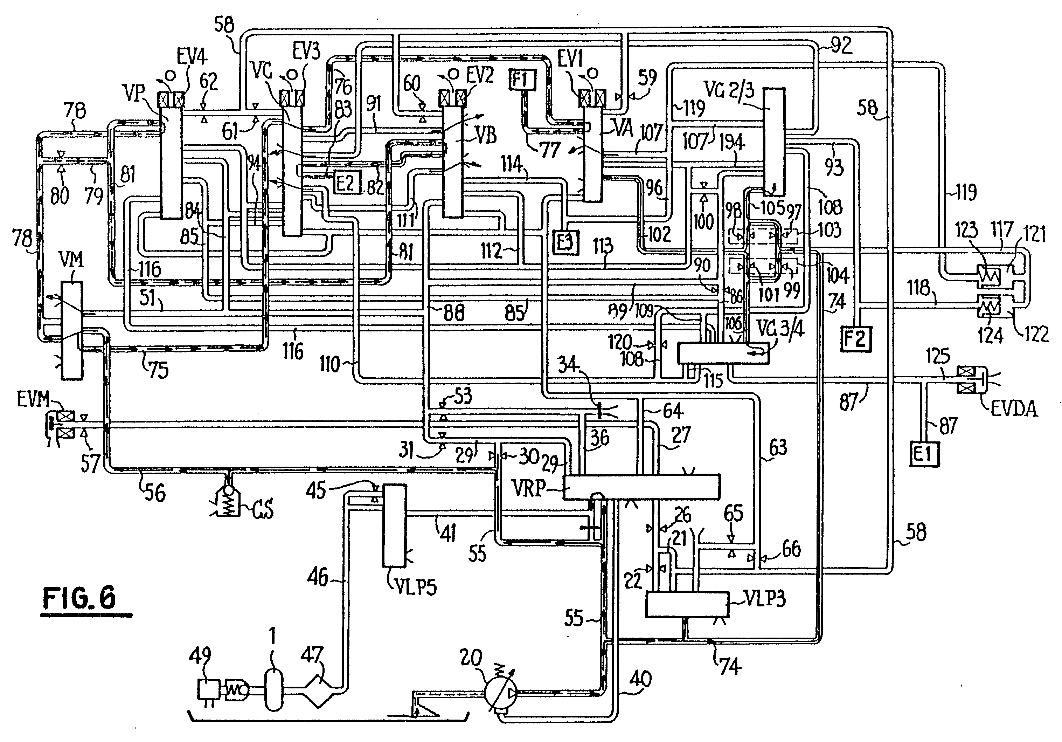

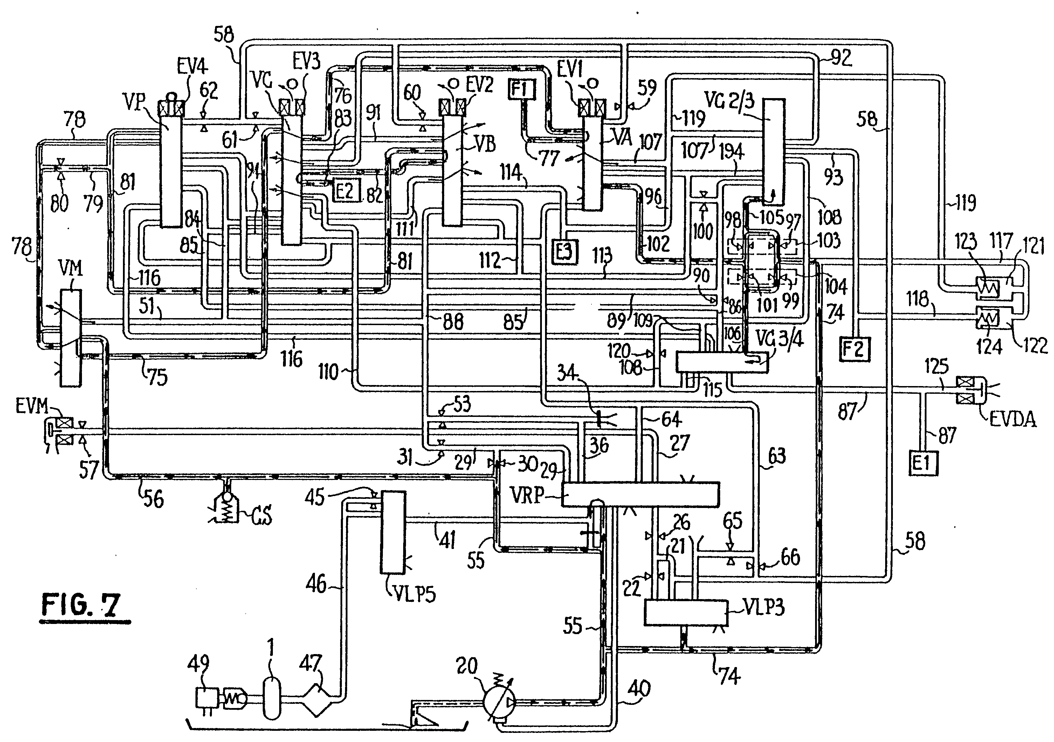

Le passage de la position neutre N à la marche arrière R est schématisé sur les figures 6 et 7. Le déplacement de la vanne manuelle VM de la position N vers la position R permet au fluide hydraulique, présent sous la pression $P_L$ dans le canal 56, d'alimenter le canal 75 en passant de la chambre 4 VM à la chambre 6 VM de la vanne VM, et de rejoindre la chambre 2 VC de la vanne VC. Le tiroir 129 de la vanne VC étant en position 0, les chambres 2 VC et 3 VC de la vanne VC sont en communication, si bien que le

9

canal 76, qui relie la chambre 3 VC de la vanne VC à la chambre 2 VA de la vanne VA (en position 0), est mis en pression. Comme la vanne VA est en position 0, les chambres 2 VA et 3 VA sont en communication, ce qui permet au frein $F_1$ d'être alimenté par le canal 77 ; par conséquent, le frein $F_1$ est alimenté à travers l'équivalent d'un gicleur de grande section de passage, puisqu'aucun gicleur de faible section n'est interposé sur son circuit d'alimentation.

Par ailleurs, la vanne manuelle VM en position R met ses chambres 4 VM et 5 VM en communication, si bien que le canal 81 est alimenté en parallèle, d'une part à travers les chambres 2 VP et 3 VP de la vanne VP en position 0, et d'autre part à travers le gicleur calibré 80 interposé sur le canal 79 branché en parallèle entre les canaux 78 et 81. Enfin, l'alimentation de l'embrayage $E_2$ à partir du canal 81 s'opère à travers les chambres 4 VB et 5 VB de la vanne VB en position 0, le canal 82, les chambres 7 VC et 8 VC de la vanne VC, et enfin le canal 83. Le gicleur calibré 80 n'affectant qu'un canal en parallèle sur le circuit d'alimentation de $E_2$, l'embrayage $E_2$ est par conséquent alimenté à travers l'équivalent d'un gicleur à grande section de passage avec en parallèle un gicleur calibré 80 à faible section de passage.

Le début de la deuxième phase (figure 7) du passage neutre N à la marche arrière R est marqué par le basculement en position 1 du tiroir 130 de la vanne VP sous l'effet de la fermeture de l'électrovanne EV4.

Il en résulte que la communication entre les chambres 2 VP et 3 VP de la vanne VP est interrompue, si bien que le canal 81 n'est plus alimenté qu'à travers le gicleur à faible section de passage 80. Par conséquent, le reste des circuits n'étant pas affecté par le basculement du tiroir 130 de la vanne VP, le remplissage de l'embrayage $E_2$ s'opère désormais à travers le seul gicleur calibré 80 de faible section de passage. La phase de verrouillage est initialisée quand le tiroir 130 de la vanne VP rebascule de nouveau en position 0, rétablissant ainsi l'alimentation de l'embrayage $E_2$ à travers un passage équivalent à une grande section, comme lors de la première phase représentée sur la figure 6.

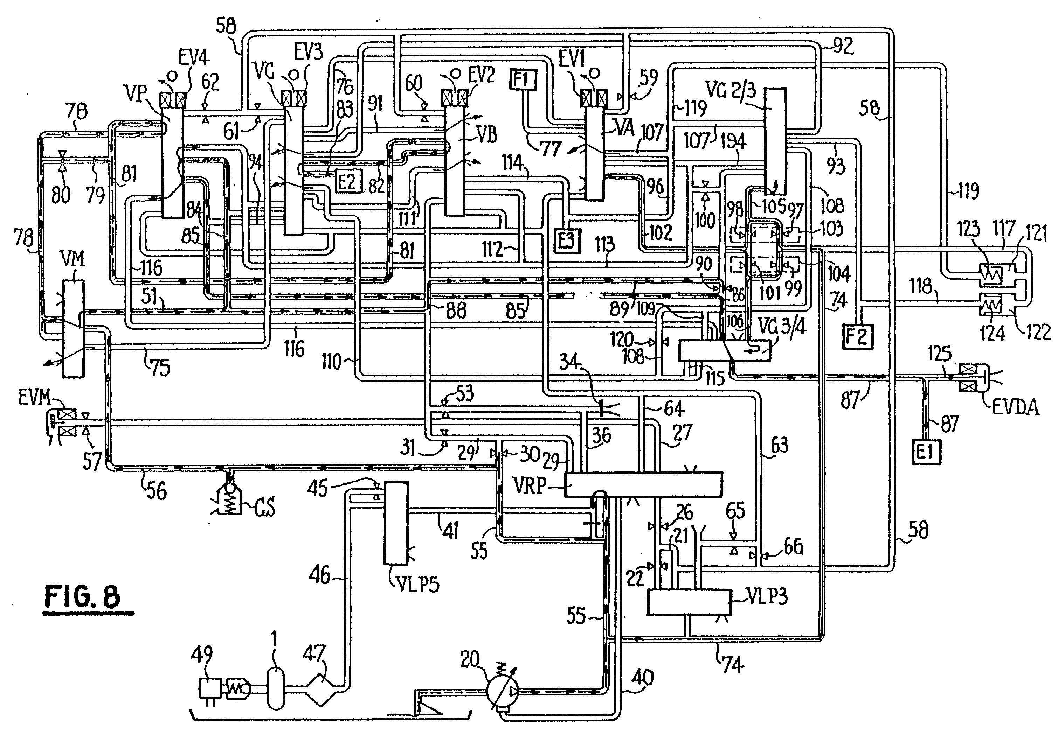

On va considérer maintenant l'état stable de troisième rapport hydraulique de marche avant représenté sur la figure 8 et référencé 3H. Cette troisième hydraulique peut être, soit un état refuge de marche avant en cas de panne du système de commande des électrovannes EVi (i = 1 à 4), soit un rapport normal de marche avant, atteignable depuis le troisième rapport mécanique (3M) dans des conditions particulières de fonctionnement du véhicule, ainsi qu'on le verra plus loin. La vanne nouvelle VM étant en position A, la pression de ligne $P_L$ est disponible dans les chambres 2 VM et 3 VM, à partir de la chambre 4 VM. L'alimentation de l'embrayage $E_1$, à partir de la chambre 2 VM de la vanne VM, s'opère à travers le canal 51, le canal 84, les chambres 5 VP et 6 VP, le canal 85, le canal 86, les chambres 3 VC 3/4 et 4 VC 3/4 de la vanne VC 3/4 en position 0, et enfin le canal 87. D'autre part, l'alimentation de l'embrayage $E_1$ s'effectue en parallèle par le canal 88, le canal 89, et à travers le gicleur calibré de faible section de passage 90 interposé en parallèle entre les canaux 85 et 89. Par ailleurs, l'alimentation de l'embrayage $E_2$ s'effectue, à partir de la chambre 3 VM de la vanne VM, à travers le même circuit que pour son alimentation en position de marche arrière R, en phase de verrouillage.

Ainsi, en rapport établi de troisième hydraulique 3H, les embrayages $E_1$ et $E_2$ sont alimentés par des circuits équivalents à des gicleurs à grande section de passage.

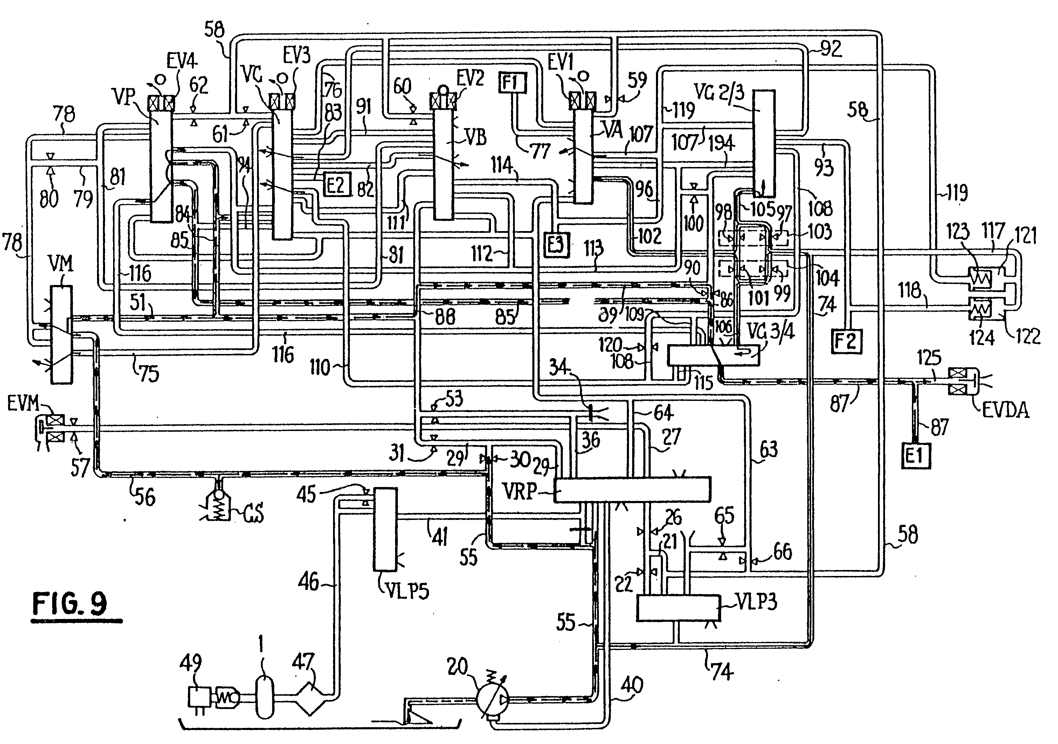

On va examiner maintenant le passage de la position neutre N à la position de premier rapport hydraulique de marche avant (1H). La première phase de ce passage est représentée sur la figure 9. La vanne manuelle VM étant en position A, l'alimentation de l'embrayage $E_1$ s'opère à travers le même circuit que celui décrit ci-dessus pour l'alimentation de l'embrayage $E_1$ en troisième hydraulique (3H).

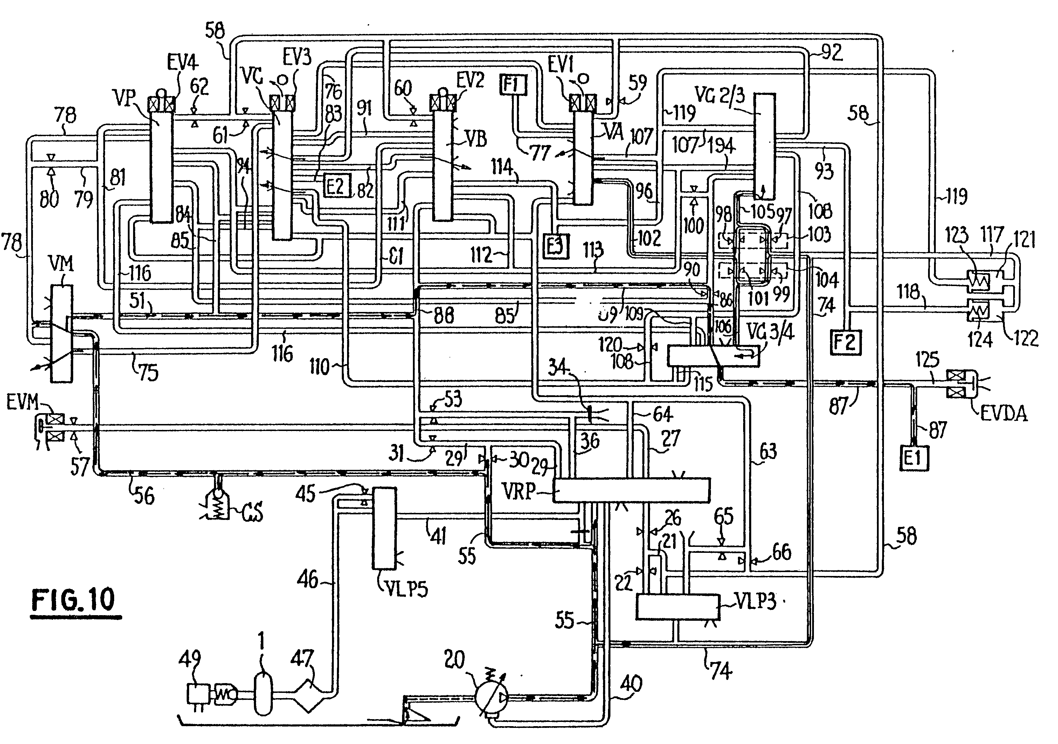

Le début de la deuxième phase du passage neutre au premier rapport hydraulique (1H) est représenté sur la figure 10. Le début de cette deuxième phase est marqué par le basculement de la vanne VP en position 1, provoqué par la fermeture de l'électrovanne EV4. De ce fait, la communication entre les chambres 5 VP et 6 VP de la vanne VP est alors coupée, ce qui entraîne la suppression de l'alimentation de l'embrayage $E_1$ par le canal 85, et ne laisse subsister que l'alimentation de l'embrayage $E_1$ à travers le gicleur calibré à faible section de passage 90. La phase de verrouillage, quant à elle, est initialisée par le rabasculement de la vanne VP en position 0, ce qui rétablit l'alimentation en grande section de passage de l'embrayage $E_1$ par le canal 85, à travers les chambres 5 VP et 6 VP de la vanne VP.

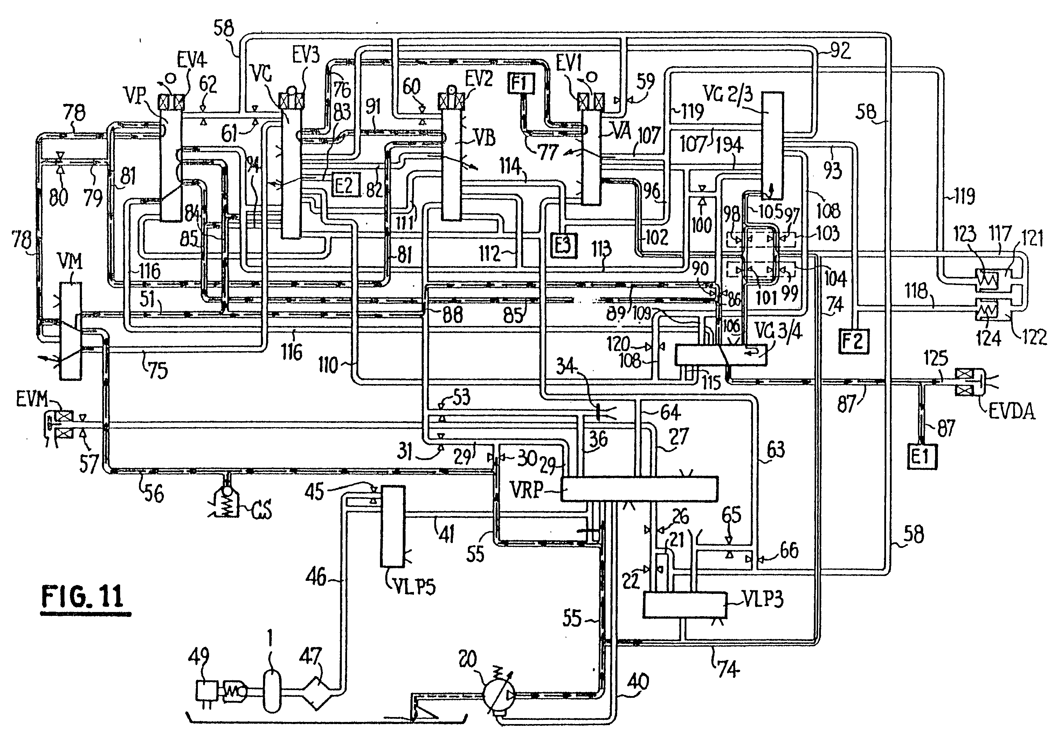

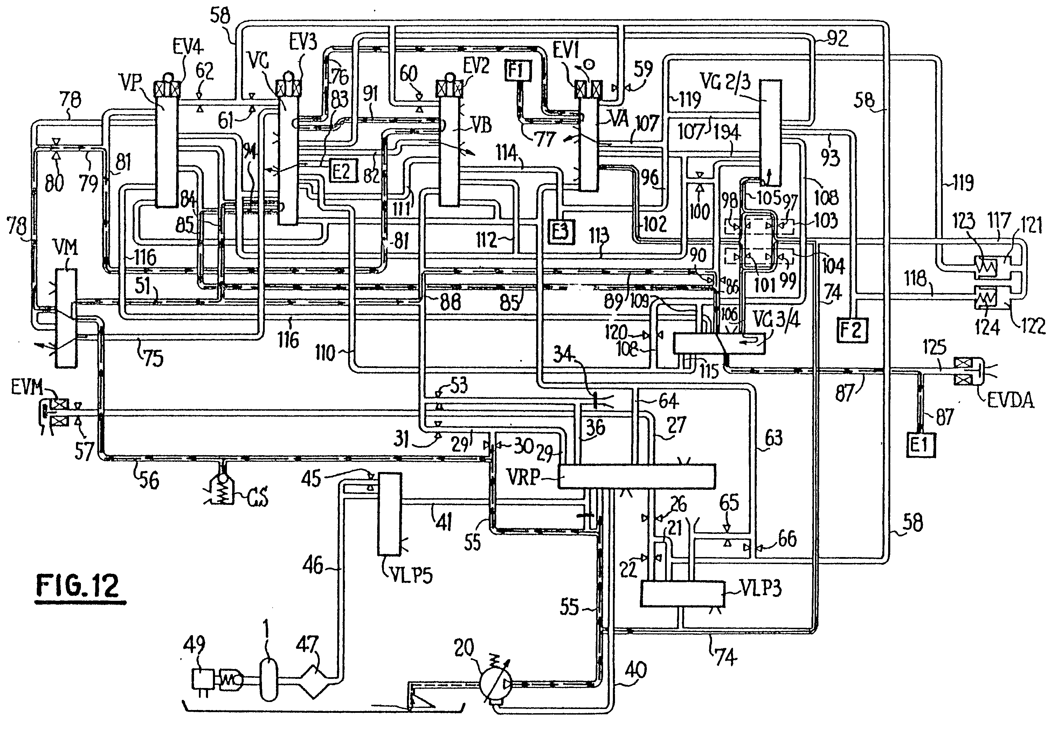

Le passage du premier rapport hydraulique de marche avant (1H) au premier rapport hydraulique de marche avant avec frein moteur (1HFM) est représenté sur les figures 11 et 12. Pour ce qui concerne la première phase du passage première hydraulique (1H) à la première hydraulique avec frein moteur (1HFM), il faut se reporter à la figure 11. Cette première phase est marquée par la transition de l'état (0100) des EVi (i = 1 à 4) à l'état (0110) comme indiqué sur la figure 3A. Dans ce cas, l'alimentation de l'embrayage $E_1$ s'effectue par le même circuit que pour la phase de verrouillage de la première hydraulique (1H). L'alimentation du frein $F_1$ se fait par le canal 81, qui est alimenté en parallèle par les canaux 78 et 79 à travers les chambres 2 VP et 3 VP de la vanne VP en position 0, puis à travers les chambres 4 VB et 3 VB de la vanne VB en position 1, par le canal 91, à travers les chambres 4 VC et 3 VC de la vanne VC également en position 1, par le canal 76, et enfin par les chambres 2 VA et 3 VA de la vanne VA en position 0, et le canal 77. Dans cette première phase, l'embrayage $E_1$ et le frein $F_1$ sont alimentés par des circuits équivalent à des gicleurs de forte section de passage, le frein $F_1$ étant de plus alimenté par le gicleur 80 de faible section de passage, en parallèle entre les canaux 78 et 81.

Au basculement du tiroir 130 de la vanne VP en position 1 qui correspond au début de la deuxième phase représentée sur la figure 12, la communication est coupée entre les chambres 2 VP et 3 VP de la vanne VP. De ce fait, l'alimentation du frein $F_1$ n'est plus assurée qu'à travers le gicleur calibré 80 à faible section de passage, le circuit d'alimentation de l'embrayage $E_1$ demeurant par ailleurs inchangé et équivalant à un gicleur de grande section de passage. Comme précédemment, la phase de verrouillage est initialisée par le rebasculement en position 0 de la vanne VP, ce qui rétablit la communication entre les chambres 2 VP et 3 VP, et réalimente le frein $F_1$ par le même circuit qu'en première phase.

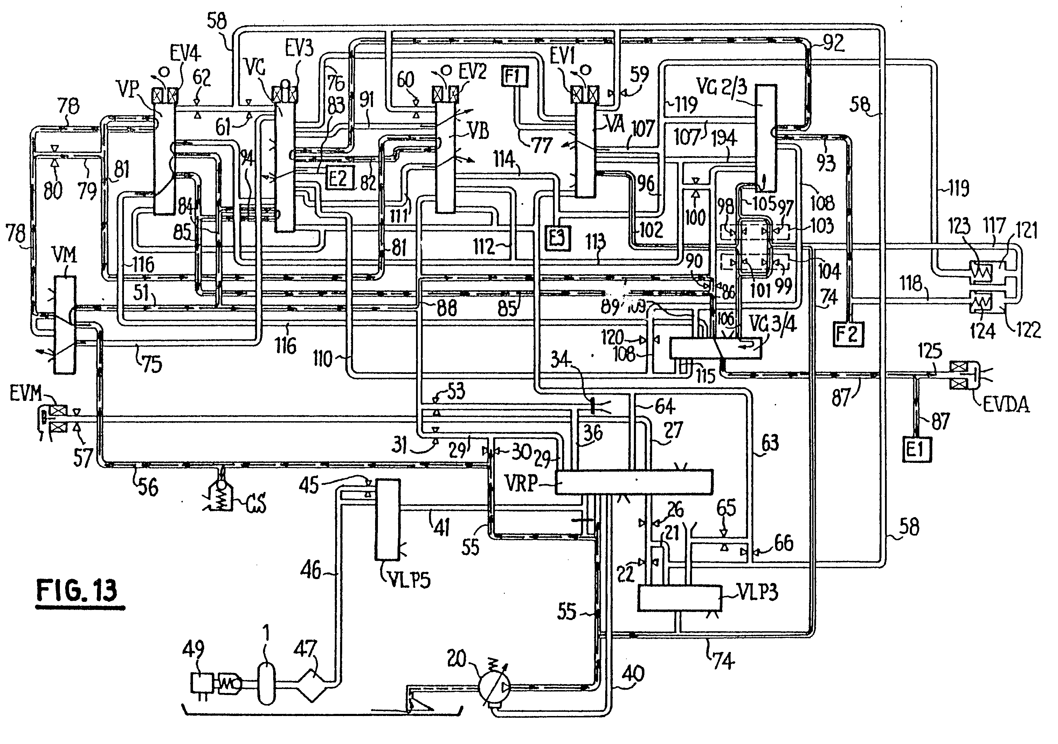

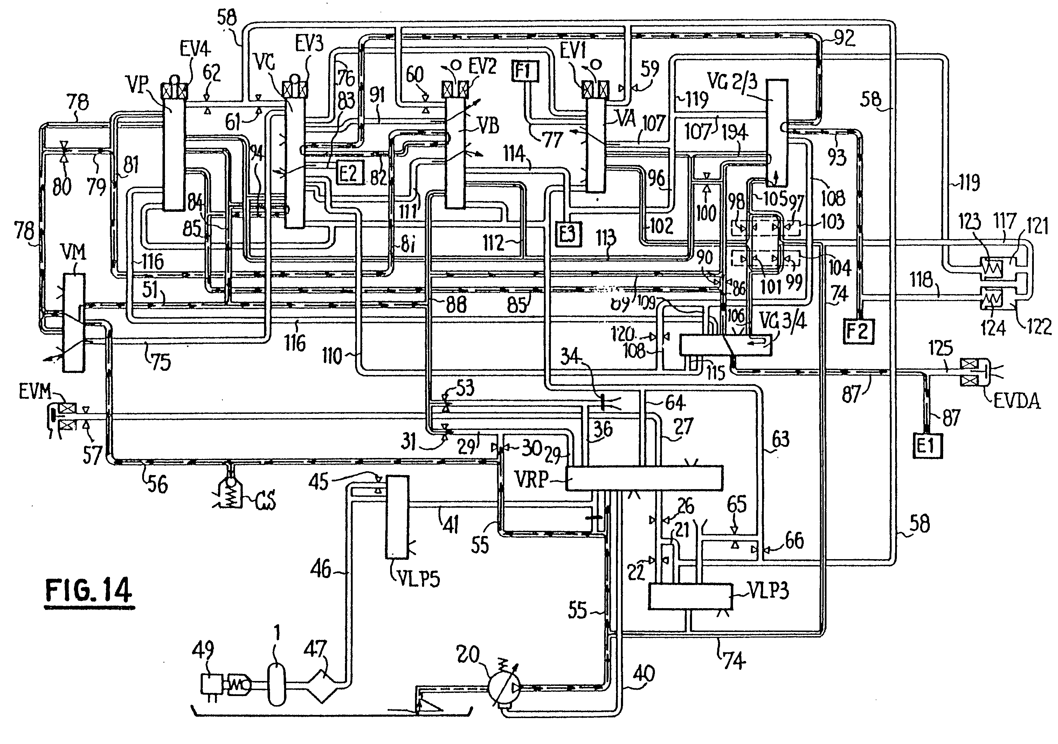

Le passage du premier rapport hydraulique de marche avant (1H) au deuxième rapport hydraulique de marche avant (2H) est représenté sur les figures 13 et 14. La première phase d'un passage première vitesse hydraulique (1H) à la deuxième vitesse hydraulique (2H), qui est représentée sur la figure 13, est marquée par la transition de l'état 0100 des EVi (i = 1 à 4) à l'état 0010. L'alimentation de l'embrayage $E_1$ est toujours assurée en grande section de passage par le même circuit qu'en phase de verrouillage de l'état première hydraulique (1H). L'alimentation du frein $F_2$ se fait par le canal 81, qui est alimenté en parallèle par les canaux 78 et 79 à travers les chambres 2 VP et 3 VP de la vanne VP en position 0, puis à travers les chambres 4 VB et 5 VB de la vanne VB en position 0, puis par le canal 82, les chambres 7 VC et 6 VC de la vanne VC en position 1, le canal 92, les chambres 2 VC 2/3 et 3 VC 2/3 de la vanne VC 2/3 en position 0, et enfin par le canal 93. Dans cette première phase, l'embrayage $E_1$ comme le frein $F_2$ sont alimentés par des circuits équivalant à des gicleurs à grandes sections de passage.

La seconde phase d'un passage première hydraulique (1H) à la deuxième vitesse hydraulique (2H) est représentée sur la figure 14. Le début de cette seconde phase est provoqué par la fermeture de l'électrovanne EV4, c'est-à-dire que les EVi (i = 1 à 4) sont dans l'état 0011. Il s'ensuit le basculement de la vanne VP en position 1. De ce fait, la communication entre les chambres 2 VP et 3 VP de la vanne VP est supprimée, si bien que l'alimentation du frein $F_2$ est limitée par le gicleur de faible section de passage 80, le circuit d'alimentation de l'embrayage $E_1$ demeurant par ailleurs inchangé, et équivalant à un gicleur à grande section de passage. Comme précédemment, la phase de verrouillage est initialisée par le rebasculement de la vanne VP en position 0, ce qui rétablit la communication entre les chambres 2 VP et 3 VP de la vanne VP, et réalimente le frein $F_2$ par le même circuit qu'en première phase, c'est-à-dire en grande section de passage.

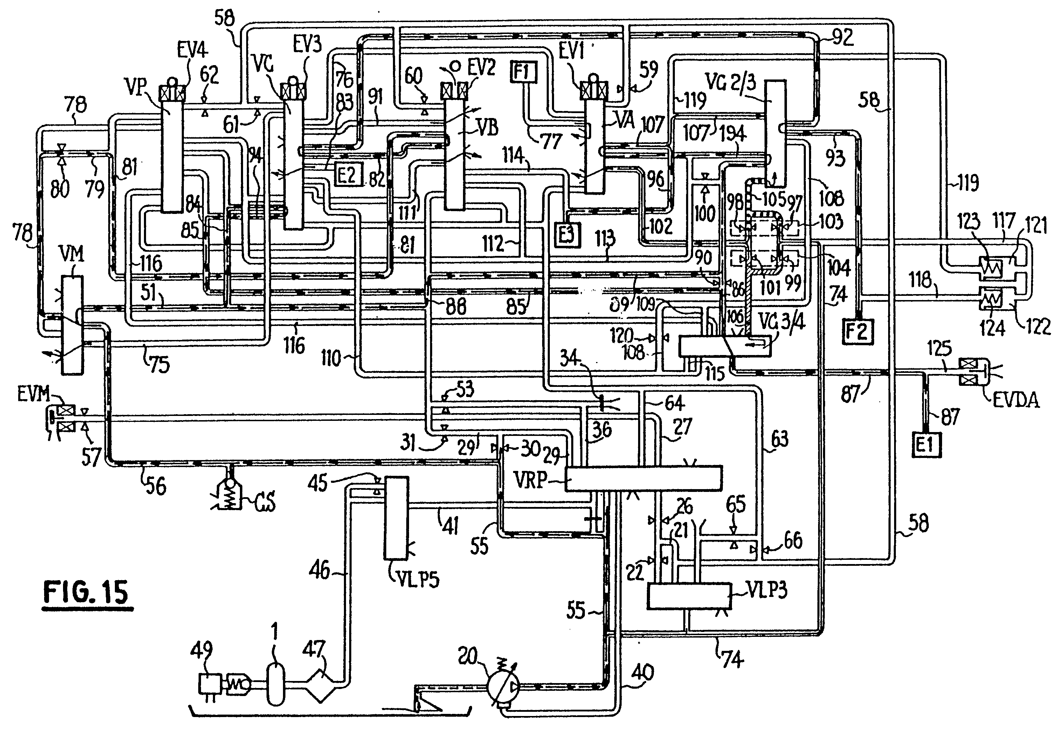

Le passage du deuxième rapport hydraulique de marche avant (2H) au troisième rapport mécanique de marche avant (3M) est représenté sur les figures 15, 16, 17 et 18. Le passage de la deuxième vitesse hydraulique (2H) à la troisième vitesse mécanique (3M) est en fait exécuté en deux temps : en se référant au tableau de la figure 3, on voit que pour faire directement un passage deuxième hydraulique (2H) — troisième mécanique (3M), il faudrait remplir simultanément les embrayages $E_2$ et $R_3$, tout en vidangeant le frein $F_2$ juste à l'instant de commutation du train épicycloïdal 2. Or, le remplissage simultané de deux récepteurs entraîne un appel de débit instantané de fluide hydraulique tel que la pression de ligne $P_L$ en serait fortement perturbée, et que le remplissage ne pourrait s'opérer dans les conditions satisfaisantes et contrôlées. De plus, la montée en pression dans les embrayages $E_2$ ou $E_3$ étant mal contrôlée, il y aurait ambiguïté quant à l'embrayage qui déclenche la commutation, et par conséquent quant à celui dont le remplissage devrait déclencher la vidange du frein $F_2$. Pour contourner cette difficulté, on effectue d'abord un passage deuxième vitesse hydraulique (2H) au troisième rapport de marche avant en première configuration de division de puissance (3DP) en remplissant l'embrayage $E_3$. Lorsque ce passage est terminé, on le complète par un « pontage » au moyen de l'embrayage $E_2$, en verrouillant ainsi le train épicycloïdal 2 qui tourne alors d'un seul bloc.

La figure 15 illustre la première phase du passage deuxième hydraulique (2H) à la troisième mécanique (3M), initialisée par le changement d'état des électrovannes EVi (i = 1 à 4), qui passent de l'état 0010 à l'état 1011. L'embrayage $E_1$ reste alimenté en grande section de passage, à partir de la chambre 2 VM de la vanne VM, par le canal 51, le canal 84, les chambres 13 VC et 14 VC du tiroir VC qui est en position 1, le canal 94, le canal 85, le canal 86, les chambres 4 VC 3/4 et 3 VC 3/4 de la vanne VC 3/4, et enfin le canal 87. L'alimentation du frein $F_2$, quant à elle, s'effectue alors en petite section de passage, ce qui ne présente aucun inconvénient, puisque pendant le passage deuxième hydraulique (2H) — troisième mécanique (3M), le couple transmis par le frein $F_2$ ne fait que diminuer jusqu'à s'annuler. L'alimentation de ce frein $F_2$ se fait à partir de la chambre 2 VM de la vanne VM en empruntant le même réseau que celui emprunté lors de la deuxième phase du passage première hydraulique (1H) — deuxième hydraulique (2H), qui est représentée sur la figure 14. La mise en pression de l'embrayage $E_3$ s'effectue, à partir de la chambre 2 VM de la vanne VM, par le canal 51, le canal 88, le canal 89, les chambres 6 VC 2/3 et 5 VC 2/3 de la vanne VC 2/3 en position 0. L'alimentation de l'embrayage $E_3$ s'effectue également en parallèle par le gicleur à faible section de passage 100, le canal 94, les chambres 5 VA et 6 VA de la vanne VA en position 1, et le canal 96.

La première phase du passage deuxième hydraulique (2H) — troisième mécanique (3M) est également caractérisée par l'activation des potentiomètres hydrauliques 103 et 104, qui sont constitués respectivement, par les gicleurs calibrés 97 et 98 d'une part, et par les gicleurs calibrés 99 et 101 d'autre part. Ces potentiomètres 103 et 104 sont alimentés par le canal 74, où règne la pression de ligne $P_L$, et ils sont mis au 0 par le canal 102, qui débouche dans la chambre 7 VA de la vanne VA, qui ne peut être mise en communication avec la chambre 8 VA, elle-même au 0, que si la vanne VA est en position 1. Or, pour tous les états de 1 à 14 répertoriés dans la dernière colonne de droite du tableau de la figure 3A (les différents états peuvent être également répertoriés par l'état des différentes électrovannes EVi), la vanne VA est en position 0, si bien que les potentiomètres hydrauliques 103 et 104 sont inactivés, ce qui permet d'économiser leur débit de fuite sur les rapports pour lesquels ils sont inutilisés.

Pour les états 15 et suivants, qui correspondent aux diverses configurations liées au rapport de troisième et de quatrième, les potentiomètres 103 et 104 sont activés. Dans ce cas, le potentiomètre 103 donne une pression $P_3$ égale à une fraction de la pression de ligne $P_L$, qui est déterminée par le rapport des sections des gicleurs 97 et 98. Cette pression $P_3$ est appliquée dans la chambre 7 VC 2/3 de la vanne VC 2/3 par l'intermédiaire du canal 105. De même, le potentiomètre 104 donne une pression $P_4$ égale à une fraction de la pression de ligne $P_L$, qui est déterminée par le raport des sections des gicleurs 99 et 101. Cette pression $P_4$ est appliquée dans la chambre 1 VC 3/4 de la vanne de coupure VC 3/4 par l'intermédiaire du canal 106.

La deuxième phase du passage deuxième hydraulique (2H) — troisième mécanique (3M) est représentée sur la figure numéro 16. Cette deuxième phase du passage des vitesses est déclenchée par le basculement de la vanne de coupure VC 2/3, qui fonctionne de la manière suivante : lorsque la pression d'alimentation de l'embrayage $E_3$, qui est également amenée par le canal 107 dans la chambre 1 VC 2/3 de la vanne de coupure VC 2/3, c'est-à-dire sur l'extrémité du tiroir 131 dépasse la valeur $P_3$, la vanne de coupure VC 2/3 bascule en position 1. Ce basculement provoque, d'une part la vidange du frein $F_2$ par le canal 93, les chambres 3 VC 2/3 et 4 VC 2/3 de la vanne de coupure VC 2/3, le canal 108, le canal 109, les chambres 6 VC 3/4 et 7 VC 3/4 de la vanne VC 3/4, le canal 110, les chambres 10 VC et 11 VC de la vanne VC en position 1, le canal 111, les chambres 7 VB et 6 VB de la vanne VB en position 0, cette dernière chambre 6 VB étant au 0, d'autre part l'interruption de la communication entre les chambres 6 VC 2/3 et 5 VC 2/3 de la vanne VC 2/3, ce qui fait que l'alimentation de l'embrayage $E_3$ ne se fait plus que par le gicleur calibré de faible section de passage 100. Il convient de noter que, pendant cette deuxième phase, le circuit d'alimentation de l'embrayage $E_1$ à travers un gicleur équivalant à une grande section de passage n'est pas affecté. A la fin de cette phase, la transmission se trouve sur le troisième rapport de marche avant première configuration de division de puissance (3DP), c'est-à-dire l'état numéro 16 (1011) de la figure 3A.

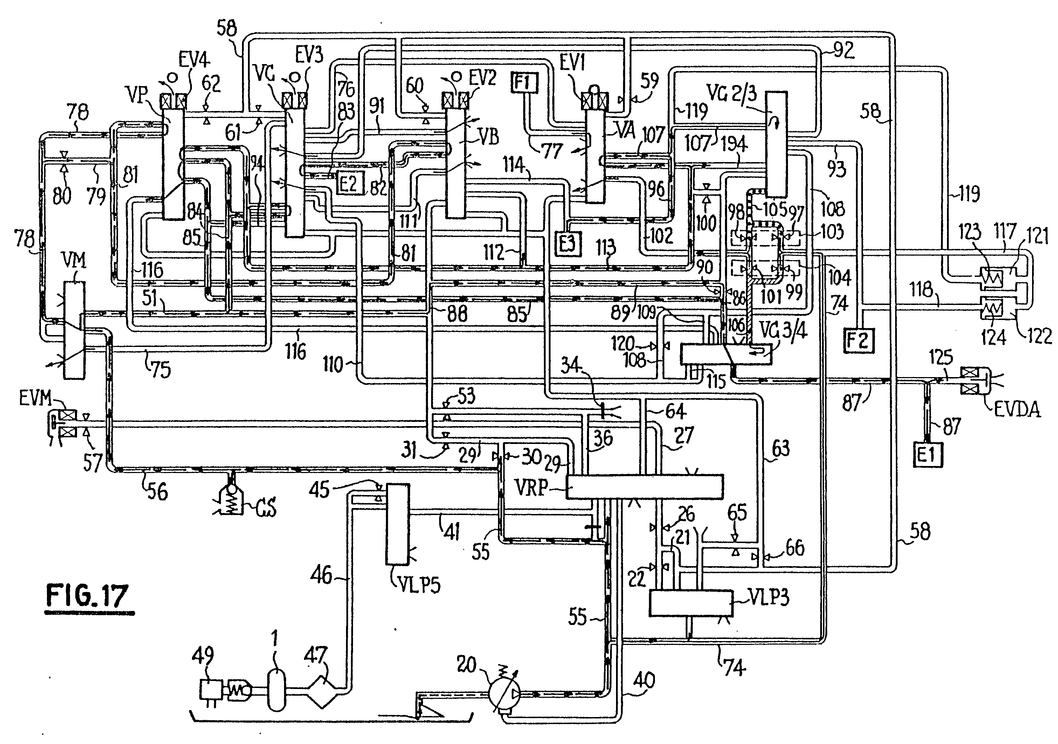

La troisième phase du passage deuxième hydraulique (2H) à la troisième mécanique (3M) est représentée sur la figure 17. Cette troisième phase est initialisée par la transition de l'état numéro 16 des électrovannes EVi (i = 1 à 4), soit (1011), à l'état numéro 17, soit (1000), ce qui déclenche le remplissage de l'embrayage $E_2$ par le même circuit d'alimentation en grande section de passage que celui qui prévaut pour cet embrayage $E_2$ en configuration troisième hydraulique (3H). Les circuits d'alimentation des embrayages $E_1$ et $E_3$ restent inchangés par rapport à la phase précédente.

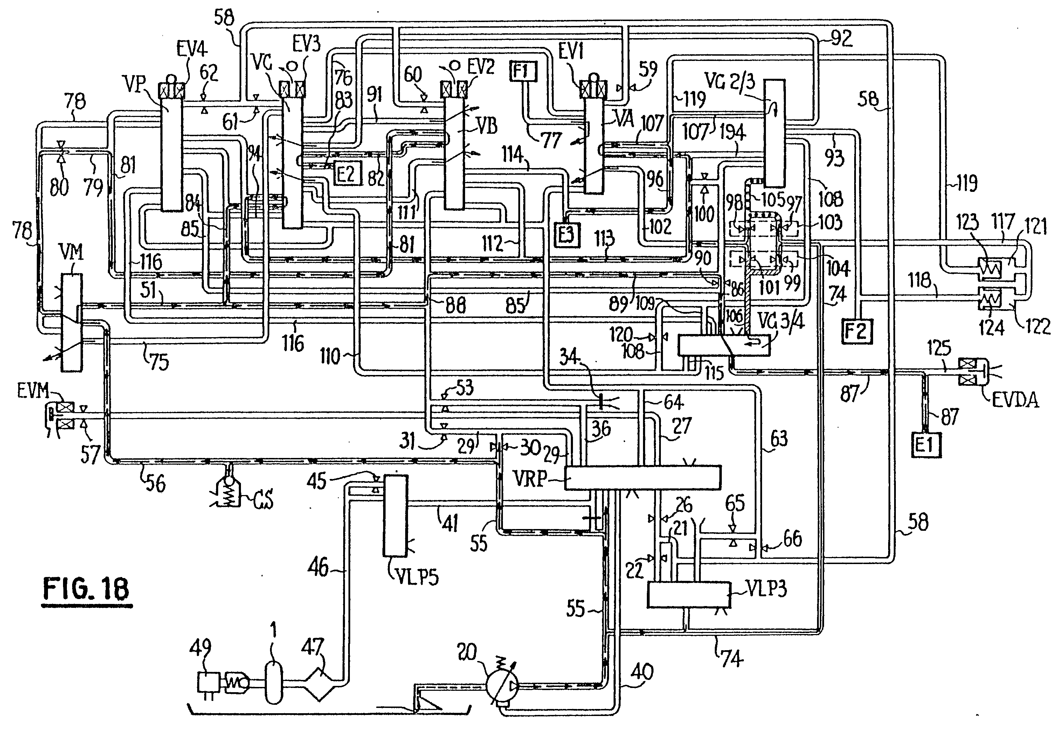

La quatrième phase du passage deuxième hydraulique (2H) à troisième mécanique (3M) est représentée sur la figure 18. Cette quatrième phase est initialisée par le basculement de la vanne VP en position 1 (état numéro 18 des électrovannes EVi, soit 1001), ce qui entraîne l'alimentation de l'embrayage $E_2$ à travers le gicleur de faible section de passage 80, du fait de la suppression de la communication entre les chambres 2 VP et 3 VP de la vanne VP. Ce basculement de la vanne VP entraîne également l'alimentation de l'embrayage $E_1$ à travers le gicleur calibré de faible section de passage 90, en raison de la suppression de la communication entre les chambres 5 VP et 6 VP de la vanne VP. Ce dernier point ne présente pas d'inconvénient dans la mesure où le couple transmis par l'embrayage $E_1$ ne fait que diminuer pendant le « pontage » du train épicycloïdal par l'embrayage $E_2$.

La phase de verrouillage du passage deuxième hydraulique (2H) à troisième mécanique (3M) est marquée par le retour en position 0 de la vanne VP (on a de nouveau l'état numéro 17 des électrovannes EVi), qui rétablit la communication entre les chambres 2 VP et 3 VP de la vanne VP, et les chambres 5 VP et 6 VP, et donc l'alimentation en grande section de passage des embrayages $E_1$ et $E_2$.

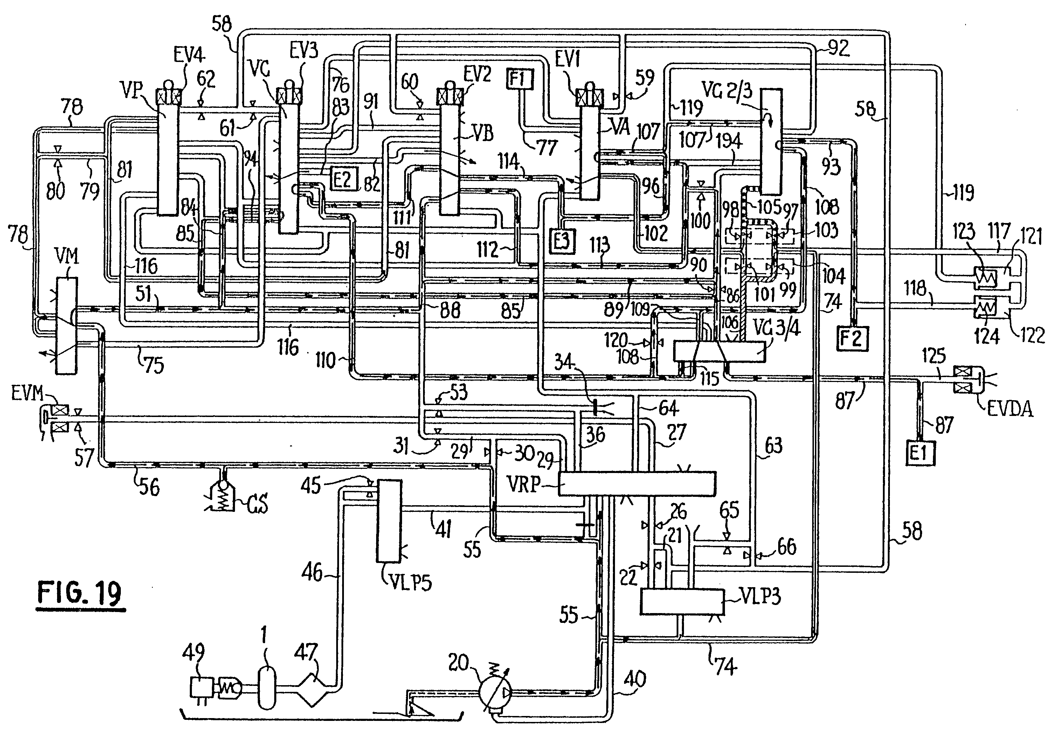

Le changement du troisième rapport mécanique de marche avant (3M) au quatrième rapport mécanique de marche avant (4M) est déclenché par le passage des électrovannes EVi (i = 1 à 4) de l'état numéro 17 (1000) à l'état numéro 21 (1111), caractérisant la première phase de ce changement de rapport, qui est représentée sur la figure 19. Pendant cette première phase, l'embrayage $E_1$ est toujours alimenté en grande section de passage, à partir de la chambre 2 VM de la vanne VM, à travers le canal 51, le canal 84, les chambres 13 VC et 14 VC de la vanne VC en position 1, le canal 94, le canal 85, le canal 86, les chambres 4 VC 3/4 et 3 VC 3/4 de la vanne VC 3/4, et le canal 87. L'embrayage $E_1$ est également alimenté en parallèle par le canal 88, le canal 89, et le gicleur à faible section de passage 90. De même, l'embrayage $E_3$ est toujours alimenté en grande section de passage à partir de la chambre 2 VM de la vanne VM, par le canal 51, le canal 88, les chambres 10 VB et 9 VB de la vanne VB en position 1, le canal 112, le canal 113, le canal 94, les chambres 6 VA et 5 VA de la vanne VA en position 1, le canal 107, et le canal 96. L'embrayage $E_3$ est également alimenté en parallèle par le canal 89, et le gicleur à faible section de passage 100. Le remplissage du frein $F_2$, quant à lui, s'opère en grande section de passage à partir de la chambre 2 VM de la vanne VM, et à travers le même circuit d'alimentation que celui de l'embrayage $E_3$ jusqu'à la jonction du canal 96 avec le canal 114, à travers les chambres 8 VB et 7 VB de la vanne VB en position 1, le canal 111, les chambres 11 VA et 10 VA de la vanne VA en position 1, le canal 110, les chambres 7 VC 3/4 et 6 VC 3/4 de la vanne VC 3/4, le canal 109. Le remplissage du frein $F_2$ se fait également en parallèle par le canal 108 à travers le gicleur calibré à faible section de passage 120, les chambres 4 VC 2/3 et 3 VC 2/3 de la vanne VC 2/3, et le canal 93. Par ailleurs, la pression de remplissage du frein $F_2$ est amenée sur l'extrémité gauche du tiroir 132 de la vanne de coupure VC 3/4, c'est-à-dire dans la chambre 8 VC 3/4 de cette vanne, par le canal 115.

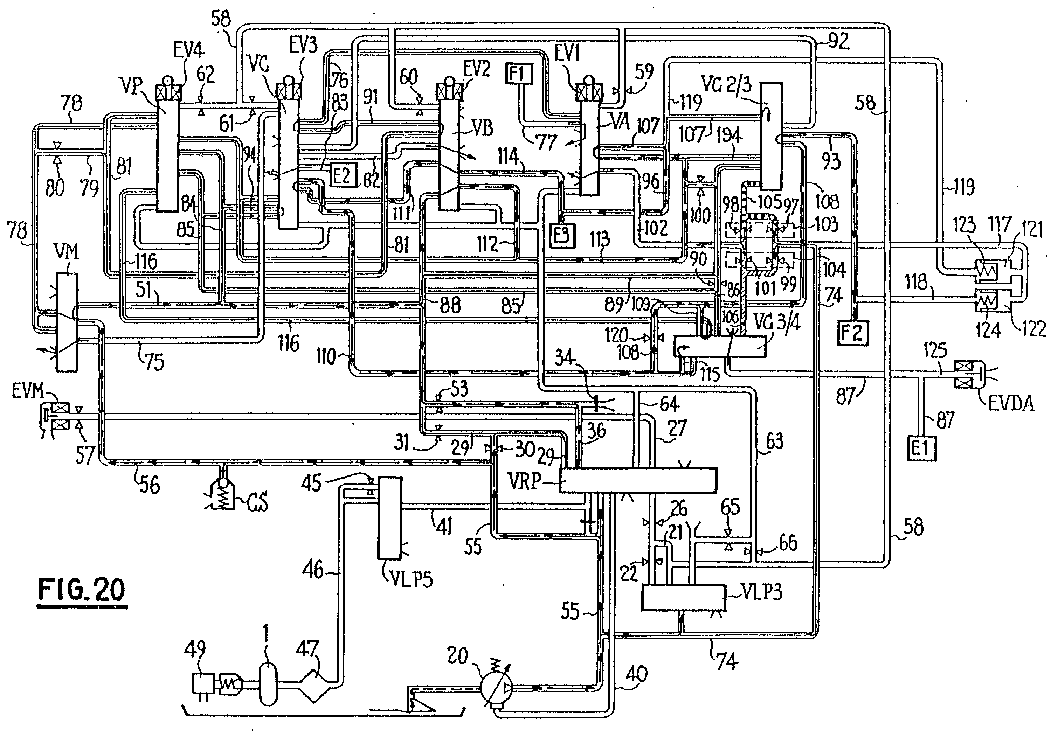

Lorsque la pression de remplissage du frein $F_2$ excède la pression $P_4$, la vanne de coupure VC 3/4 bascule, et initialise la deuxième phase du passage troisième mécanique (3M) à quatrième mécanique (4M), qui est représentée sur la figure 20. Le basculement de la vanne VC 3/4 provoque la mise à 0 de l'embrayage $E_1$ par le canal 87, la chambre 3 VC 3/4 et la chambre 2 VC 3/4 de la vanne VC 3/4, cette dernière chambre étant elle-même au 0. Le basculement de la vanne VC 3/4 provoque également la suppression de l'alimentation en grande section de passage du frein $F_2$. En effet, la communication entre les chambres 7 VC 3/4 et 6 VC 3/4 de la vanne VC 3/4 est supprimée, ce qui ne laisse subsister que l'alimentation par le canal 108 et le gicleur à faible section de passage 120.

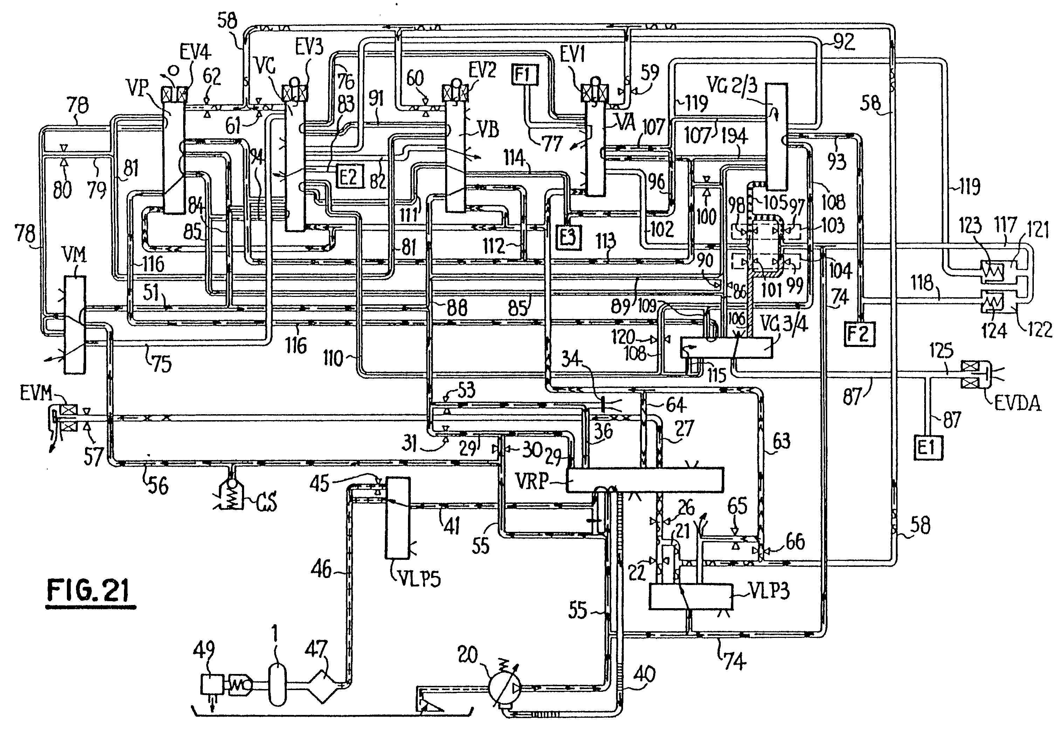

La troisième phase du passage troisième mécanique (3M) à quatrième mécanique (4M) est représentée sur la figure 21. Cette troisième phase est initialisée par le passage de l'état numéro 22 (1111) des électrovannes EVi (i = 1 à 4) à l'état numéro 23 (1110). Le retour de la vanne VP en position 0 rétablit l'alimentation en grande section de passage du frein $F_2$. Cette alimentation se fait à partir de la chambre 2 VM de la vanne VM, les chambres 5 VP, 6 VP et 7 VP de la vanne VP, le canal 116, les chambres 5 VC 3/4 et 6 VC 3/4 de la vanne VC 3/4, le canal 109, le canal 108, les chambres 4 VC 2/3 et 3 VC 2/3 de la vanne VC 2/3 et le canal 93, l'alimentation en parallèle par le gicleur à faible section de passage 120 étant par ailleurs maintenue. De plus, l'alimentation de l'embrayage $E_3$ est également maintenue à travers le circuit établi lors de la phase précédente et correspondant à une grande section de passage.

A ce point de la description de la totalité du réseau hydraulique selon l'invention, on notera que le dispositif est à même de piloter des récepteurs hydrauliques munis d'accumulateurs. A titre d'exemple non limitatif, on a fait figurer, notamment sur la figure 4, des accumulateurs branchés en parallèle sur les circuits d'alimentation du frein $F_2$ et de l'embrayage $E_3$. Chacun de ces accumulateurs est constitué d'un piston 121, 122 sur l'une des faces duquel agit la pression de ligne $P_L$, tandis que l'autre face reçoit la poussée d'un ressort 123, 124 et celle de la pression d'alimentation du récepteur hydraulique correspondant. La pression de ligne $P_L$ est amenée par le canal 117 débouchant dans le canal 74, tandis que la pression d'alimentation du frein $F_2$ arrive par le canal 118 branché sur le canal 93, et que la pression d'alimentation de l'embrayage $E_3$ est amenée par le canal 119 connecté au canal 107.

Après avoir détaillé, comme il vient d'être fait, les passages des vitesses en montant, il convient d'examiner les changements de rapport de vitesses en rétrogradant.

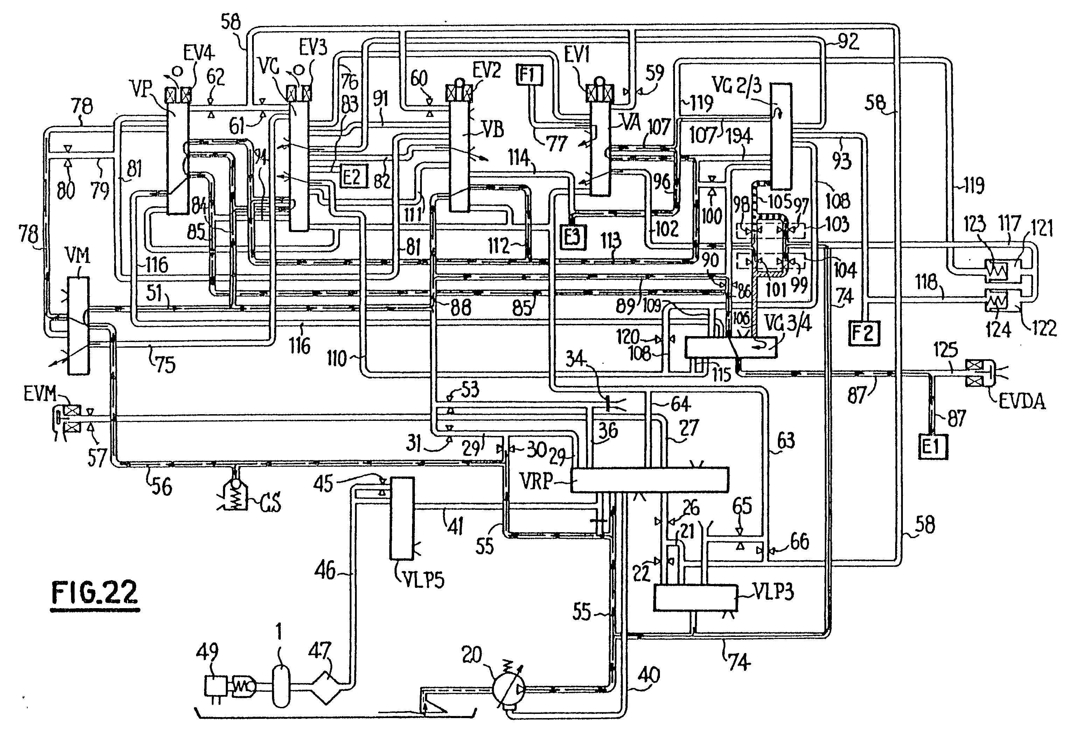

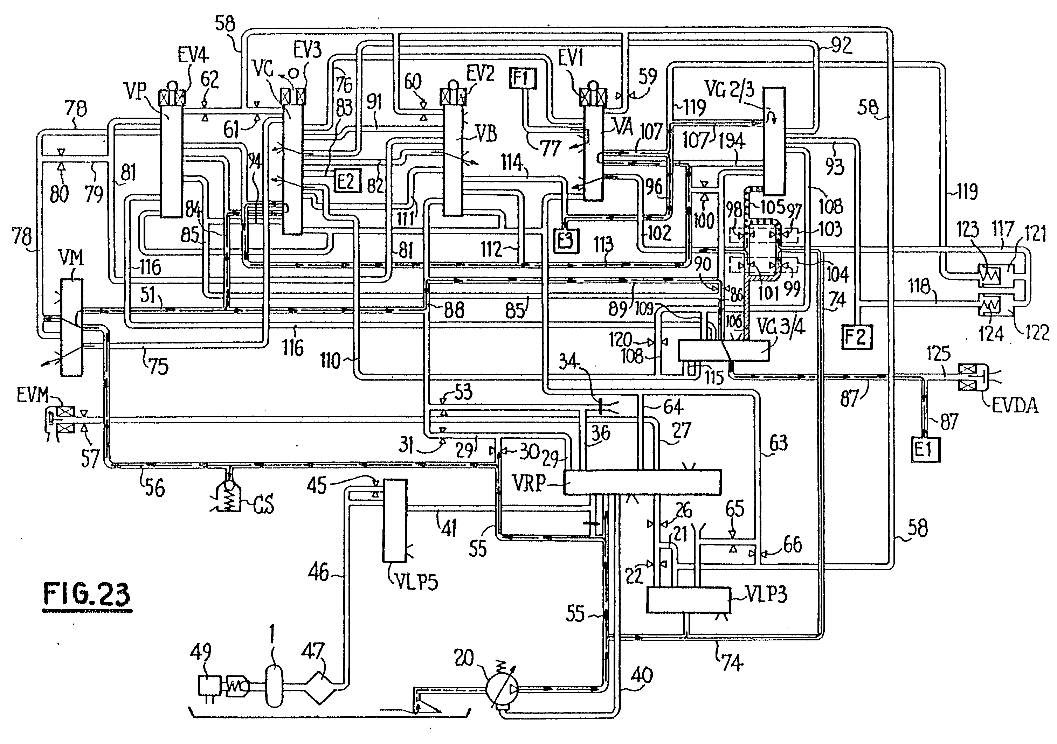

Pour ce qui concerne le passage du quatrième rapport mécanique de marche avant (4M) au troisième rapport mécanique (3M), on observe une décomposition analogue au passage de la deuxième vitesse hydraulique (2H) à la troisième vitesse mécanique (3M). Ce passage s'effectue donc d'abord par un passage quatrième mécanique (4M) à troisième rapport en division de puissance (3 DP), suivi d'un pontage troisième division de puissance (3 DP) à troisième mécanique (3M), cette décomposition du passage étant rendu nécessaire pour les mêmes raisons que celles qui ont été exposées plus haut pour le passage deuxième hydraulique (2H) à troisième mécanique (3M). Mais, alors que pour un passage deuxième hydraulique (2H) à troisième en division de puissance (3 DP) en première configuration, c'est l'embrayage $E_3$ qui est actif, pour un passage quatrième mécanique (4M) à troisième division de puissance (3 DP) en deuxième configuration, c'est l'embrayage $E_1$ qui est actif, ce qui nécessite des séquences particulières représentées sur les figures 22 et 23.

La première phase du passage quatrième mécanique (4M) à troisième mécanique (3M) est représentée sur la figure 22. Cette première phase est initialisée par la transition de l'état numéro 23 (1110) des électrovannes EVi (i = 1 à 4) à l'état numéro 19 (1100). Le basculement de la vanne VC de la position 1 à la position 0 entraîne :

la vidange du frein $F_2$ par le canal 93, les chambres 3 VC 2/3 et 4 VC 2/3 de la vanne VC 2/3, le canal 108, le canal 109, les chambres 6 VC 3/4 et 7 VC 3/4 de la vanne VC 3/4, et en parallèle par le gicleur 120, le canal 110, les chambres 10 VC et 9 VC de la vanne VC, cette dernière chambre étant au 0 ;

le basculement vers la gauche de la vanne VC 3/4 sous la poussée de la pression $P_4$, après la mise à 0 du canal 115, et de la chambre 8 VC 3/4 de la vanne VC 3/4 ;

le remplissage en grande section de passage de l'embrayage $E_1$ à partir de la chambre 2 VM de la vanne VM, par le canal 84, les chambres 5 VP et 6 VP de la vanne VP qui est en position 0, le canal 85, le canal 86, les chambres 4 VC 3/4 et 3 VC 3/4, et le canal 87, en parallèle avec le circuit constitué par le canal 51, le canal 88, le canal 89, et le gicleur 90 à faible section de passage débouchant dans le canal 86 déjà mentionné.

La deuxième phase du passage quatrième mécanique (4M) à troisième mécanique (3M) est représentée sur la figure 23. Cette deuxième phase, correspondant à l'état numéro 20 (1101), est provoquée par le basculement de la vanne VP en position 1, ce qui, en supprimant la communication entre les chambres 5 VP et 6 VP de la vanne VP, laisse seulement subsister l'alimentation de l'embrayage $E_1$ à travers le gicleur calibré de faible section de passage 90.

A partir de là, le rapport troisième mécanique (3M) c'est-à-dire celui de l'état numéro 17 (1000), est rejoint par l'état transitoire numéro 18 (1001) représenté sur la figure 18, ainsi qu'il a déjà été exposé lors de la description du pontage de la troisième division de puissance (3 DP) à la troisième mécanique (3M).

Le passage troisième vitesse mécanique (3M) à la troisième vitesse hydraulique (3H) se fait très simplement par transition de l'état numéro 17 (1000) à l'état numéro 5 (0000), ce qui entraîne le basculement de la vanne VA de la position 1 à la position 0. Le basculement de la vanne VA provoque la vidange de l'embrayage $E_3$ par le canal 96, le canal 107, et les chambres 5 VA et 4 VA de la vanne VA, cette dernière chambre étant elle-même au 0. Ce passage en troisième vitesse hydraulique (3H) permet de bénéficier, dans certaines conditions de charge et de vitesse du véhicule, du filtrage offert par l'interposition du convertisseur hydrocinétique de couple 1 sur la chaîne cinématique entre le moteur et les roues.

Le passage de la troisième vitesse mécanique (3M) à la deuxième vitesse hydraulique (2H) s'effectue par la transition de l'état numéro 17 (1000) à l'état numéro 12 (0010), ce qui provoque, dans une première phase, la vidange de l'embrayage $E_2$ par le canal 83, et les chambres 8 VC et 9 VC de la vanne VC, cette dernière chambre étant elle-même au 0, et enfin le remplissage du frein $F_2$ par le même réseau que celui utilisé lors de la première phase du passage de la première hydraulique (1H) à la deuxième hydraulique (2H).

La deuxième phase du passage, déclenchée par la survenance de l'état numéro 13 sur les électrovannes EVi (0011), est caractérisée par le remplissage du frein $F_2$ au travers d'une faible section de passage, par le même réseau que celui utilisé lors de la deuxième phase du passage première hydraulique (1H) à deuxième hydraulique (2H).

La phase de verrouillage, (retour à l'état numéro 12 (0010)), est en tout point identique à celle étudiée lors du passage première hydraulique (1H) à deuxième hydraulique (2H).

Le passage quatrième vitesse mécanique (4M) à deuxième vitesse hydraulique (2H) s'effectue de manière légèrement différente, selon que le dispositif selon l'invention comprend ou non un système de débrayage à l'arrêt, tel que celui qui a été décrit dans la demande de brevet EP-A-120 779.

Dans le cas où le système de débrayage à l'arrêt n'est pas présent, le passage quatrième mécanique (4M) à deuxième hydraulique (2H) se fait simplement par transition de l'état numéro 23 (1110) à l'état numéro 12 (0010). De ce fait, l'embrayage $E_3$ se vidange par le canal 96, le canal 107, les chambres 5 VB et 4 VB de la vanne VB qui est en position 0, cette dernière chambre 4 VB étant au 0, tandis que l'embrayage $E_1$ se remplit en grande section de passage par le même circuit que celui indiqué sur la figure 22.

En cas de présence d'un système de débrayage à l'arrêt, le dispositif selon l'invention est doté en outre d'une électrovanne de débrayage à l'arrêt EVDA, de type normalement fermé, et qui est disposée conformément à la demande de brevet EP-A-120 779. Cette électrovanne de débrayage à l'arrêt EVDA est branchée à l'extrémité du canal 125, en dérivation sur le canal 87 d'alimentation de l'embrayage $E_1$. Dans ce cas, un passage de la quatrième vitesse mécanique (4M) à la deuxième vitesse hydraulique (2H) s'effectue par transition de l'état numéro 23 (1110), à l'état numéro 14 (0010), qui ne se distingue de l'état numéro 12 (0010) que par le fait que la vanne EVDA est maintenue ouverte, pendant un temps approprié, par le boîtier de commande 17. L'ouverture de la vanne EVDA a pour effet de créer, sur le circuit d'alimentation de l'embrayage $E_1$, un débit de fuite qui retarde la prise de couple sur l'embrayage $E_1$, de manière à détecter convenablement l'instant de synchronisme. Dès que le boîtier 17 cesse d'émettre l'ordre d'ouverture de la vanne EVDA, on retrouve naturellement l'état numéro 12 (0010), et le passage se termine comme précédemment.

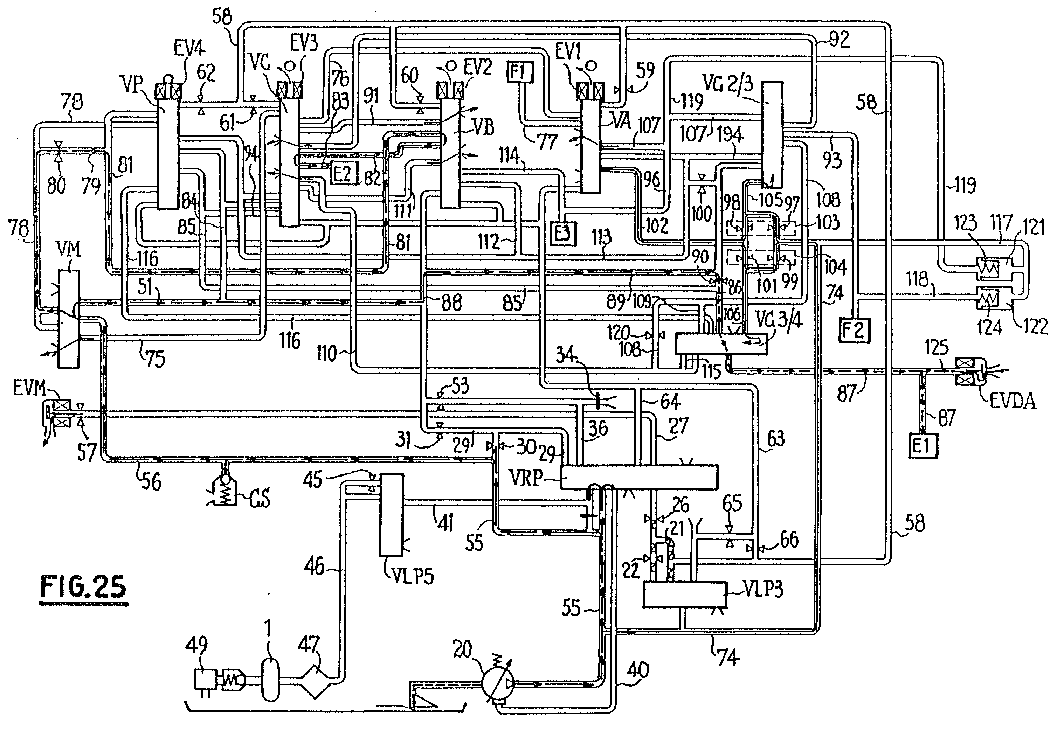

La mise en œuvre du système de débrayage à l'arrêt, selon la demande de brevet EP-A-120 779, nécessite la mesure de la vitesse de la turbine 6. Or, à l'arrêt, sur le rapport première hydraulique (1H), dans lequel seul l'embrayage $E_1$ est alimenté, la vitesse de la turbine 6 n'est pas accessible. En effet, les organes liés à la turbine 6 sont enfermés dans un ensemble 3a tournant à la vitesse du moteur, et dans la cloche 14a de l'embrayage $E_2$, qui interdisent toute mise en place de capteur. Par contre, si l'embrayage $E_2$ est complètement serré, et l'embrayage $E_1$ est partiellement rempli mais glissant conformément aux dispositions de la demande de brevet EP-A-120 779, la cloche 14a tourne à la vitesse de la turbine 6. De ce fait, il est alors facile d'implanter dans le carter 9 un capteur de vitesse visant la cloche 14a, et mesurant sa vitesse. La configuration de débrayage à l'arrêt est décrite par l'état numéro 7 (0001), et elle est représentée sur la figure 25.

La configuration de débrayage à l'arrêt est donc analogue à celle de l'état de troisième hydraulique (3H), à ceci près que la pression dans l'embrayage $E_1$ est modulée par l'ouverture de la vanne EVDA, qui est contrôlée par le boîtier 17, conformément à la demande de brevet EP-A-120 779 et que les circuits d'alimentation en grande section de passage des embrayages $E_1$ et $E_2$ sont supprimés par la vanne VP en position 1, qui coupe la communication entre, respectivement, les chambres 5 VP et 6 VP, et les chambres 2 VP et 3 VP de la vanne VP. De ce fait, il ne reste plus que l'alimentation de l'embrayage $E_1$ à travers le gicleur 12O, et l'alimentation de l'embrayage $E_2$ à travers le gicleur 80.

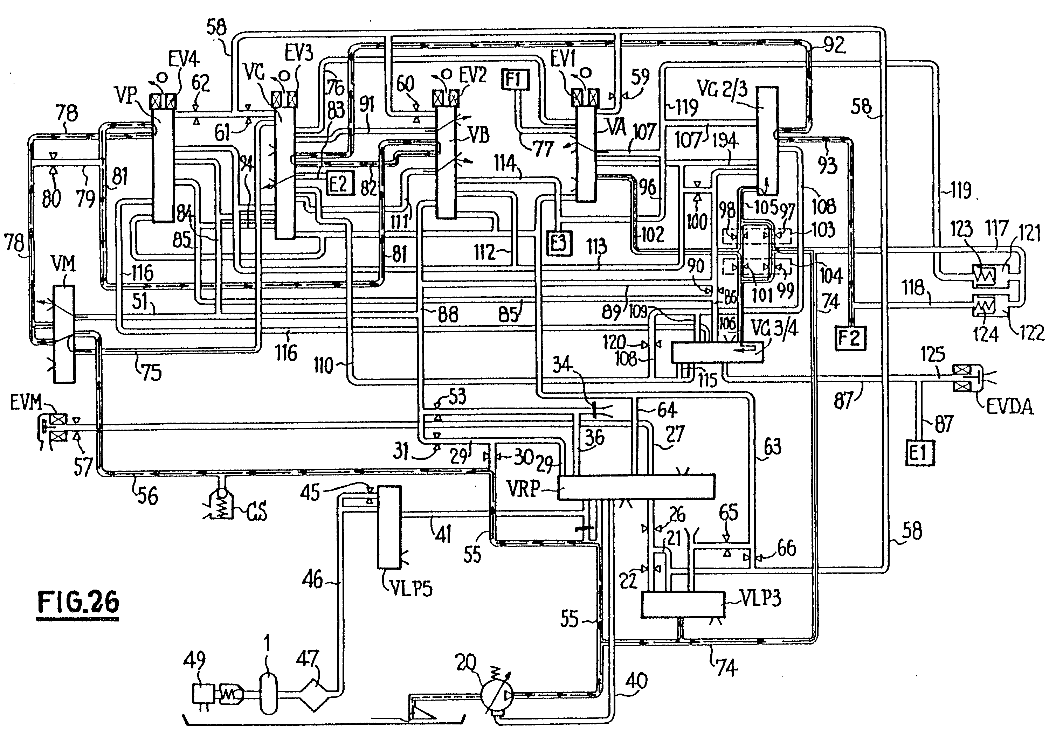

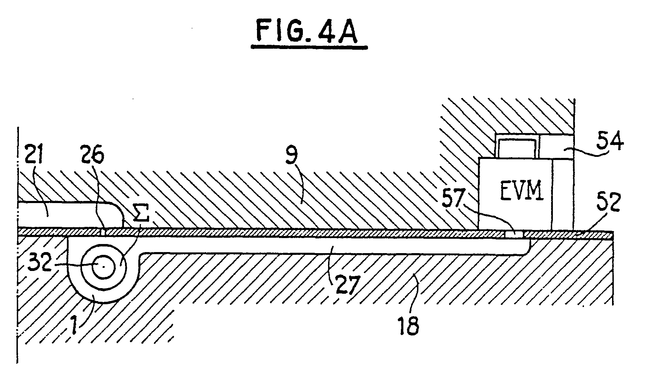

Sur les transmissions automatiques contrôlées de manière traditionnelle, on sait que toute mise intempestive du levier de sélection en position R (marche arrière), alors que le véhicule roule à une vitesse appréciable en marche avant, peut conduite à un accident grave et, en tout état de cause, à la destruction plus ou moins complète de la transmission. Le dispositif selon l'invention permet d'offrir une solution à ce problème de sécurité. En effet, dans ces circonstances, le boîtier 17 ordonne aux électrovannes EVi (i = 1 à 4) de prendre la configuration 0010, dont l'état correspondant est représenté sur la figure 26.

Dans cette configuration, les embrayages $E_1$, $E_2$, $E_3$, et le frein $F_1$ sont mis au 0. L'embrayage $E_1$ est mis au 0 par le canal 87, le canal 89, le canal 88, le canal 51, et la chambre 1 VM de la vanne VM. L'embrayage $E_2$ est mis au 0 par le canal 83, et les chambres 8 VC et 9 VC de la vanne VC. L'embrayage $E_3$ est mis au 0 par le canal 96, le canal 107, et les chambres 5 VA et 4 VA de la vanne VA. Le frein $F_1$ est mis au 0 par le canal 77, les chambres 3 VA et 2 VA de la vanne VA, le canal 76, les chambres 3 VC et 4 VC de la vanne VC, le canal 91, et la chambre 2 VB de la vanne VB.

Dans la configuration représentée sur la figure 26, seul le frein $F_2$ est alimenté, à partir de la chambre

14

5 VM de la vanne VM, par le canal 78, les chambres 3 VP et 2 VP de la vanne VP en position 0, le canal 81, le gicleur 80 branché en parallèle entre les canaux 78 et 81, les chambres 4 VB et 5 VB de la vanne VB en position 0, le canal 82, les chambres 7 VC et 6 VC de la vanne VC en position 1, le canal 92, les chambres 2 VC 2/3 et 3 VC 2/3 de la vanne VC 2/3 en position de repos, et le canal 93. Dans la configuration obtenue avec le seul frein $F_2$ serré, le train épicycloïdal 2 ne dispose d'aucun organe d'entraînement : de ce fait, la transmission se trouve débrayée, bien que le levier de sélection soit sur la position R (marche arrière), ce qui évite tout incident et toute détérioration de la transmission.

## Revendications

1. Dispositif de commande d'une transmission automatique étagée à 4 rapports de marche avant à passage sous couple avec un convertisseur hydrocinétique du couple (1) à amortisseur de torsion intégré, et une marche arrière, du type comportant un train d'engrenages épicycloïdal (2) contrôlé par 3 embrayages ($E_1$, $E_2$, $E_3$) et 2 freins ($F_1$, $F_2$) à commande hydraulique, dispositif comprenant un distributeur hydraulique (18) afin d'alimenter sélectivement les récepteurs, c'est-à-dire les 3 embrayages ($E_1$, $E_2$, $E_3$) et les 2 freins ($F_1$, $F_2$), selon des informations concernant la marche du véhicule équipé de la transmission, caractérisé par le fait que ledit dispositif comporte 4 électrovannes (EV1, EV2, EV3, EV4) dont les moyens de commande sont agencés de façon à utiliser :
— l'un des deux états de l'une de ces électrovannes EV4 pour permettre le remplissage rapide du ou des récepteurs actifs lors du passage des vitesses et l'autre état pour permettre le remplissage progressif du ou des mêmes récepteurs,
— chacun des deux états des trois autres électrovannes (EV1, EV2, EV3) afin d'obtenir les huit combinaisons possibles qui sont toutes utilisées pour les différentes séquences nécessaires lors du passage des vitesses.

2. Dispositif de commande selon la revendication 1 caractérisé en ce que l'état de repos de l'électrovanne EV4 est utilisé pour permettre le verrouillage du ou des récepteurs actifs lors du passage des vitesses, cet état de repos de l'électrovanne EV4 étant également celui qui est utilisé pour le remplissage rapide desdits récepteurs actifs.

3. Dispositif de commande selon l'une des revendications précédentes caractérisé par le fait que lorsque toutes les électrovannes (EV1, EV2, EV3, EV4) sont à l'état de repos (au zéro), éventuellement en cas de panne électrique, la transmission automatique se trouve en configuration de sécurité verrouillée (soit le rapport 3H en position A, soit la marche arrière en position R).

4. Dispositif de commande selon l'une des revendications précédentes caractérisé par le fait qu'il comprend une vanne de progressivité (VP) constituée par un tiroir de distribution (130) à deux positions, ladite vanne (VP) étant commandée par l'électrovanne (EV4).

5. Dispositif de commande selon l'une des revendications 1 à 3 caractérisé par le fait qu'il comprend 3 vannes de séquence (VA, VB, BC) constituées chacune par un tiroir de distribution (127), (128), (129) à deux positions ; les vannes (VA, VB, VC) étant commandées respectivement par les électrovannes (EV1, EV2, EV3).

6. Dispositif de commande selon l'une des revendications 1 à 3 caractérisé en ce qu'il comprend 2 vannes de coupure VC 2/3 et VC 3/4 constituées chacune d'un tiroir de distribution (131) et (132) à deux positions, et qui, en relation avec les vannes de séquences (VA, VB, VC) et à la vanne de progressivité VP, associent respectivement les commutations des récepteurs hydrauliques de commande du train planétaires nécessaires aux passages des vitesses en montant de la deuxième à la troisième, et de la troisième à la quatrième.

7. Dispositif de commande selon l'une des revendications 1 à 3 caractérisé en ce qu'il comprend une vanne manuelle VM, permettant l'alimentation du dispositif en fluide hydraulique pour les différents récepteurs E1, E2, E3, F1 et F2, et constituée par un tiroir (126) à trois positions : marche arrière, neutre et parcage, marche avant (R, N, A).

8. Dispositif de commande selon les revendications 1 à 3 caractérisé en ce que l'alimentation du ou des récepteurs actifs, lors du passage des vitesses, se fait :
— d'abord par un conduit d'alimentation muni d'une restriction à grande section de passage pour permettre le remplissage rapide,
— puis par un conduit d'alimentation muni d'une restriction à faible section de passage pour permettre la progressivité, c'est-à-dire la modulation du couple transmis,
— enfin par un conduit d'alimentation muni d'une restriction à grande section de passage pour assurer le verrouillage.

9. Dispositif de commande selon la revendication 8 caractérisé en ce que le conduit d'alimentation à grande section de passage est constitué par un conduit d'alimentation muni d'un gicleur à grande section de passage, auquel s'ajoute le conduit d'alimentation muni d'un gicleur à faible section de passage, qui est disposé en parallèle ; ce qui permet d'assurer la transition du grand passage au petit passage, et réciproquement, par suppression ou addition du conduit muni d'un gicleur à grande section de passage.

10. Dispositif de commande selon l'une quelconque des revendications 1 à 9 caractérisé en ce qu'au moins un des récepteurs hydrauliques est muni d'un accumulateur (121, 122).

11. Dispositif de commande selon la revendication 10 caractérisé en ce que le circuit d'alimentation de l'embrayage $E_3$ est muni d'un accumulateur constitué par un piston (121) et par un ressort (123).

12. Dispositif de commande selon la revendication 10 caractérisé en ce que le circuit d'alimentation du frein $F_2$ est muni d'un accumulateur constitué par un piston (122) et par un ressort (124).

13. Dispositif de commande selon la revendication 6 caractérisé en ce qu'il comporte des potentiomètres hydrauliques (103, 104) constitués respectivement par des gicleurs (97) et (98), et des gicleurs (99) et (101).

14. Dispositif de commande selon la revendication 13 caractérisé en ce que les canaux sur lesquels sont disposés les gicleurs (97), (98) et (99), (101) sont connectés avec la vanne de séquence VA de façon à ce que les potentiomètres hydrauliques ne soient activés que pour les passages en troisième vitesse et en quatrième vitesse, et pour les états permanents de troisième vitesse et de quatrième vitesse.

15. Dispositif de commande selon l'une quelconque des revendications précédentes caractérisé en ce qu'il comprend une vanne de régulation de pression (VRP) donnant pour le fluide hydraulique alimentant le dispositif de commande :
— un premier domaine de pression de ligne (PL), pour la marche arrière et les positions neutre et parcage, défini par les deux gicleurs calibrés en série (30) et (31),
— un deuxième domaine de pression de ligne (PL) pour les rapports de marche avant ;
la variation de la pression de ligne étant assurée grâce à une électrovanne modulatrice (EVM), qui établit une pression modulée (PM) agissant sur la section différentielle (S) de ladite vanne de régulation de pression (VRP).

16. Dispositif de commande selon la revendication 15 caractérisé en ce que le niveau du deuxième domaine de pression de ligne pour les rapports de marche avant est assuré par l'action de la pression de ligne et sur une petite section s de la vanne de régulation de pression (VRP), le gicleur (53) étant obturé, et le gicleur (34) étant ouvert.

17. Dispositif de commande selon la revendication 15 caractérisé en ce que le niveau du deuxième domaine de pression de ligne pour les rapports de marche avant est assuré par l'action de la pression de ligne sur une grande section S de la vanne de régulation de pression (VRP), le gicleur (53) étant ouvert, et le gicleur (34) étant obturé.

18. Dispositif de commande selon l'une quelconque des revendications précédentes caractérisé en ce qu'il comprend une vanne de régulation de pression (VLP3) assurant une pression de référence $P_1$ du fluide hydraulique, qui alimente l'électrovanne modulatrice (EVM), et agit sur l'une des extrémités de la vanne de progressivité (VP) et des vannes de séquence (VA, VB, VC).

19. Dispositif de commande selon la revendication 18 caractérisé en ce qu'il comporte des gicleurs (66) et (65) en série, qui, à partir de la pression de référence $P_1$, créent une pression de référence intermédiaire $P_2$ du fluide hydraulique, qui agit sur l'une des extrémités de la vanne de progressivité (VP) et des vannes de séquences (VA, VB, VC).

20. Dispositif de commande selon la revendication 18 caractérisé en ce que la vanne de régulation de pression (VLP3) comprend un tiroir de régulation additionnel (67) avec un ressort de rappel (68) qui, à partir de la pression de référence $P_1$, créent une pression de référence intermédiaire $P_2$ du fluide hydraulique, qui agit sur l'une des extrémités de la vanne de progressivité (VP) et des vannes de séquences (VA, VB, VC).

21. Dispositif de commande selon l'une des revendications précédentes caractérisé en ce qu'il comprend une vanne de régulation de pression (VLP5) alimentant en fluide hydraulique l'échangeur (47) du circuit hydraulique, le convertisseur hydrocinétique de couple (1) de la boîte de vitesses, et le circuit de lubrification (49) de la transmission.

22. Dispositif de commande selon les revendications 15 et 21 caractérisé en ce que l'alimentation de la vanne de régulation de pression (VLP5) passe par la vanne de régulation de pression (VRP), et que ladite vanne de régulation de pression (VRP) comporte une portée (50), qui coupe l'alimentation de la vanne de régulation de pression (VLP5), en cas de chute brutale de la pression de ligne $P_L$ causée par un appel de débit important.

23. Dispositif de commande selon l'une quelconque des revendications 15, 16 et 17 caractérisé en ce que l'alimentation du canal (40) du pilotage de la pompe à débit variable (20) passe par la vanne de régulation de pression (VRP) ; et que ladite vanne de régulation de pression (VRP) comporte une portée (39), qui met en communication ledit canal (40) soit avec le canal (55) à la pression de ligne $P_L$, soit avec la pression (0), afin d'assurer la régulation de la pression de ligne $P_L$.

24. Dispositif de commande selon l'une des revendications 19 et 20 caractérisé en ce que la vanne de régulation de pression (VRP) est muni d'une chambre (2VRP), dans laquelle aboutit un canal de dérivation (64) du canal (63), dans laquelle est établie la pression intermédiaire de référence $P_2$.

25. Dispositif de commande selon la revendication 15 caractérisé en ce que l'électrovanne modulatrice (EVM) est disposée verticalement dans le carter (9) au-dessus de la tôle de distribution (52) ; ladite électrovanne modulatrice (EVM) ayant son orifice de fuite au point haut de son circuit hydraulique d'alimentation.

26. Dispositif de commande selon les revendications 4 à 18 prises dans leur ensemble et l'une des revendications 19 et 20 caractérisé en ce que les différents organes du dispositif sont agencés de manière que, lorsque les trois électrovannes (EV1, EV2, EV3) commandant respectivement les vannes de

EP 0 179 683 B1

séquences (VA, VB, VC) sont ouvertes, la vanne manuelle (VM) étant placée en position de marche arrière, le fluide hydraulique, à la pression de ligne ($P_L$) établie par la vanne de régulation de pression (VRP), alimente l'embrayage $E_2$ et le frein $F_1$ nécessaires pour le rapport de marche arrière.

27. Dispositif de commande selon les revendications 4 à 18 prises dans leur ensemble et l'une des revendications 19 à 20 caractérisé en ce que les différents organes du dispositif sont agencés de manière que, lorsque les trois électrovannes (EV1, EV2, EV3) commandant respectivement les vannes de séquences VA, VB, VC sont ouvertes, la vanne manuelle VM étant placée en position neutre ou parcage, le fluide hydraulique, à la pression de ligne ($P_L$) établie par la vanne de régulation de pression (VRP), n'alimente aucun récepteurs.

28. Dispositif de commande selon les revendications 4 à 18 prises dans leur ensemble et l'une des revendications 19 à 20 caractérisé en ce que les différents organes du dispositif sont agencés de manière que, lorsque les trois électrovannes (EV1, EV2, EV3) commandant respectivement les vannes de séquence VA, VB, VC sont ouvertes, la vanne manuelle (VM) étant placée en position de marche avant, le fluide hydraulique, à la pression de ligne ($P_L$) établie par la vanne de régulation de pression (VRP), alimente les embrayages $E_1$ et $E_2$ nécessaires pour le troisième rapport hydraulique de marche avant.

29. Dispositif de commande selon les revendications 4 à 18 prises dans leur ensemble et l'une des revendications 19 à 20 caractérisé en ce que les différents organes du dispositif sont agencés de manière que, lorsque les deux électrovannes (EV1) et (EV3) commandant respectivement les vannes de séquences VA et VC sont ouvertes, et que l'électrovanne EV2 commandant la vanne de séquence VB est fermée, la vanne manuelle VM étant placée en position de marche avant, le fluide hydraulique, à la pression de ligne ($P_L$) établie par la vanne de régulation de pression (VRP), alimente l'embrayage $E_1$ nécessaire pour le premier rapport hydraulique de marche avant.

30. Dispositif de commande selon les revendications 4 à 18 prises dans leur ensemble et l'une des revendications 19 à 20 caractérisé en ce que les différents organes du dispositif sont agencés de manière que, lorsque l'électrovanne (EV1) commandant la vanne de séquence VA est ouverte, et que les électrovannes (EV2) et (EV3) commandant respectivement les vannes de séquences (VB) et (VC) sont fermées, la vanne manuelle VM étant placée en position de marche avant, le fluide hydraulique, à la pression de ligne ($P_L$) établie par la vanne de régulation de pression (VRP), alimente l'embrayage $E_1$ et le frein $F_1$ nécessaires pour le premier rapport hydraulique de marche avant avec frein moteur.

31. Dispositif de commande selon les revendications 4 à 18 prises dans leur ensemble et l'une des revendications 19 à 20 caractérisé en ce que les différents organes du dispositif sont agencés de manière que, lorsque les électrovannes (EV1 et EV2) commandant respectivement les vannes de séquences (VA et VB) sont ouvertes, et que l'électrovanne EV3 commandant la vanne de séquence VC est fermée, la vanne manuelle VM étant placée en position de marche avant, le fluide hydraulique, à la pression de ligne ($P_L$) établie par la vanne de régulation de pression (VRP), alimente l'embrayage $E_1$ et le frein $F_2$ nécessaires au deuxième rapport hydraulique de marche avant.

32. Dispositif de commande selon les revendications 4 à 18 prises dans leur ensemble et l'une des revendications 19 à 20 caractérisé en ce que les différents organes du dispositif sont agencés de manière que, lorsque les électrovannes (EV1 et EV3) commandant respectivement les vannes de séquences (VA) et (VC) sont fermées, et que l'électrovanne EV2 commandant la vanne de séquence (VB) est ouverte, la vanne manuelle VM étant placée en position de marche avant, le fluide hydraulique, à la pression de ligne ($P_L$) établie par la vanne de régulation de pression (VRP), alimente l'embrayage $E_1$ et l'embrayage $E_3$ nécessaires au troisième rapport de marche avant en première configuration de division de puissance.

33. Dispositif de commande selon les revendications 4 à 18 prises dans leur ensemble et l'une des revendications 19 à 20 caractérisé en ce que les différents organes du dispositif sont agencés de manière que, lorsque l'électrovanne EV1 commandant la vanne de séquence (VA) est fermée, et que les électrovannes (EV2 et EV3) commandent respectivement les vannes de séquence VB et VC sont ouvertes, la vanne manuelle VM étant placée en position de marche avant, le fluide hydraulique, à la pression de ligne ($P_L$) établie par la vanne de régulation de pression (VRP), alimente les embrayages $E_1$, $E_2$ et $E_3$, nécessaires au troisième rapport mécanique de marche avant.

34. Dispositif de commande selon les revendications 4 à 18 prises dans leur ensemble et l'une des revendications 19 à 20 caractérisé en ce que les différents organes du dispositif sont agencés de manière que, lorsque les électrovannes (EV1 et EV2) commandant respectivement les vannes de séquences (VA et VB) sont fermées, et que l'électrovanne EV3 commandant la vanne de séquence (VC) est ouverte, la vanne manuelle VM étant placée en position de marche avant, le fluide hydraulique, à la pression de ligne ($P_L$) établie par la vanne de régulation de pression (VRP), alimente les embrayages $E_1$ et $E_3$ nécessaires au troisième rapport de marche avant en deuxième configuration de division de puissance.

35. Dispositif de commande selon les revendications 4 à 18 prises dans leur ensemble et l'une des revendications 19 à 20 caractérisé en ce que les différents organes du dispositif sont agencés de manière que, lorsque les électrovannes (EV1, EV2, EV3) commandant respectivement les vannes de séquences VA, VB, VC sont fermées, la vanne manuelle VM étant placée en position de marche avant, le fluide hydraulique, à la pression de ligne ($P_L$) établie par la vanne de régulation de pression (VRP), alimente l'embrayage $E_1$ et le frein $F_2$ nécessaires au quatrième rapport mécanique de marche avant.

36. Dispositif de commande selon les revendications 4 à 18 prises dans leur ensemble et l'une des revendications 19 et 20 caractérisé en ce que les différents organes du dispositif sont agencés de manière que, pour toute mise en position de marche arrière de la vanne manuelle VM, le véhicule se déplaçant à une vitesse appréciable en marche avant, les électrovannes (EV1 et EV2) commandant respectivement les vannes de séquences VA et VB sont ouvertes, l'électrovanne EV3 commandant la vanne de séquence VC est fermée, afin que le fluide hydraulique à la pression de ligne ($P_L$) établie par la vanne de régulation de la pression (VRP), n'alimente plus que le frein $F_2$, ce qui provoque le débrayage de la transmission.

37. Dispositif de commande selon les revendications 4 à 18 prises dans leur ensemble et l'une des revendications 19 à 20 caractérisé en ce qu'il comporte une électrovanne de débrayage à l'arrêt EVDA monté en dérivation sur l'alimentation de l'embrayage $E_1$.

38. Dispositif de commande selon la revendication 37, caractérisé en ce que le passage du quatrième rapport mécanique de marche avant au deuxième rapport hydraulique se fait au moyen de l'électrovanne de débrayage à l'arrêt (EVDA) qui assure une modulation de la pression d'alimentation de l'embrayage $E_1$.

39. Procédé de commande d'une transmission automatique étagée à quatre rapports de marche avant à passage sous couple comportant une boîte de vitesses susceptibles de définir :
— un troisième rapport mécanique de marche avant lorsque les embrayages $E_1$, $E_2$, et $E_3$ sont alimentés ;
— un deuxième rapport hydraulique de marche avant lorsque l'embrayage $E_1$ et le frein $F_2$ sont alimentés ;
— un quatrième rapport mécanique de marche avant lorsque l'embrayage $E_3$ et le frein $F_2$ sont alimentés ;
caractérisé en ce que le passage au troisième rapport mécanique, soit à partir du deuxième rapport hydraulique, soit à partir du quatrième rapport mécanique, se fait en deux temps ;
— premier temps : passage à un troisième rapport en division de puissance dans lequel les embrayages $E_1$ et $E_3$ sont alimentés ;
— deuxième temps : verrouillage du train épicycloïdal par pontage avec l'embrayage $E_2$.

## Claims

1. An arrangement for controlling a staged automatic transmission with four forward gear ratios with shifting under torque with a hydrokinetic torque converter (1) with integrated torsional damper, and a reverse, of the type comprising an epicyclic gear train (2) controlled by three clutches ($E_1$, $E_2$, $E_3$) and two brakes ($F_1$, $F_2$) which are hydraulically controlled, the arrangement comprising a hydraulic distributor for selectively feeding fluid to the receivers, that is to say the three clutches ($E_1$, $E_2$, $E_3$) and the two brakes ($F_1$, $F_2$), in accordance with items of information concerning operation of the vehicle fitted with the transmission, characterised in that said arrangement comprises four electrically operated valves (EV1, EV2, EV3 and EV4) whose control means are so arranged as to use :
— one of the two states of one of the electrically operated valves EV4 to permit rapid filling of the receiver or receivers which are active when shifting gears and the other state to permit progressive filling of the same receiver or receivers,
— each of the two states of the other three electrically operated valves (EV1, EV2, EV3) in order to obtain the eight possible combinations which are all used for the different sequences required when shifting gears.

2. A control arrangement according to claim 1 characterised in that the rest state of the electrically operated valve EV4 is used to permit locking of the receiver or receivers which are active when shifting gears, said rest state of the electrically operated valve EV4 also being that which is used for rapid filling of said active receivers.

3. A control arrangement according to one of the preceding claims characterised in that when all the electrically operated valves (EV1, EV2, EV3, EV4) are in the rest state (at zero), possibly in the event of an electrical failure, the automatic transmission is in a locked safety configuration (either ratio 3H in position A or reverse in position R).

4. A control arrangement according to one of the preceding claims characterised in that it comprises a progressivity valve (VP) formed by a distribution spool (130) having two positions, the valve (VP) being controlled by the electrically operated valve (EV4).

5. A control arrangement according to one of claims 1 to 3 characterised in that it comprises three sequences valves (VA, VB, VC) each formed by a two-position distribution spool (127, 128, 129) ; the valves (VA, VB, VC) being respectively contorlled by the electrically operated valves (EV1, EV2, EV3).

6. A control arrangement according to one of claims 1 to 3 characterised in that it comprises two cutoff valves VC 2/ and VC 3/4 each formed by a two-position distribution spool (131 and 132 ) and which, in relation with the sequence valves (VA, VB, VC) and the progressivity valve (VP), respectively associate the switching operations in respect of the hydraulic receivers for cntrolling the planetary train which are necessary with the gear shifts in an upward direction from second to third and from third to fourth.

7. A control arrangement according to one of claims 1 to 3 characterised in that it comprises a manual valve (VM) permitting the arrangement to be fed with hydraulic fluid for the different receivers E1,

EP 0 179 683 B1

E2, E3, F1 and F2 and formed by a spool (126) having three positions : reverse, neutral and parking, and forward (R, N, A).

8. A control arrangement according to claims 1 to 3 characterised in that the feed for the receiver or receivers which are active, in the gear shift operation, is effected :
— firstly by way of a feed conduit provided with a restriction of large flow section to permit rapid filling,
— then by may of a feed conduit provided with a restriction of small flow section to permit progressivity, that is to say modulation of the torque transmitted, and
— finally by way of a feed conduit provided with a restriction with a large flow section to provide the locking effect.

9. A control arrangement according to claim 8, characterised in that the feed conduit of large flow section is formed by a feed conduit provided with a jet of large flow section to which is added the feed conduit provided with a jet of small flow section and which is disposed in parallel ; which makes it possible to provide the transition from the large flow to the small flow and vice-versa by the suppression or addition of a conduit provided with a jet of large flow section.

10. A control arrangement according to any one of claims 1 to 9 characterised in that at least one of the hydraulic receivers is provided with an accumulator (121, 122).

11. A control arrangement according to claim 10 characterised in that the feed circuit for the clutch $E_3$ is provided with an accumulator formed by a piston (121) and a spring (123).

12. A control arrangement according to claim 10 characterised in that the feed circuit for the brake $F_2$ is provided with an accumulator formed by a piston (122) and a spring (124).

13. A control arrangement according to claim 6 characterised in that it comprises hydraulic potentiometers (103, 104) respectively formed by jets (97, 98), and jets (99, 101).

14. A control arrangement according to claim 13 characterised in that the conduits in which the jets (97, 98 and 99, 101) are disposed are connected to the sequence valve (VA) in such a way that the hydraulic potentiometers are activated only for shifts to third gear and fourth gear and for the permanent third gear and fourth gear states.

15. A control arrangement according to any of the preceding claims characterised in that it comprises a pressure regulating valve (VRP) which gives for the hydraulic fluid feeding the control arrangement :
— a first range of line pressure (PL) for reverse and neutral and parking positions, defined by the two calibrated jets (30 and 31) in series, and
— a second range of line pressure (PL) for the forward gears ;
the variation in the line pressure being produced by means of an electrically operated modulating valve (EVM) which establishes a modulated pressure (PM) acting on the differential section (S) of said pressure regulating valve (VRP).

16. A control arrangement according to claim 15 characterised in that the level of the second range of line pressure for the forward ratios is produced by the action of the line pressure on a small section (s) of the pressure regulating valve (VRP), the jet (53) being closed and the jet (34) being open.

17. A control arrangement according to claim 15 characterised in that the level of the second range of line pressure for the forward gears is provided by the action of the line pressure on a large section (S) of the pressure regulating valve (VRP), the jet (53) being open and the jet (34) being closed.

18. A control arrangement according to any one of the preceding claims characterised in that it comprises a pressure regulating valve (VLP3) providing a reference pressure $P_1$ of the hydraulic fluid, which feeds the electrically operated modulating valve (EVM) and acts on one of the ends of the progressivity valve (VP) and the sequence valves (VA, VB, VC).

19. A control arrangement according to claim 18 characterised in that it comprises jets (66, 65) in series which, from the reference pressure $P_1$, create an intermediate reference pressure $P_2$ in the hydraulic fluid which acts on one of the ends of the progressivity valve (VP) and the sequence valves (VA, VB, VC).

20. A control arrangement according to claim 18 characterised in that the pressure regulating valve (VLP3) comprises an additional regulating spool (67) with a return spring (68) which, from the reference pressure $P_1$, creates an intermediate reference pressure $P_2$ in the hydraulic fluid which acts on one of the ends of the progressivity valve (VP) and the sequence valves (VA, VB, VC).

21. A control arrangement according to one of the preceding claims characterised in that it comprises a pressure regulating valve (VLP5) feeding hydraulic fluid to the exchanger (47) of the hydraulic circuit, the hydrokinetic torque converter (1) of the gearbox, and the lubricating circuit (49) of the transmission.

22. A control arrangement according to claims 15 and 21 characterised in that the feed for the pressure regulating valve (VLP5) goes by way of the pressure regulating valve (VRP) and that said pressure regulating valve (VRP) comprises a land (50) which cuts off the feed of fluid to the pressure regulating valve (VLP5) in the event of an abrupt drop in the line pressure $P_L$ caused by a demand for a substantial flow.

23. A control arrangement according to any one of claims 15, 16 and 17 characterised in that the feed for the conduit (40) for pilot control of the variable flow pump (20) goes by way of the pressure regulating

19

valve (VRP) and that said pressure regulating valve (VRP) comprises a land (39) which communicates said conduit (40) either with the conduit (55) at the line pressure $P_L$ or the pressure (0) in order to provide for regulation of the line pressure $P_L$.

24. A control arrangement according to one of claims 19 and 20 characterised in that the pressure regulating valve (VRP) is provided with a chamber (2VRP) into which opens a branch conduit (64) from the conduit (63) and in which the intermediate reference pressure $P_2$ is established.

25. A control arrangement according to claim 15 characterised in that the electrically operated modulating valve (EVM) is disposed vertically in the casing (9) above the distribution plate (52), said electrically operated modulating valve (EVM) having its leakage orifice at the high point of its hydraulic feed circuit.

26. A control arrangement according to claims 4 to 18 in combination and one of claims 19 and 20 characterised in that the different members of the arrangement are arranged in such a way that, when the three electrically operated valves (EV1, EV2, EV3) which respectively control the sequence valves (VA, VB, VC) are open, with the manual valve (VM) being disposed in the reverse gear position, the hydraulic fluid at the line pressure $(P_L)$ established by the pressure regulating valve (VRP) feeds the clutch $E_2$ and the brake $F_1$ which are necessary for the reverse gear.

27. A control arrangement according to claims 4 to 18 in combination and one of claims 19 and 20 characterised in that the different members of the arrangement are arranged in such a way that, when the three electrically operated valves (EV1, EV2, EV3) which respectively control the sequence valves (VA, VB, VC) are open, with the manual valve (VM) being disposed in the neutral or parking position, the hydraulic fluid at the line pressure $(P_L)$ established by the pressure regulating valve (VRP) does not feed any receiver.

28. A control arrangement according to claims 4 to 18 in combination and one of claims 19 and 20 characterised in that the different members of the arrangement are arranged in such a way that, when the three electrically operated valves (EV1, EV2, EV3) which respectively control the sequence valves (VA, VB, VC) are open, with the manual valve (VM) being disposed in the forward position, the hydraulic fluid at the line pressure $(P_L)$ established by the pressure regulating valve (VRP) feeds the clutches $E_1$ and $E_2$ which are necessary for the third hydraulic forward gear ratio.

29. A control arrangement according to claims 4 to 18 in combination and one of claims 19 and 20 characterised in that the different members of the arrangement are arranged in such a way that, when the two electrically operated valves (EV1 and EV3) which respectively control the sequence valves VA and VC are open and the electrically operated valve EV2 controlling the sequence valve VB is closed, with the manual valve VM being disposed in the forward position, the hydraulic fluid at the line pressure $(P_L)$ established by the pressure regulating valve (VRP) feeds the clutch $E_1$ required for the first hydraulic forward gear ratio.

30. A control arrangement according to claims 4 to 18 in combination and one of claims 19 and 20 characterised in that the different members of the arrangement are arranged in such a way that, when the electrically operated valve (EV1) which controls the sequence valve VA is open and the electrically operated valves (EV2 and EV3) which respectively control the sequence valves (VB and VC) are closed, with the manual valve (VM) being disposed in the forward position, the hydraulic fluid at the line pressure $(P_L)$ established by the pressure regulating valve (VRP) feeds the clutch $E_1$ and the brake $F_1$ which are required for the first hydraulic forward gear ratio with engine braking.

31. A control arrangement according to claims 4 to 18 in combination and one of claims 19 and 20 characterised in that the different members of the arrangement are arranged in such a way that, when the electrically operated valves (EV1 and EV2) which respectively control the sequence valves (VA and VB) are open and the electrically operated valve EV3 which controls the sequence valve VC is closed, with the manual valve VM being disposed in the forward position, the hydraulic fluid at the line pressure $(P_L)$ established by the pressure regulating valve (VRP) feeds the clutch $E_1$ and the brake $F_2$ which are required for the second hydraulic forward gear ratio.

32. A control arrangement according to claims 4 to 18 in combination and one of claims 19 and 20 characterised in that the different members of the arrangement are arranged in such a way that, when the electrically operated valves (EV1 and EV3) which respectively control the sequence valves (VA and VC) are closed and the electrically operated valve EV2 which controls the sequence valve (VB) is open, with the manual valve VM being disposed in the forward position, the hydraulic fluid at the line pressure $(P_L)$ established by the pressure regulating valve (VRP) feeds the clutch $E_1$ and the clutch E3 which are required for the third forward gear ratio in a first configuration of power division.

33. A control arrangement according to claims 4 to 18 in combination and one of claims 19 and 20 characterised in that the different members of the arrangement are arranged in such a way that, when the electrically operated valve EV1 controlling the sequence valve (VA) is closed and the electrically operated valves (EV2 and EV3) which respectively control the sequence valves VB and VC are open, the manual valve VM being in the forward position, the hydraulic fluid at the line pressure $(P_L)$ established by the pressure regulating valve (VRP) feeds the clutches $E_1$, $E_2$ and $E_3$ which are required for the third mechanical forward gear ratio.

34. A control arrangement according to claims 4 to 18 in combination and one of claims 19 and 20 characterised in that the different members of the arrangement are arranged in such a way that, when the electrically operated valves (EV1 and EV2) which respectively control the sequence valves (VA and VB) are closed and the electrically operated valve (EV3) controlling the sequence valve (VC) is open, with the manual valve VM being disposed in the forward position, the hydraulic fluid at the line pressure ($P_L$) established by the pressure regulating valve (VRP) feeds the clutches $E_1$ end $E_3$ which are required for the third forward gear ratio in a second configuration of power division.

35. A control arrangement according to claims 4 to 18 in combination and one of claims 19 and 20 characterised in that the different members of the arrangement are arranged in such a way that, when the electrically operated valves (EV1, EV2, EV3) which respectively control the sequence valves VA, VB, VC are closed, with the manual valve VM being disposed in the forward position, the hydraulic fluid at the line pressure ($P_L$) established by the pressure regulating valve (VRP) feeds the clutch $E_1$ and the brake $F_2$ which are required for the fourth mechanical forward gear ratio.

36. A control arrangement according to claims 4 to 18 in combination and one of claims 19 and 20 characterised in that the different members of the arrangement are arranged in such a way that, whenever the manual valve VM is set to the reverse gear position, with the vehicle moving at an appreciable speed in a forward direction, the electrically operated valves (EV1 and EV2) which respectively control the sequence valves VA and VB are opened and the electrically operated valve EV3 controlling the sequence valve VC is closed, in order for the hydraulic fluid at the line pressure ($P_L$) established by the pressure regulating valve (VRP) then to feed fluid only to the brake $F_2$, which causes disengagement of the transmission.

37. A control arrangement according to claims 4 to 18 in combination and one of claims 19 and 20 characterised in that it comprises an electrically operated valve EVDA for clutch disengagement in the stopped condition, which is mounted in branched relationship on the feed for the clutch $E_1$.

38. A control arrangement according to claim 37 characterised in that the shift from the fourth mechanical forward gear ratio to the second hydraulic ratio is effected by means of the electrically operated valve (EVDA) for disengagement in the stopped condition, which provides modulation of the feed pressure for the clutch $E_1$.

39. A process for controlling a staged automatic transmission with four forward gear ratios with shifting under torque comprising a gearbox capable of defining :
— a third mechanical forward gear ratio when the clutches $E_1$, $E_2$ and $E_3$ are fed with fluid ;
— a second hydraulic forward gear ratio when the clutch $E_1$ and the brake F2 are fed with fluid ;
— a fourth mechanical forward gear ratio when the clutch $E_3$ and the brake $F_2$ are fed with fluid ;
characterised in that the shift to the third mechanical gear ratio either from the second hydraulic ratio or from the fourth mechanical ratio is effected in two phases :
— first phase : shift to a third power division ratio in which the clutches $E_1$ and $E_3$ are fed with fluid ; and
— second phase : locking of the epicyclic train by bridging with the clutch $E_2$.

**Patentansprüche**

1. Steuervorrichtung eines automatischen Getriebes mit vier Vorwärtsgängen, die mittels eines hydrodynamischen Drehmomentwandlers (1) mit integrierter Torsionsdämpfung schaltbar sind und mit einem Rückwärtsgang und das ein Umlaufgetriebe (2) aufweist, das von drei Kupplungen ($E_1$, $E_2$, $E_3$) und zwei hydraulisch wirkenden Bremsen ($F_1$, $F_2$) gesteuert wird und die einen hydraulischen Verteiler (18) aufweist zur wahlweisen Versorgung von Behältern, d. h. der drei Kupplungen ($E_1$, $E_2$, $E_3$) und den Bremsen ($F_1$, $F_2$) entsprechend dem Fahrzustand des mit dem Getriebe versehenen Fahrzeugs, dadurch gekennzeichnet, daß die Vorrichtung vier Elektroventile aufweist (EV1, EV2, EV3, EV4), deren Steueranordnungen so ausgestaltet sind, daß sie verwenden :
— einen von zwei Zuständen eines der Elektroventile (EV4), um das schnelle Füllen des oder der aktiven Behählter während des Schaltens zu ermöglichen und den anderen Zustand, um das progressive Füllen desselben oder derselben Behälter zu ermöglichen,
— jeden der zwei Zustände der drei anderen Elektroventile (EV1, EV2, EV3) zum Erzielen der acht möglichen Kombinationen, die alle verwendet werden während der verschiedenen Folgen, die für das Schalten notwendig sind.

2. Steuervorrichtung nach Anspruch 1, dadurch gekennzeichnet, daß der Ruhezustand des Elektroventils (EV4) verwendet wird, um das Verriegeln des oder der aktiven Behälter zur ermöglichen während des Schaltens, wobei dieser Ruhezustand des Elektroventils (EV4) auch derjenige ist, der zum schnellen Füllen der aktiven Behälter verwendet wird.

3. Steuervorrichtung nach einem der vorhergehenden Ansprüche, dadurch gekennzeichnet, daß während des Ruhezustandes (Null-Zustand) aller Elektroventile (EV1, EV2, EV3, EV4), z. B. im Falle einer elektrischen Panne, das automatische Getriebe sich im verriegelten Sicherheitszustand befindet (entweder bei der Übersetzung 3H in Stellung A oder beim Rückwärtsgang in Stellung R).

4. Steuervorrichtung nach einem der vorhergehenden Ansprüche, dadurch gekennzeichnet, daß sie ein Progressivitätsventil (VP) aufweist, das aus einem Verteilschieber (130) mit zwei Stellungen besteht und das durch das Elektroventil (EV4) gesteuert wird.

5. Steuervorrichtung nach einem der Ansprüche 1 bis 3, dadurch gekennzeichnet, daß es drei Folgeventile (VA, VB, VC) aufweist, deren jedes aus einem Verteilschieber (127, 128, 129) mit zwei Stellungen besteht, wobei die Ventile (VA, VB, VC) von den entsprechenden Elektroventilen (EV1, EV2, EV3) gesteuert werden.

6. Steuervorrichtung nach einem der Ansprüche 1 bis 3, dadurch gekennzeichnet, daß es zwei Trennventile (VC2/3 und VC3/4) aufweist, deren jedes aus einem Vertielschieber (131 und 132) mit zwei Stellungen besteht und die zusammen mit den Folgeventilen (VA, VB, VC) und dem Progressivitätsventil (VP) die entsprechenden Umschaltungen der hydraulischen Steuerbehälter für die Planetenräder bewirken, die erforderlich sind zum Hochschalten vom zweiten in den dritten und vom dritten in den vierten Gang.

7. Steuervorrichtung nach einem der Ansprüche 1 bis 3, dadurch gekennzeichnet, daß sie ein manuelles Ventil (VM) aufweist, das die Versorgung der Vorrichtung mit einem hydraulischen Fluid für die verschiedenen Behälter (E1, E2, E3, F1 und F2) ermöglicht und das aus einem Schieber (126) mit drei Stellungen besteht : Rückwärtsgang, Neutral- und Parkstellung, Vorwärtsgang (R, N, A).

8. Steuervorrichtung nach Ansprüchen 1 bis 3, dadurch gekennzeichnet, daß die Versorgung des oder der aktiven Behälter während des Schaltens erfolgt :

— zuerst über eine Versorgungsleitung, die eine Engstelle mit großem Durchlaßquerschnitt zum schnellen Füllen aufweist,

— danach über eine Versorgungsleitung, die mit einer Engstelle mit geringem Durchlaßquerschnitt versehen ist, um eine Progressivität zu ermöglichen, d. h. eine Modulation des übertragenen Momentes und

— schließlich eine Versorgungsleitung, die mit einer Engstelle mit großem Durchlaßquerschnitt versehen ist, um ein Verriegeln zu gewährleisten.

9. Steuervorrichtung nach Anspruch 8, dadurch gekennzeichnet, daß die Versorgungsleitung mit großem Durchlaßquerschnitt aus einer Versorgungsleitung besteht, die mit einer Düse mit großem Durchlaßquerschnitt versehen ist, wobei zusätzlich eine Versorgungsleitung vorgesehen ist mit einer Düse mit geringem Druchlaßquerschnitt, die parallel dazu angeordnet ist ; dies ermöglicht den Übergang von großen Querschnitt zum kleinen Querschnitt und umgekehrt durch Abschalten oder Zuschalten der Leitung, die mit der Düse mit großem Durchlaßquerschnitt versehen ist.

10. Steuervorrichtung nach einem der Ansprüche 1 bis 9, dadurch gekennzeichnet, daß wenigstens einer der hydraulischen Behälter mit einem Speicher (121, 122) versehen ist.

11. Steuervorrichtung nach Anspruch 10, dadurch gekennzeichnet, daß die Versorgungsleitung für die Kupplung ($E_3$) mit einem Speicher versehen ist, der aus einem Kolben (121) und einer Feder (123) besteht.

12. Steuervorrichtung nach Anspruch 10, dadurch gekennzeichnet, daß die Versorgungsleitung für die Bremse ($F_2$) mit einem Speicher versehen ist, der aus einem Kolben (122) und einer Feder (124) besteht.

13. Steuervorrichtung nach Anspruch 6, dadurch gekennzeichnet, daß sie hydraulische Potentiometer (103, 104) aufweist, die aus Düsen (97 und 98 bzw. 99 und 101) bestehen.

14. Steuervorrichtung nach Anspruch 13, dadurch gekennzeichnet, daß die Kanäle, in denen die Düsen (97, 98 und 99, 101) angeordnet sind, mit dem Folgeventil (VA) derart verbunden sind, daß die hydraulischen Potentiometer nur zum Schalten in den dritten Gang und in den vierten Gang aktiviert sind sowie für die permanenten Schaltzustände im dritten und im vierten Gang.

15. Steuervorrichtung nach einem der vorhergehenden Ansprüche, dadurch gekennzeichnet, daß sie ein Druckregelventil (VRP) aufweist, das dem hydraulischen Fluid, das die Steuervorrichtung versorgt, beaufschlag mit :

— einem ersten Leitungs-Druckbereich (PL) für den Rückwärtsgang und die Neutral- und Parkstellung, der durch die beiden geeichten in Serie geschalteten Düsen (30 und 31) definiert ist und

— einen zweiten Leitungs-Druckbereich (PL) für die Vortwärtsgänge,

wobei die Variation des Leitungsdrucks von einem Modulationselektroventil (EVM) gewährleistet wird, das einen Modulationsdruck (PM) aufbaut, der auf den differentiellen Querschnitt (S) des Druckregelventils (VRP) wirkt.

16. Steuervorrichtung nach Anspruch 15, dadurch gekennzeichnet, daß die Höhe des zweiten Leitungs-Druckbereichs für die Vorwärtsgänge gewährleistet wird durch die Wirkung des Leitungsdrucks auf einen kleinen Querschnitt (s) des Druckregelventils (VRP), wobei die Düse (53) verschlossen und die Düse (34) offen ist.

17. Steuervorrichtung nach Anspruch 15, dadurch gekennzeichnet, daß die Höhe des zweiten Leitungs-Druckbereiches für die Vorwärtsgänge gewährleistet wird durch die Wirkung des Leitungsdrucks auf einen großen Querschnitt (S) des Druckregelventils (VRP), wobei die Düse (53) offen und die Düse (34) verschlossen ist.

18. Steuervorrichtung nach einem der vorhergehenden Ansprüche, dadurch gekennzeichnet, daß sie ein Druckregelventil (VLP3) aufweist, das einen Referenzdruck ($P_1$) des hydraulischen Fluids gewährleistet, welches das Modulationselektroventil (EVM) versorgt und das auf eines der Enden des Progressivitätsventils (VP) und der Folgeventile (VA, VB, VC) wirkt.

19. Steuervorrichtung nach Anspruch 18, dadurch gekennzeichnet, daß sie in Serie geschaltete Düsen (66 und 65) aufweist, die, ausgehend von Referenzdruck ($P_1$), einen Zwischenreferenzdruck ($P_2$)

des hydraulischen Fluids erzeugen, der auf eines der Enden des Progressivitätsventils (VP) und der Folgeventile (VA, VB, VC) wirkt.

20. Steuervorrichtung nach Anspruch 18, dadurch gekennzeichnet, daß das Druckregelventil (VLP3) einen zusätzlichen Regelschieber (67) aufweist mit einer Rückholfeder (68), der, ausgehend vom Referenzdruck ($P_1$), einen Zwischenreferenzdruck ($P_2$) des hydraulischen Fluids erzeugt, der auf eines der Enden des Progressivitätsventiles (VP) und der Folgeventile (VA, VB,VC) wirkt.

21. Steuervorrichtung nach einem der vorhergehenden Ansprüche, dadurch gekennzeichnet, daß sie ein Druckregelventil (VLP5) aufweist, das den Austauscher (47) mit hydraulischem Fluid versorgt sowie den hydraulischen Kreis, den hydrodynamischen Drehmomentenwandler (1) des Getriebes und den Schmierkreis (49) der Übertragung.

22. Steuervorrichtung nach Ansprüchen 15 und 21, dadurch gekennzeichnet, daß die Versorgung des Druckregelventils (VLP5) über das Druckregelventil (VRP) erfolgt und daß das Druckregelventil (VRP) eine Anordnung (50) aufweist, die die Versorgung des Druckregelventils (VLP5) unterbricht im Falle eines plötzlichen Abfalls des Leitungsdrucks (PL) infolge eines erheblichen Leistungsverlustes.

23. Steuervorrichtung nach einem der Ansprüche 15, 16 und 17, dadurch gekennzeichnet, daß die Versorgung der Steuerleitung (40) der Pumpe mit variabler Leistung (20) über das Druckregelventil (VRP) erfolgt und daß das Druckregelventil (VRP) eine Anordnung (39) aufweist, die die Leitung (40) entweder mit der Leitung (55) mit dem Leitungsdruck (PL) verbindet oder mit dem Druck O, um so die Steuerung des Leitungsdrucks (PL) zu gewährleisten.

24. Steuervorrichtung nach einem der Ansprüche 19 und 20, dadurch gekennzeichnet, daß das Druckregelventil (VRP) mit einer Kammer (2VRP) versehen ist, in welche eine Abzweigleitung (64) der Leitung (63) mündet, in welcher der Zwischen-Referenzdruck ($P_2$) herrscht.

25. Steuervorrichtung nach Anspruch 15, dadurch gekennzeichnet, daß das Modulations-Elektroventil (EVM) senkrecht im Gehäuse (9) oberhalb des Verteilbleches (52) angeordnet ist, wobei dieses Ventil (EVM) seine Ablaßöffnung am oberen Punkt seines hydraulischen Versorgungskreises aufweist.

26. Steuervorrichtung nach Ansprüchen 4 bis 18 in ihrer Gesamtheit und nach einem der Ansprüche 19 und 20, dadurch gekennzeichnet, daß die verschiedenen Vorrichtungsteile derart ausgestaltet sind, daß, wenn die drei Elektroventile (EV1, EV2, EV3), die die entsprechenden Folgeventile (VA, VB, VC) ansteuern, offen sind und das manuelle Ventil (VM) in der Rückwärtsgangstellung ist, das hydraulische Fluid mit dem Leitungsdruck (PL) der vom Druckregelventil (VRP) erzeugt wird, die Kupplung ($E_2$) und die Bremse ($F_1$) versorgt, die erforderlich sind für die Rückwärtsgangübersetzung.

27. Steuervorrichtung nach Ansprüchen 4 bis 18 in ihrer Gesamtheit und einem der Ansprüche 19 und 20, dadurch gekennzeichnet, daß die verschiedenen Vorrichtungsteile derart ausgestaltet sind, daß wenn die drei Elektroventile (EV1, EV2, EV3), die die entsprechenden Folgeventile (VA, VB, VC) ansteuern, offen sind und das manuelle Ventil (VM) in der Neutral- oder Parkstellung ist, das hydraulische Fluid mit dem Leitungsdruck (PL) der vom Druckregelventil (VRP) erzeugt wird, keinen der Behälter versorgt.

28. Steuervorrichtung nach Ansprüchen 4 bis 18 in ihrer Gesamtheit und einem der Ansprüche 19 und 20, dadurch gekennzeichnet, daß die verschiedenen Vorrichtungsteile derart ausgestaltet sind, daß, wenn die drei Elektroventile (EV1, EV2, EV3), die die entsprechenden Folgeventile (VA,VB, VC) ansteuern, offen sind und das manuelle Ventil (VM) in der Vorwärtsgangstellung ist, das hydraulische Fluid mit dem Leitungsdruck (PL), der durch das Druckregelventil (VRP) erzeugt wird, die Kupplungen ($E_1$ und $E_2$) beaufschlagt, die für den dritten hydraulischen Vorwärtsgang erforderlich sind.

29. Steuervorrichtung nach Ansprüchen 4 bis 18 in ihrer Gesamtheit und einem der Ansprüche 19 und 20, dadurch gekennzeichnet, daß die verschiedenen Vorrichtungsteile derart ausgestaltet sind, daß, wenn die beiden Elektroventile (EV1 und EV3), die die entsprechenden Folgeventile (VA und VC) ansteuern, offen sind und das Elektroventil (EV2), das das Folgeventil (VB) steuert, geschlossen ist, während das manuelle Ventil (VM) in Vorwärtsgangstellung ist, das hydraulische Fluid mit dem Leitungsdruck (PL), der vom Druckregelventil (VRP) erzeugt wird, die Kupplung ($E_1$) versorgt, die für den ersten hydraulischen Vorwärtsgang erforderlich ist.

30. Steuervorrichtung nach Ansprüchen 4 bis 18 in ihrer Gesamtheit und einem der Ansprüche 19 und 20, dadurch gekennzeichnet, daß die verschiedenen Vorrichtungsteile derart ausgestaltet sind, daß, wenn das Elektroventil (EV1), das das Folgeventil (VA) steuert, offen ist und die Elektroventile (EV2 und EV3), die die entsprechenden Folgeventile (EV2 und EV3), die die entsprechenden Folgeventile (VB und VC) steuern, geschlossen sind, während das manuelle Ventil (VM) in Vorwärtsgangstellung ist, das hydraulische Fluid mit dem Leitungsdruck (PL), der vom Druckregelventil (VRP) erzeugt wird, die Kupplung ($E_1$) und die Bremse ($F_1$) versorgt, die für den ersten hydraulischen Vorwärtsgang mit Motorbremse erforderlich sind.

31. Steuervorrichtung nach Ansprüchen 4 bis 18 in ihrer Gesamtheit und einem der Ansprüche 19 und 20, dadurch gekennzeichnet, daß die verschiedenen Vorrichtungsteile derart ausgestaltet sind, daß, wenn die Elektroventile (EV1 und EV2), die die entsprechenden Folgeventile (VA und VB) ansteuern, offen sind und das Elektroventil (EV3), das das Folgeventil (VC) ansteuert, geschlossen ist, während das manuelle Ventil (VM) in Vorwärtsgangstellung ist, das hydraulische Fluid mit dem Leitungsdruck (PL), der vom Druckregelventil (VRP) erzeugt wird, die Kupplung ($E_1$) und die Bremse ($F_2$) versorgt, die für den zweiten hydraulischen Vorwärtsgang erforderlich sind.

23

32. Steuervorrichtung nach Ansprüchen 4 bis 18 in ihrer Gesamtheit und einem der Ansprüche 19 und 20, dadurch gekennzeichnet, daß die verschiedenen Vorrichtungteile derart ausgestaltet sind, daß, wenn die Elektroventile (EV1 und EV3), die die entsprechenden Folgeventile (VA und VC) ansteuern, geschlossen sind und das Elektroventil (EV2), das das Folgeventil (VB) ansteuert, offen ist, während das manuelle Ventil (VM) in Vorwärtsgangstellung ist, das hydraulische Fluid mit dem Leitungsdruck (PL), der vom Druckregelventil (VRP) erzeugt wird, die Kupplung ($E_1$) und die Kupplung ($E_3$) versorgt, die für den dritten Vorwärtsgang bei der ersten Ausgestaltung der Leistungsteilung erforderlich sind.

33. Steuervorrichtung nach Ansprüchen 4 bis 18 in ihrer Gesamtheit und einem der Ansprüche 19 und 20, dadurch gekennzeichnet, daß die verschiedenen Vorrichtungteile derart ausgestaltet sind, daß, wenn das Elektroventil (EV1), das das Folgeventil (VA) ansteuert, geschlossen ist und die Elektroventile (EV2 und EV3), die die entsprechenden Folgeventile (VB und VC) ansteuern, offen sind, während das manuelle Ventil (VM) in Vorwärtsgangstellung ist, das hydraulische Fluid mit dem Leitungsdruck (PL), der durch das Druckregelventil (VRP) erzeugt wird, die Kupplungen ($E_1$, $E_2$ und $E_3$) versorgt, die für den dritten mechanischen Vorwärtsgang erforderlich sind.

34. Steuervorrichtung nach Ansprüchen 4 bis 18 in ihrer Gesamtheit und einem der Ansprüche 19 und 20, dadurch gekennzeichnet, daß die verschiedenen Vorrichtungteile derart ausgestaltet sind, daß, wenn die Elektroventile (EV1 und EV2), die die entsprechenden Folgeventile (VA und VB) ansteuern, geschlossen sind und das Elektroventil (EV3), das das Folgeventil (VC) ansteuert, offen ist, während das manuelle Ventil (VM) in Vorwärtsgangstellung ist, das hydraulische Fluid mit dem Leitungsdruck (PL), der durch das Druckregelventil (VRP) erzeugt wird, die Kupplungen ($E_1$ und $E_3$) versorgt, die für den dritten Vorwärtsgang bei zweiter Ausgestaltung mit Leistungsteilung erforderlich sind.

35. Steuervorrichtung nach Ansprüchen 4 bis 18 in ihrer Gesamtheit und einem der Ansprüche 19 und 20, dadurch gekennzeichnet, daß die verschiedenen Vorrichtungteile derart ausgestaltet sind, daß, wenn die Elektroventile (EV1, EV2 und EV3), die die entsprechenden Folgeventile (VA, VB, VC) ansteuern, geschlossen sind, während das manuelle Ventil (VM) in Vorwärtsgangstellung ist, das hydraulische Fluid mit dem Leitungsdruck (PL), der durch das Druckregelventil (VRP) erzeugt wird, die Kupplung ($E_1$) und die Bremse ($F_2$) versorgt, die für den vierten mechanischen Vorwärtsgang erforderlich sind.

36. Steuervorrichtung nach Ansprüchen 4 bis 18 in ihrer Gesamtheit und einem der Ansprüche 19 und 20, dadurch gekennzeichnet, daß die verschiedenen Vorrichtungteile derart ausgestaltet sind, daß zum Umschalten in Rückwärtsgangstellung des manuellen Ventils (VM), wobei sich das Fahrzeug mit beachtlicher Geschwindigkeit vorwärts bewegt, die Elektroventile (EV1 und EV2), die die entsprechenden Folgeventile (VA und VB) ansteuern, offen sind und das Elektroventil (EV3), das das Folgeventil (VC) steuert, geschlossen ist, damit das hydraulische Fluid mit dem Leitungsdruck (PL), der durch das Druckregelventil (VRP) erzeugt wird, nicht mehr die Bremse ($F_2$) versorgt, wodurch das Getriebe entkuppelt wird.

37. Steuervorrichtung nach Ansprüchen 4 bis 18 in ihrer Gesamtheit und einem der Ansprüche 19 und 20, dadurch gekennzeichnet, daß sie ein Entkupplungs-Elektro-Halteventil (EVDA) aufweist, das in einer Abzweigung der Versorgung zur Kupplung ($E_1$) geschaltet ist.

38. Steuervorrichtung nach Anspruch 37, dadurch gekennzeichnet, daß das Schalten vom vierten mechanischen Vorwärtsgang zur zweiten hydraulischen Übersetzung mittels des Entkupplungs-Elektro-Halteventils (EVDA) erfolgt, welches eine Druckmodulation für die Versorgung der Kupplung ($E_1$) bewirkt.

39. Verfahren zur Steuerung eines automatischen Vierganggetriebes mittels Drehmomentschaltung, das ein Getriebe aufweist, welches in der Lage ist:

— eine mechanische Übersetzung für den dritten Vorwärtsgang zu bilden, wenn die Kupplungen ($E_1$, $E_2$ und $E_3$) versorgt werden,

— eine hydraulische Übersetzung für den zweiten Vorwärtsgang zu bilden, wenn die Kupplung ($E_1$) und die Bremse ($F_2$) versorgt werden,

— eine mechanische Übersetzung für den vierten Vorwärtsgang zu bilden, wenn die Kupplung ($E_3$) und die Bremse ($F_2$) versorgt werden,

dadurch gekennzeichnet, daß der Übergang zur mechanischen Übersetzung des dritten Gangs entweder von der hydraulischen Übersetzung des zweiten Gangs oder der mechanischen Übersetzung des vierten Ganges in zwei Stufen erfolgt:

— erste Stufe: Übergang zu einer dritten Übersetzung mit Leistungsteilung, in der die Kupplungen ($E_1$ und $E_3$) versorgt sind und

— zweite Stufe: Verriegelung des Umlaufgetriebes mittels Überbrückung durch die Kupplung ($E_2$). —

24

## FIG.1

## FIG.2

# FIG. 3

| POSITION | | | Rapport | E1 | E2 | E3 | F1 | F2 | RL |
|---|---|---|---|---|---|---|---|---|---|
| P | | | N | | | | | | |
| R | | | R | | X | | X | | |
| R | | | S | | | | | X | |
| N | | | N | | | | | | |
| A | 2 | | 1H | X | | | | | X |
| A | 2 | | 2H | X | | | | X | |
| A | 3 | | 3H | X | X | | | | |
| A | 3 | | 3DP | X | | X | | | |
| A | 3 | | 3M | X | X | X | | | |
| A | 3 | | 4M | | | X | | X | |
| A | 1 | | 1HFM | X | | | X | | X |

## FIG. 3A

| | EV1 VA | EV2 VB | EV3 VC | EV4 VP | Evda | EVM | Vc$_3^2$ | Vc$_4^3$ | E1 | E2 | E3 | F1 | F2 | RL | ETATS |
|---|---|---|---|---|---|---|---|---|---|---|---|---|---|---|---|
| P | 0 | 0 | 0 | 0 | 0 | m | 0 | 0 | 0 | 0 | 0 | 0 | 0 | 0 | 1 |
| | 0 | 0 | 0 | 1 | 0 | m | 0 | 0 | 0 | pt | 0 | GT | 0 | 0 | 2 |
| R | 0 | 0 | 0 | 0 | 0 | m | 0 | 0 | 0 | GT | 0 | GT | 0 | 0 | 3 |
| N | 0 | 0 | 0 | 0 | 0 | m | 0 | 0 | 0 | 0 | 0 | 0 | 0 | 0 | 4 |
| 3H | 0 | 0 | 0 | 0 | 0 | m | 0 | 0 | GT | GT | 0 | 0 | 0 | 0 | 5 |
| | 0 | 0 | 0 | 1 | 0 | m | 0 | 0 | pt | pt | 0 | 0 | 0 | 0 | 6 |
| DA | 0 | 0 | 0 | 1 | m | 0 | 0 | 0 | $^m$pt | pt | 0 | 0 | 0 | 0 | 7 |
| 1H | 0 | 1 | 0 | 0 | 0 | m | 0 | 0 | GT | 0 | 0 | 0 | 0 | 1 | 8 |
| | 0 | 1 | 0 | 1 | 0 | m | 0 | 0 | pt | 0 | 0 | 0 | 0 | 1 | 9 |
| 1HFM | 0 | 1 | 1 | 0 | 0 | m | 0 | 0 | GT | 0 | 0 | GT | 0 | ✕ | 10 |
| | 0 | 1 | 1 | 1 | 0 | m | 0 | 0 | GT | 0 | 0 | pt | 0 | ✕ | 11 |
| 2H | 0 | 0 | 1 | 0 | 0 | m | 0 | 0 | GT | 0 | 0 | 0 | GT | 0 | 12 |
| | 0 | 0 | 1 | 1 | 0 | m | 0 | 0 | GT | 0 | 0 | 0 | pt | 0 | 13 |
| | 0 | 0 | 1 | 0 | 1 | m | 0 | 0 | GT | 0 | 0 | 0 | GT | 0 | 14 |
| | 1 | 0 | 1 | 1 | 0 | m | 0 | 0 | GT | 0 | GT | 0 | pt | 0 | 15 |
| | 1 | 0 | 1 | 1 | 0 | m | 1 | 0 | GT | 0 | pt | 0 | 0 | 0 | 16 |
| 3M | 1 | 0 | 0 | 0 | 0 | m | 1 | 0 | GT | GT | GT | 0 | 0 | 0 | 17 |
| | 1 | 0 | 0 | 1 | 0 | m | 1 | 0 | pt | pt | GT | 0 | 0 | 0 | 18 |
| | 1 | 1 | 0 | 0 | 0 | m | 1 | 0 | GT | 0 | GT | 0 | 0 | 0 | 19 |
| | 1 | 1 | 0 | 1 | 0 | m | 1 | 0 | pt | 0 | GT | 0 | 0 | 0 | 20 |
| | 1 | 1 | 1 | 1 | 0 | m | 1 | 0 | GT | 0 | GT | 0 | GT | 0 | 21 |
| | 1 | 1 | 1 | 1 | 0 | m | 1 | 1 | 0 | 0 | GT | 0 | pt | 0 | 22 |
| 4M | 1 | 1 | 1 | 0 | 0 | m | 1 | 1 | 0 | 0 | GT | 0 | GT | 0 | 23 |

**FIG. 4**

**FIG.5**

EP 0 179 683 B1

**FIG.5A**

**FIG.6**

7

**FIG. 7**

**FIG.8**

FIG. 9

EP 0 179 683 B1

FIG.10

**FIG. 11**

**FIG.12**

EP 0 179 683 B1

FIG. 13

EP 0 179 683 B1

FIG.14

FIG.15

FIG. 16

EP 0 179 683 B1

FIG.17

FIG.18

**FIG.19**

**FIG.20**

**FIG.21**

**FIG.22**

EP 0 179 683 B1

**FIG.23**

FIG.24

EP 0 179 683 B1

**FIG.25**

EP 0 179 683 B1

**FIG.26**

EP 0 179 683 B1

# FIG. 4A

FIG.27

FIG.28

FIG.29

FIG.30

## FIG.31

VC 2/3          VC 2/3

## FIG.32

VC3/4

VC3/4

## FIG.33

R

N-P

A 321

VM          VM          VM

FIG.34

FIG.36

FIG.35

FIG.5B